# EUROPÄISCHE PATENTSCHRIFT

(11) **EP 3 222 436 B1**
(45) Veröffentlichungstag und Bekanntmachung des Hinweises auf die Patenterteilung: **15.09.2021**
(21) Anmeldenummer: 17000364.4
(22) Anmeldetag: 05.05.2011
(51) Int. Cl.: B42D 25/324, B42D 25/328, B42D 25/342, B42D 25/47

(54) **SICHERHEITSELEMENT MIT EINER MIKROSTRUKTUR AUF EINER KLEBSTOFFSCHICHT**
SECURITY ELEMENT WITH A MICROSTRUCTURE ON A GLUE LAYER
ELEMENT DE SECURITE AVEC UNE MICROSTRUCTURE SUR UNE COUCHE DE COLLE

(30) Priorität: 07.05.2010 DE 102010019766
(43) Veröffentlichungstag der Anmeldung: 27.09.2017
(62) Teilanmeldung aus: 11719473.8
(73) Patentinhaber: Giesecke+Devrient Currency Technology GmbH, 81677 München (DE)
(72) Erfinder: Hoffmüller, Winfried, 83646 Bad Tölz (DE); Burchard, Theodor, 83052 Bruckmühl (DE); Rahm, Michael, 83646 Bad Tölz (DE); Schinabeck, Josef, 82467 Garmisch-Partenkirchen (DE); Heim, Manfred, 83646 Bad Tölz (DE); Rauch, Andreas, 82441 Ohlstadt (DE); Fuhse, Christian, 83624 Otterfing (DE)

(56) Entgegenhaltungen:
- WO-A2-2009/083146
- DE-A1-102008 036 481

## Beschreibung

Gegenstand der vorliegenden Offenbarung ist ein Verfahren zur Erzeugung einer Mikrostruktur auf einem Träger, die Verwendung eines nach dem Verfahren erhältlichen Mikrostrukturträgers als Bestandteil eines Sicherheitselements, wobei der Mikrostrukturträger alleine oder als Teil einer mikrooptischen Darstellungsanordnung verwendet werden kann, und wobei der Mikrostrukturträger das Mikromotiv oder die Mikromotiv-Betrachtungseinrichtung bereitstellen kann. Gegenstand der vorliegenden Erfindung ist ein Sicherheitselement mit mindestens einem nach dem obigen Verfahren erhältlichen Mikrostrukturträger, wobei der Mikrostrukturträger bevorzugt Teil einer mikroptischen Darstellungsanordnung ist, sowie ein Produkt wie ein Datenträger oder Markenartikel, das mit dem erfindungsgemäßen Sicherheitselement ausgestattet ist.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

Eine besondere Rolle spielen dabei Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Seit einiger Zeit werden auch so genannte Moire-Vergrößerungsanordnungen als Sicherheitsmerkmale eingesetzt. Die prinzipielle Funktionsweise derartiger Moiré-Vergrößerungsanordnungen ist in dem Artikel "The moire magnifier", M.C. Hutley, R. Hunt, R.F. Stevens und P. Savander, Pure Appl. Opt. 3 (1994), pp. 133-142, beschrieben. Kurz gesagt, bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das aus einer periodischen Anordnung vergrößerter und gegebenenfalls gedrehter Bilder der Elemente des Bildrasters besteht.

Die Gitterperiode und der Durchmesser der Bildobjekte liegen dabei in derselben Größenordnung wie die der Mikrolinsen des Linsenrasters. Mit bloßem Auge sollten die Bildobjekte nicht erkennbar sein. Je kleiner die Strukturen ausgebildet werden, desto größer ist die Fälschungssicherheit.

Bedingt durch die geringe Größe der Strukturen sind alle Verfahren zur Erzeugung der Bildobjekte (Mikromotivelemente), bei denen Auftragungsverfahren wie Druckverfahren eine maßgebliche Rolle für die erzielbaren Abmessungen spielen, wenig geeignet. Die erzielbare Minimalgröße der Mikromotivelemente ist begrenzt durch das Auflösungsvermögen des Auftragungsverfahrens. Dies gilt gleichermaßen für Verfahren, bei denen die Mikrostrukturen durch unmittelbares Aufdrucken erzeugt werden, als auch für alle Verfahren, bei denen die Herstellung der Mikrostrukturen irgendeinen Verfahrensschritt mit begrenztem Auflösungsvermögen beinhaltet, beispielsweise das Auftragen eines Photoresists. Bei unmittelbar aufgedruckten Mikrostrukturen ist außerdem wegen der hohen lateralen Auflösung die maximal erreichbare Farbschichtdicke begrenzt, wodurch der maximal erzielbare Kontrast begrenzt ist.

Mikrostrukturen bzw. Mikromotivelemente werden daher bevorzugt unter Verwendung von Prägestrukturen hergestellt. Prägungen können in sehr hoher Auflösung erzeugt werden.

Aus der WO 2009/121578 ist ein Verfahren zum Erzeugen einer mikrooptischen Darstellungsanordnung bekannt, bei dem in einem Träger eine Prägestruktur erzeugt und die Prägevertiefungen mit Farbe gefüllt werden. Die Farbe in den Vertiefungen bildet die Mikromotivelemente, während der Überschuss an Farbe abgerakelt wird. Bei diesem Verfahren bleibt jedoch ein Tonungsfilm zurück, der den maximal erreichbaren Kontrast begrenzt.

Aus der WO 2009/083146 ist ein Verfahren zur Erzeugung einer Mikrostruktur bekannt, bei dem eine Prägestruktur erzeugt wird, und entweder nur die Erhebungen oder nur die Vertiefungen der Prägestruktur mit einem Aufdruckstoff bedeckt bzw. mit einem Aufdruckstoff gefüllt werden. Der Aufdruckstoff muss entsprechend hochviskos gewählt werden, um nur auf den Erhebungen der Prägestruktur zu haften, oder entsprechend niedrigviskos gewählt werden, um nur die Vertiefungen der Prägestruktur zu füllen. Um die gewünschte selektive Auftragung zu erzielen, müssen die Viskosität des Aufdruckstoffs und die Übertragungsbedingungen genau aufeinander abgestimmt werden.

Der Stand der Technik ermöglicht es bisher nicht, Mikrostrukturen für mikrooptische Darstellungsanordnungen auf einfache Weise und in der gewünschten Qualität zu erzeugen. Eine zusätzliche Problematik, die insbesondere bei metallisierten Mikrostrukturen auftritt, ist, dass für viele Metalle keine einfachen und befriedigenden Verfahren zur "Grobstrukturierung" existieren, d.h. Strukturierungen wie beispielsweise Mehrfarbigkeit oder Negativschriften sind nicht oder nur schwer zu verwirklichen.

Davon ausgehend liegt der vorliegenden Erfindung die Aufgabe zugrunde, die Nachteile des Stands der Technik zu vermeiden, und insbesondere ein vorteilhaftes Verfahren zur Herstellung einer Mikrostruktur bereitzustellen, die die Anforderungen an ein Motiv für mikrooptische Darstellungsanordnungen, insbesondere für mikrooptische Vergrößerungsanordnungen, erfüllt. Diese Anforderungen sind eine hohe Auflösung des Mikromotivs, d.h. geringe Abmessungen der Mikromotivelemente, Kontrastreichtum und Konturenschärfe im mikroskopischen Bereich, sowie die Möglichkeit einer makroskopischen Strukturierung, möglichst unabhängig vom Material der Mikromotivelemente.

Die Aufgabe wird gelöst durch das Sicherheitselement mit den Merkmalen, wie sie im unabhängigen Anspruch 1 angegeben sind. Weiterbildungen der Erfindung sind Gegenstand der abhängigen Ansprüche.

Die Erfindung basiert auf der Entdeckung, dass es möglich ist, Prägestrukturen vollflächig zu beschichten, d.h. sowohl die Erhebungen als auch die Vertiefungen einer Prägestruktur als auch die Bereiche zwischen Erhebungen und Vertiefungen zu beschichten, die beschichtete Prägestruktur dann mit einem Trägermaterial, das mit einer Klebstoffschicht ausgestattet ist, unter Druck zu verkleben, die Prägestruktur wieder von dem klebstoffbeschichteten Träger zu trennen, und dabei ausschließlich die Beschichtung von den Erhebungen der Prägestruktur auf den klebstoffbeschichteten Träger zu übertragen. Überraschenderweise bricht die Beschichtung dabei präzise und kantenscharf, so dass kontrastreiche Mikrostrukturen mit geringen Abmessungen und hoher Präzision, die sich hervorragend für mikrooptische Betrachtungsanordnungen eignen, erhalten werden können.

Ein besonderer Vorteil des Verfahrens liegt in den vielen Freiheitsgraden und Variationsmöglichkeiten, die es bietet. Ein derartiger Vorteil ist die Möglichkeit der Überlagerung mikroskopischer und makroskopischer Strukturen, auch bei Verwendung von Beschichtungen, die nicht ohne weiteres makroskopisch strukturiert werden können. Diese Kombination von makroskopischer und mikroskopischer Strukturierung wird durch das Zusammenwirken eines mikroskopisch strukturierten Mikrostrukturträgers und eines makroskopisch strukturierten Motivträgers erreicht. Bei der Übertragung der Mikrostruktur auf den makroskopisch strukturierten Motivträger entstehen auf den beiden Trägern komplementäre Mikrostrukturen. Ein anderer Vorteil des Verfahrens liegt darin, dass die Mikrostruktur noch weiter strukturiert werden kann, beispielsweise durch Beugungsstrukturen oder andere Nanostrukturierungen. Ein weiterer Vorteil liegt darin, dass die Abmessungen der zu übertragenden Bereiche der Beschichtung problemlos so gewählt werden können, dass jedes der beiden Ausgangsmaterialien (Donorfolie und Akzeptorfolie) als Mikrostrukturträger in Frage kommt. Darüber hinaus kann jedes der beiden Ausgangsmaterialien, das (sofern ein transparentes Trägermaterial verwendet wird) nach der Übertragung jeweils transparente Stellen aufweist, auch anstelle einer Linsenanordnung als mikrooptische Betrachtungseinrichtung dienen.

Spezielle Ausführungsformen der Erfindung weisen noch weitere Vorteile auf:
So können die Mikrostrukturen eines Mikrostrukturträgers zur Strukturierung einer weiteren, bevorzugt farbigen, Schicht verwendet werden. Dazu wird ein Mikrostrukturträger mit einer photoaktiven Schicht, d.h. einer Schicht aus einem durch Bestrahlung veränderbaren Material wie einem Photoresist, ausgestattet und durch die (ursprünglichen) Mikrostrukturen hindurch bestrahlt, d.h. die (ursprünglichen) Mikrostrukturen werden als Bestrahlungsmaske verwendet. Nach dem Bestrahlen, Ablösen der löslichen Bereiche der photoaktiven Schicht, und gegebenenfalls Ablösen der ursprünglichen Mikrostrukturen, wird ein Mikrostrukturträger erhalten, der Mikrostrukturen aus photoaktivem Material neben den ursprünglichen Mikrostrukturen, oder ausschließlich Mikrostrukturen aus photoaktivem Material, oder kombinierte Mikrostrukturen aus deckungsgleichen ursprünglichen Mikrostrukturen und Mikrostrukturen aus photoaktivem Material aufweist.

Die Mikrostrukturträger werden bevorzugt mit mikrooptischen Betrachtungseinrichtungen, insbesondere mit Mikrofokussierelement-Anordnungen, wie Mikrolinsen-Anordnungen oder Mikrohohlspiegel-Anordnungen zu mikrooptischen Darstellungsanordnungen kombiniert. Derartige mikrooptische Darstellungsanordnungen sind besonders auffällig und einprägsam, wenn sie eine Kombination von mindestens zwei Darstellungsanordnungen aufweisen, die sich bei Betrachtung aus verschiedenen Blickwinkeln unterschiedlich verhalten. Derartige Kombinationen sind beispielsweise eine erste Darstellungsanordnung, die als ein erstes Motiv oder einen ersten Motivteil betrachtungswinkelabhängig mindestens zwei verschiedene Bilder darbietet, wobei sich für einen Betrachter eine stereographische Darstellung eines Objekts mit einer absoluten Tiefeninformation ergibt, in Kombination mit einer zweiten Darstellungsanordnung, die als ein zweites Motiv oder einen zweiten Motivteil eine reflektive Oberfläche darbietet, wobei sich für den Betrachter eine Darstellung mit gerichteter Reflexion ergibt. Kombinations-Darstellungsanordnungen dieser Art und die damit erzielbaren Effekte sind detailliert beschrieben in den Anmeldungen PCT/EP 2010/007368 und PCT/EP 2010/007369, und werden nachfolgend insbesondere anhand der Figuren 17 bis 27 näher beschrieben. Die Motive bzw. Motivteile der mikrooptischen Kombinations-Darstellungsanordnungen lassen sich mittels des Verfahrens in einfacher Weise gleichzeitig erzeugen.

Mikrostrukturen für mikrooptische Darstellungsanordnungen, die stereographische Darstellungen mit einer absoluten Tiefeninformation liefern, wie Moiré-Vergrößerungsanordnungen, Vergrößerungsanordnungen vom Moirétyp und Modulo-Vergrößerungsanordnungen, werden häufig durch Prägen in einen Träger und Füllen der Prägevertiefungen mit Farbe hergestellt. Der Überschuss an Farbe wird abgerakelt, hinterlässt jedoch einen Tonungsfilm (WO 2009/121578). Dadurch wird einerseits der maximal erzielbare Kontrast begrenzt und andererseits kann, vermutlich aufgrund der Resttonung, der Hintergrund nicht gut mit einer gewünschten (anderen) Farbe eingefärbt werden.

Mit Hilfe des Verfahrens kann der Hintergrund problemlos in einer bestimmten Farbe oder in mehreren Farben eingefärbt werden. Die Färbung steigert nicht nur die Attraktivität der Darstellung, sondern führt auch zu einer Kontrastverstärkung, ganz besonders bei metallischen Mikrostrukturen. Wird der Hintergrund mehrfarbig gestaltet, entstehen zwangsläufig statische Elemente, im Vergleich zu denen sich die Moirevergrößerten oder Modulo-vergrößerten Elemente beim Kippen der mikrooptischen Darstellungsanordnung bewegen.

Der Kontrast zwischen farbigem Hintergrund und Mikrostrukturen bzw. Mikromotivelementen kann noch weiter gesteigert werden, wenn die Farbe des Hintergrundes mit einer reflektierenden Schicht hinterlegt wird. Dadurch wird die Leuchtkraft der Farbe deutlich gesteigert, wobei der Effekt insbesondere bei nicht gut deckenden Farben besonders vorteilhaft ist. Wird die reflektierende Schicht nur bereichsweise aufgebracht, so entsteht bei Verwendung eines transparenten Trägermaterials ein in Aufsicht geringer und in Durchsicht starker Kontrast zwischen Bereichen mit einer reflektierenden Schicht und Bereichen ohne reflektierende Schicht. In Durchsicht können die Bereiche ohne reflektierende Schicht transparent erscheinen.

Wie die reflektierende Schicht, so kann auch die Hintergrundfarbe vollflächig oder nur bereichsweise aufgetragen werden. Fehlt in bestimmten Bereichen die Hintergrundfarbe, ist eine dort aufgebrachte reflektierende Beschichtung direkt sichtbar.

Bei dem Verfahren zur Erzeugung einer Mikrostruktur auf einem Träger wird zunächst eine Beschichtungs-Donorfolie hergestellt, indem ein erstes Folienmaterial mit einer Prägestruktur in Gestalt der Mikrostrukturanordnung ausgestattet, und auf die Prägestruktur eine Beschichtung aufgebracht wird. Die Beschichtung kann auf die gesamte Prägestruktur aufgebracht werden oder nur auf einen bestimmten Teilbereich davon. In jedem Fall liegt die Beschichtung aber in dem betreffenden Bereich/ Teilbereich vollflächig vor, d.h. die Gestalt der Beschichtung bildet die Prägestruktur nach. Das heißt nicht, dass auf Erhebungen, Vertiefungen und Flanken der Erhebungen jeweils dieselbe Menge an Beschichtungsmaterial vorliegen muss. Typischerweise ist die Dicke der Beschichtung auf den Erhebungen und in den Vertiefungen der Prägestruktur wesentlich größer als an den Flanken der Erhebungen, auf denen sich meist nur wenig Beschichtungsmaterial befindet. Wie dick die Beschichtung an den Flanken tatsächlich ist, hängt von mehreren Faktoren ab, unter anderem davon, wie stark die Prägestruktur gerundet ist und davon, in welchem Winkel die Beschichtung aufgebracht wird, beispielsweise in welchem Winkel ein Metall aufgedampft wird.

Als nächstes wird eine Beschichtungs-Akzeptorfolie hergestellt, indem auf ein zweites Folienmaterial vollflächig oder teilflächig eine Klebstoffschicht aufgetragen wird.

Die Donorfolie und die Akzeptorfolie werden nun so zusammengeführt, dass die beiden Oberflächen mit der Beschichtung bzw. mit der Klebstoffschicht miteinander in Kontakt sind, und unter geeigneten Bedingungen zusammengepresst, dass die Beschichtungsbereiche auf den Erhebungen der Prägestruktur mit der Klebstoffschicht der Akzeptorfolie verkleben.

Zuletzt werden die Donorfolie und die Akzeptorfolie wieder voneinander getrennt, beispielsweise durch Trennwicklung. Dabei bleibt die Beschichtung der Donorfolie in den verklebten Bereichen an der Akzeptorfolie haften, und aus der Akzeptorfolie entsteht ein erster Mikrostrukturträger, dessen Mikrostruktur exakt die Mikrostruktur der Erhebungen der Donorfolie widerspiegelt. Bei einer Akzeptorfolie mit nur teilflächig aufgetragener Klebstoffschicht gilt dies natürlich nur für die entsprechenden Teilflächen. Aus der Donorfolie entsteht ein zweiter Mikrostrukturträger, der zu dem ersten Mikrostrukturträger komplementär ist, d.h. die beiden Mikrostrukturträger verhalten sich hinsichtlich der Beschichtung wie Positiv und Negativ.

Zunächst wird die Herstellung der Donorfolie näher erläutert. Die Donorfolie weist ein erstes Folienmaterial auf, das grundsätzlich relativ beliebig gewählt werden kann, beispielsweise aus Papier oder Kunststoff bestehen kann. Bevorzugt sind Kunststoff-Folien, beispielsweise aus Polypropylen, Polyethylen, Polystyrol, Polyester, insbesondere aus Polycarbonat oder Polyethylenterephthalat. Transparente oder transluzente Folien sind besonders bevorzugt. Es muss entweder eine prägbare Folie verwendet werden, oder die Folie muss an einer ihrer Oberflächen mit einer prägbaren Beschichtung ausgestattet werden. Geeignete prägbare Folien und prägbare Beschichtungen sind einem Fachmann bekannt. Besonders gut geeignet sind Thermoplaste, vernetzbare Thermoplaste und Prägelacke wie UV-Lacke. Die prägbare Beschichtung kann vollflächig oder beispielsweise auch in Form eines Motivs aufgetragen werden.

Das Folienmaterial oder die darauf befindliche prägbare Schicht wird unter erhöhtem Druck und gegebenenfalls erhöhter Temperatur und gegebenenfalls unter Einwirkung von UV-Strahlung mit der gewünschten Mikrostruktur in Form eines Prägemotivs versehen. Als Prägewerkzeug kann beispielsweise ein Prägezylinder oder eine andere geprägte Folie dienen. Die Prägung wird in den Bereichen des Folienmaterials durchgeführt, in denen der spätere Mikrostrukturträger eine Mikrostruktur aufweisen soll. Da die Mikrostruktur in erster Linie zur Herstellung der Motivschicht einer mikrooptischen Darstellungsanordnung oder zur Herstellung einer mikrooptischen Motivbetrachtungseinrichtung gedacht ist, weist die Mikrostruktur erfindungsgemäß Mikrostrukturelemente mit einer Strichstärke zwischen etwa 0,5 µm und etwa 10 µm und/oder mit einer Strukturtiefe zwischen etwa 0,2 µm und etwa 20 µm, vorzugsweise zwischen etwa 1 µm und etwa 10 µm, auf. Die Mikrostrukturen können selbstverständlich auch flächige Bereiche enthalten, und sie können sowohl positive Elemente als auch negative Elemente aufweisen. Die Erhebungen und Vertiefungen können auch zumindest teilweise ein zusammenhängendes Netz bilden.

Auf die Prägestruktur wird die gewünschte Beschichtung, die Transferschicht, vollflächig oder teilflächig aufgetragen. Dabei ist zu beachten, dass die Transferschicht später teilweise wieder abgelöst werden muss. Sie darf daher nicht zu stark an dem Untergrund haften, jedenfalls weniger stark, als die erreichbare Klebkraft mit dem später einzusetzenden Klebstoff. Eine ausreichend geringe Haftkraft kann gegebenenfalls bereits durch eine geeignete Wahl der Materialien für die Prägefolie bzw. die prägbare Beschichtung erzielt werden. Bevorzugt wird der Untergrund aber haftungsverringernd vorbehandelt. Beispielswiese kann der Untergrund mit Wasser und/oder Lösungsmitteln mit oder ohne geeignete Additive abgewaschen werden. Als entsprechende Additive geeignet sind beispielsweise tensidisch wirkende Substanzen, Entschäumer oder Verdicker. Additive können auch in die Prägefolie oder die prägbare Beschichtung selbst eingebracht werden. Alternativ kann mindestens in einem Teilbereich auch eine zusätzliche haftvermindernde Schicht vorgesehen werden. Die haftungsverringernde Behandlung kann vor oder nach der Prägung durchgeführt werden. Von Bedeutung für die Haftkraft ist auch die Art der Aufbringung der Transferschicht.

Als Beschichtungsmaterialien kommen grundsätzlich alle opaken Materialien in Frage, deren lateraler Zusammenhalt nicht allzu groß ist. Bei zähen Materialien ist es oftmals schwierig, das gewünschte kantenscharfe Brechen der Transferschicht zu erreichen. Auch die Art der Aufbringung der Beschichtunsmaterialien kann hier eine Rolle spielen. Bei sehr dünnen Schichten ist generell eine kantenschärfere Übertragung möglich als bei dickeren Schichten aus demselben Material. Geeignete Schichtdicken liegen im Bereich von etwa 30 bis 500 nm, bevorzugt bis etwa 200 nm. Besonders gut geeignet sind Metalle, Metall-Legierungen, Mischungen von Metallen, die keine Legierung bilden, Schichten von Metallen übereinander, Metalle, die nach der Auftragung als Cluster vorliegen, d.h. grundsätzlich alle denkbaren Kombinationen von miteinander verträglichen Metallen. Die metallischen Beschichtungen werden bevorzugt aufgedampft, insbesondere durch physikalische Dampfabscheidung (PVD). Besonders bevorzugte Metalle sind Aluminium, Kupfer, Zinn, Zink, Silber und Gold. Durch entsprechende Kombinationen können auch mehrfarbige Beschichtungen erhalten werden. Die besten Ergebnisse wurden bisher für Aluminium mit einer Strichbreite von 2 µm und einer Schichtdicke der Al-Schicht von etwa 50 nm erhalten.

Andere Beschichtungsmaterialien sind beispielsweise Metalleffektfarben, thermochrome Schichten, Schichten mit Farbpigmenten, Fluoreszenzpigmenten, oder anderen Effektpigmenten, Flüssigkristall-Schichten, und andere Beschichtungen mit Farbkippeffekt wie Schichten aus Dünnschichtelementen, und hochbrechende Schichten, beispielsweise aus ZnS. Geeignete Schichtdicken für die vorstehenden Beschichtungsmaterialien liegen im Bereich von einigen Mikrometern. Auch Schichtkombinationen sind möglich. Farben werden üblicherweise aufgedruckt, aber auch die Erzeugung farbiger Schichten durch Sublimationsfarbstoffe ist möglich. Einige dieser Schichten können nicht unmittelbar auf die geprägte Folie bzw. die Prägelackschicht aufgebracht werden, sondern erfordern die Auftragung einer Zwischenschicht. Eine Zwischenschicht ist beispielsweise bei Flüssigkristall-Schichten vorteilhaft, um für eine passende Orientierung der Flüssigkristalle zu sorgen. Metallisierungen mit Farbkippeffekt weisen typischerweise eine keramische Zwischenschicht (beispielsweise SiO₂) auf, die bevorzugt dünn sein sollte, da ansonsten ein kantenscharfes Brechen des Dielektrikums nicht immer gewährleistet ist. Mittels dünner Dielektrika oder hochbrechender Dielektrika können farbige Schichten ohne Farbkippeffekt erhalten werden, wobei durch die geringe Dicke ein nicht kantenscharfes Brechen vermieden werden kann. Eine Schichtdicke des Dielektrikums von 300 nm sollte in der Regel nicht überschritten werden, wobei die Schichtdicke des Dielektrikums auch von der Prägetiefe und der Art und Qualität der Bedampfung bzw. Beschichtung abhängt, so dass von Fall zu Fall auch dickere Schichten möglich sind.

Außer der Donorfolie wird eine Akzeptorfolie vorbereitet. Die Akzeptorfolie weist ebenfalls eine Trägerfolie auf, wobei grundsätzlich dieselben Folienmaterialien geeignet sind wie für die Donorfolie. Wie bei der Donorfolie sind Folienmaterial-Dicken zwischen etwa 3 µm und etwa 50 µm bevorzugt, insbesondere etwa 5 µm bis etwa 25 µm. Besonders bevorzugt sind transparente oder zumindest transluzente Folienmaterialien.

Dieses Folienmaterial wird an einer Oberfläche mit einem Klebstoff beschichtet. Die Klebstoffschicht kann entweder vollflächig oder als Motiv aufgetragen werden. Unter einem Klebstoff ist dabei ein Material zu verstehen, das unter den späteren Transferbedingungen klebrig ist oder für den Transfer hinreichend klebrig gemacht werden kann. Geeignet sind beispielsweise Klebstoffe auf der Basis von Vinylchlorid-Copolymeren und beliebige Heißsiegellacke (Thermoplaste), die unter erhöhtem Druck und erhöhter Temperatur eine Haftung zu der zu übertragenden Beschichtung entwickeln. Es ist vorteilhaft, wenn die Klebstoffschicht bei Raumtemperatur blockfrei ist, damit die Folienmaterialien gewickelt oder gestapelt auf Vorrat gehalten werden können. Alternativ wird der Klebstoff erst unmittelbar bei Bedarf aufgetragen. Wenn die Beschichtung mit Klebstoff zeitnah zu der beabsichtigten Übertragung erfolgt, kann die Klebstoffbeschichtung auch vernetzend aufgebaut sein, so dass das Verkleben von Donorfolie und Akzeptorfolie bei einer verhältnismäßig niedrigen Temperatur durchgeführt werden kann, während nach einer gewissen Liegezeit, also bei der späteren Trennung von Donorfolie und Akzeptorfolie, der Klebstoff soweit vernetzt ist, dass er einerseits die zu übertragenden Bereiche der Transferschicht kantenscharf von der Donorfolie abzulösen vermag und andererseits in den nicht verklebten Bereichen nicht mehr zum Verblocken neigt. Eine elegante Lösung sind Dual-Cure-Systeme. Diese Beschichtungssysteme werden mit Lösemitteln oder mit Wasser verdünnt aufgedruckt und anschließend getrocknet, d.h. Lösemittel und/oder Wasser werden entfernt, typischerweise einfach durch Verdunsten. Beim Verkleben mit der Donorfolie ist das Klebstoffsystem noch klebefähig, zumindest unter erhöhter Temperatur, aber nach der Verklebung wird durch eine Nachbelichtung, oder allgemein Nachbestrahlung, die Klebstoffbeschichtung soweit vernetzt, dass die nicht verklebten Bereiche der Beschichtung nicht mehr zum Verblocken neigen. Ob noch Verblockungsneigung (Tack) vorliegt, kann durch folgenden Test überprüft werden: beschichtete Folienstücke von etwa 100 cm² werden gestapelt und mit einem Gewicht von 10 kg belastet und 72 Stunden lang bei 40°C gelagert. Lassen sich die Folienstücke danach ohne Beschädigung der Beschichtungen mühelos voneinander trennen, ist die Beschichtung als tackfrei anzusehen.

Die Klebstoffe können übliche Additive, beispielsweise Weichmacher zur Anpassung des Erweichungspunkts, oder Netzmittel, Entschäumer, Wachse, etc., enthalten. Sie können auch als Träger für Merkmalsstoffe dienen, beispielsweise für Fluoreszenzstoffe, thermochrome oder andere Farbstoffe, Magnetpigmente, und andere Zusatzstoffe.

Besonders geeignete Klebstoffe, die bei der vorliegenden Erfindung verwendet werden können, sind in der DE 10 2004 035 979 beschrieben, deren Offenbarungsgehalt insoweit in die vorliegende Anmeldung aufgenommen wird. Es sind Klebstoffe, insbesondere Dispersionsklebstoffe, die mindestens eine strahlenvernetzbare Komponente enthalten und durch kurzwellige Strahlung, wie ultraviolette Strahlung oder kurzwellige sichtbare Strahlung, oder durch Elektronenstrahlung, bevorzugt durch UV-Strahlung, vernetzt werden.

Weitere geeignete Klebstoffe sind die in DE 10 2008 036 480 genannten Resistlacke. Beispielhafte Zusammensetzungen sind dort genannt und werden insoweit zum Gegenstand der vorliegenden Anmeldung. Die Resist-Eigenschaften dieser Klebstoffe werden bei der vorliegenden Erfindung jedoch nicht genutzt.

Die Dicke der Klebstoffschicht ist auf die Dicke der zu übertragenden Beschichtung abzustimmen. Unter der Voraussetzung, dass die Klebstoffschicht beim Kaschieren nicht zu stark nachgibt, kann diese prinzipiell auch dicker sein als die zu übertragende Beschichtung. Jedenfalls darf die Klebstoffschicht unter Kaschierungsbedingungen die Transferschicht in den Vertiefungen der Prägestruktur nicht erreichen.

Das Auftragen der Klebstoffschicht kann nach beliebigen bekannten Verfahren erfolgen. Bevorzugt wird die Klebstoffschicht aufgedruckt. Neben einer vollflächigen Auftragung ist auch eine teilflächige Auftragung, beispielsweise als Motiv, möglich. Auf diese Weise kann festgelegt werden, an welchen Stellen die Donorfolie mit der Akzeptorfolie verkleben soll, d.h. an welchen Stellen eine Beschichtungsübertragung stattfinden soll.

Als nächster Schritt werden die Donorfolie und die Akzeptorfolie kaschiert, d.h. die beiden Folien werden mittels der Klebstoffschicht miteinander verklebt. Zu diesem Zweck werden die beiden Folien so zusammengeführt bzw. aufeinandergelegt, dass die zu übertragende Beschichtung der Donorfolie und die Klebstoffschicht der Akzeptorfolie zueinander weisen, und dann zusammengepresst, bevorzugt unter erhöhter Temperatur. Dabei kann die Prägestruktur der Donorfolie in die Klebstoffschicht der Akzeptorfolie gegebenenfalls eingeprägt werden. Geeignete Verklebungsbedingungen sind typischerweise etwa 60°C bis 160°C und ein Liniendruck von typischerweise 0,1 N/mm bis 15 N/mm. Die exakten Bedingungen sind natürlich von der Art des verwendeten Klebstoffs abhängig. Bei vernetzenden Systemen muss gegebenenfalls bestrahlt werden oder zumindest der verklebte Verbund eine gewisse Zeit ruhen lassen werden, um die Vernetzung zu ermöglichen. Bei der Trennung von Donorfolie und Akzeptorfolie voneinander muss gewährleistet sein, dass die Klebeverbindung zwischen Beschichtung und Klebststoffschicht so fest ist, dass sie unter den Trennungsbedingungen nicht mehr gelöst werden kann. Bevorzugt sollte gleichzeitig der nicht verklebte Bereich der Klebstoffschicht tackfrei sein. Bei gängigen Heißsiegellacken ist es meist ausreichend, das Abkühlen des Lacks abzuwarten. Dann können die Donorfolie und die Akzeptorfolie voneinander getrennt werden.

Die Trennung wird bevorzugt durch eine Trennwicklung durchgeführt. Beim Trennen der Donorfolie und der Akzeptorfolie voneinander reißt die Beschichtung der Donorfolie exakt an den Umrisslinien der Verklebungsflächen von Beschichtung und Klebstoffschicht. Da die Beschichtung an der Klebstoffschicht wesentlich besser haftet als an der Donorfolie, bleiben die Bereiche der Beschichtung (Transferschicht-Flächenelemente), die sich auf Erhebungen der Prägestruktur der Donorfolie befinden, an der Klebstoffschicht haften, während alle übrigen Bereiche der Beschichtung weiterhin an der Donorfolie haften. Die auf die Akzeptorfolie transferierten Beschichtungs-Flächenbereiche geben daher exakt die Anordnung und Gestalt der Erhebungen der Prägestruktur der Donorfolie wieder. Bei dem Transfervorgang entsteht somit aus der Akzeptorfolie ein Träger mit einer Mikrostruktur, die die transferierten Beschichtungs-Flächenelemente aufweist, während aus der Donorfolie ein Träger mit einer Mikrostruktur entsteht, bei der genau diese Flächenelemente fehlen. Die Mikrostrukturen der beiden Träger sind insofern komplementär. Abschließend werden die Mikrostrukturträger bevorzugt mit einer Schutzbeschichtung ausgestattet.

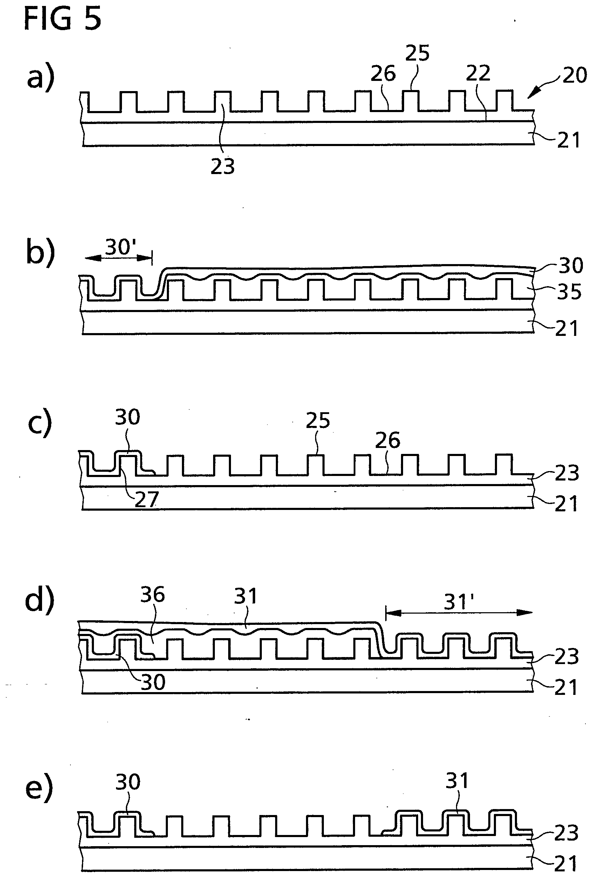

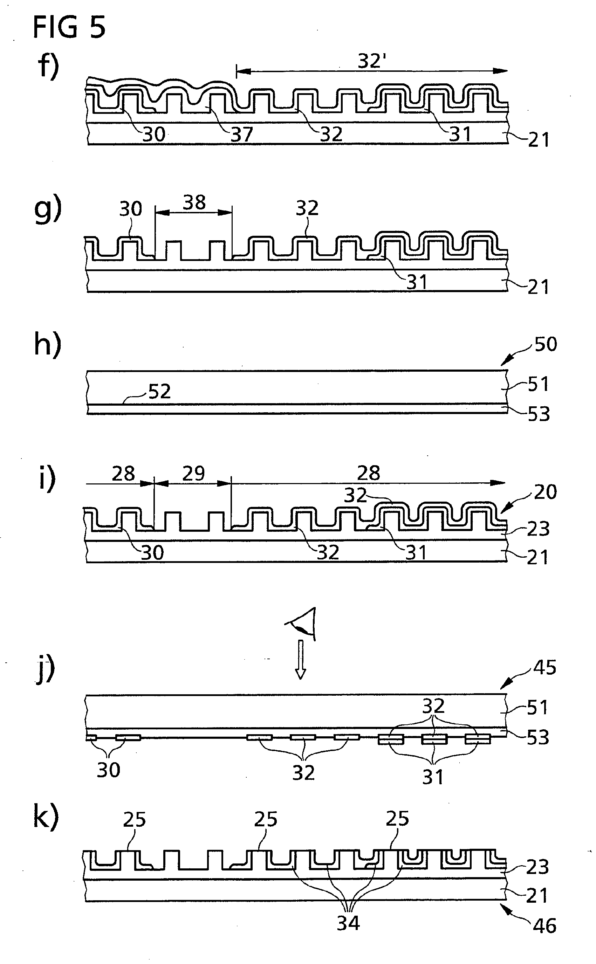

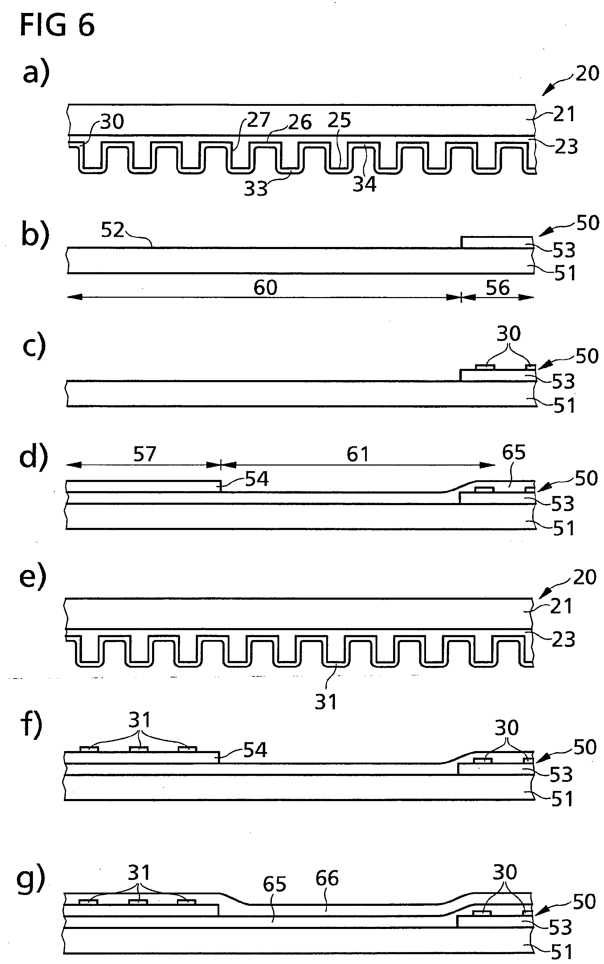

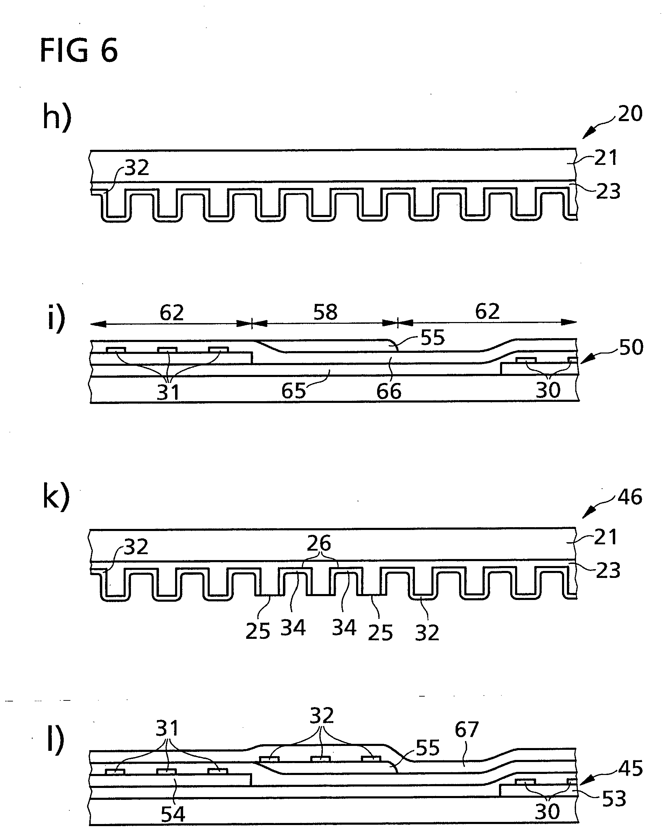

Das Verfahren ist auch hervorragend geeignet zur Erzeugung mehrfarbiger Mikrostrukturen aus Materialien, aus denen auf andere Weise mehrfarbige Mikrostrukturen nicht oder nur sehr umständlich erzeugt werden können. Beispiele hierfür sind Mikrostrukturen aus diversen Metallen. Die Möglichkeiten zur Erzeugung mehrfarbiger Mikrostrukturen werden nachfolgend anhand der Figuren 5 und 6 erläutert.

Die Prägestruktur der Donorfolie weist typischerweise eine Primärstruktur und eine Sekundärstruktur auf. Die Primärstruktur wird durch die geprägten Flächen vorgegeben. Beispielsweise kann sie dadurch vorgegeben werden, dass die prägbare Beschichtung in Form eines bestimmten Motivs aufgebracht wird, wodurch nur die mit der Beschichtung versehenen Flächen geprägt werden können. Eine alternative Art der Grobstrukturierung besteht darin, die Transferbeschichtung mehrfarbig auszubilden oder nur in bestimmten Flächenbereichen vorzusehen, beispielsweise in Form eines Motivs. Die Strichbreite der Grobstrukturierung beträgt typischerweise mehr als 50 µm mit einer Insettertoleranz von etwa 300 µm. Die Sekundärstruktur wird durch die Gestalt der Erhebungen und Vertiefungen des Prägemotivs vorgegeben. Bei dieser Feinstrukturierung liegt die Strichbreite in der Größenordnung von etwa 2 µm. Eine weitere Art der Primärstrukturierung ergibt sich, wenn eine bereichsweise modulierte haftvermindernde Schicht eingesetzt wird. In Bereichen mit reduzierter Haftung (d.h. mit haftvermindernder bzw. Antihaft-Schicht) wird die Transferbeschichtung übertragen, in Bereichen, in denen die haftvermindernde Schicht fehlt oder deaktiviert ist, findet keine Übertragung der Transferbeschichtung statt. Alternativ (die Primärstruktur der Donorfolie fehlt) oder zusätzlich kann die Primärstruktur auch durch die Klebstoffschicht der Akzeptorfolie vorgegeben werden.

Die Primärstruktur und die Sekundärstruktur können zusätzlich mit einer Tertiärstruktur kombiniert werden. Eine derartige Tertiärstruktur sind beispielsweise Beugungsstrukturen und Brechungsstrukturen wie Hologrammprägestrukturen. Die typische Hologrammprägestruktur ist wesentlich flacher als die Sekundärstruktur. Die Tertiärstruktur kann entweder vollflächig oder nur auf den Erhebungen oder nur in den Vertiefungen der Sekundärstruktur vorliegen. Die Tertiärstruktur wird entsprechend auch in der Transferbeschichtung ausgebildet und beim Übertragen der Transferbeschichtung in die Klebstoffschicht der Akzeptorfolie eingeprägt und gleichzeitig mit den übertragenen Bereichen der Beschichtung mit übertragen. Ist die Tertiärstruktur beispielsweise ein Hologramm, das in die Erhebungen der Prägestruktur der Donorfolie eingeprägt ist, wird diese holographische Information beim Transfervorgang in die Klebstoffschicht der Akzeptorfolie übertragen. Ist die holographische Information in die Vertiefungen der Prägestruktur der Donorfolie eingeprägt, bleibt sie beim Transfervorgang zusammen mit der Transferschicht in diesen Bereichen auf der Donorfolie.

Nach einer Variante kann die Tertiärstruktur beispielsweise eine Nanostrukturierung darstellen, die als geeignete zusätzliche Struktur in den Prägelack der Donorfolie eingeprägt ist. Bei dieser Form der Nanostrukturierung kann unter Ausnutzung von Plasmonen oder Resonanzerscheinungen zusätzliche Farbigkeit oder durch Einsatz von Mottenaugenstrukturen eine Schwärzung erzeugt werden. Sind die Nanostrukturen in die Erhebungen der Prägestruktur der Donorfolie eingeprägt, so ist bei der Übertragung auf die Akzeptorfolie darauf zu achten, dass die Nanostrukturierung in den Klebstoff übertragen wird. Befinden sich hingegen die geprägten Nanostrukturen in den Vertiefungen der Prägestruktur, so ist dies nicht erforderlich.

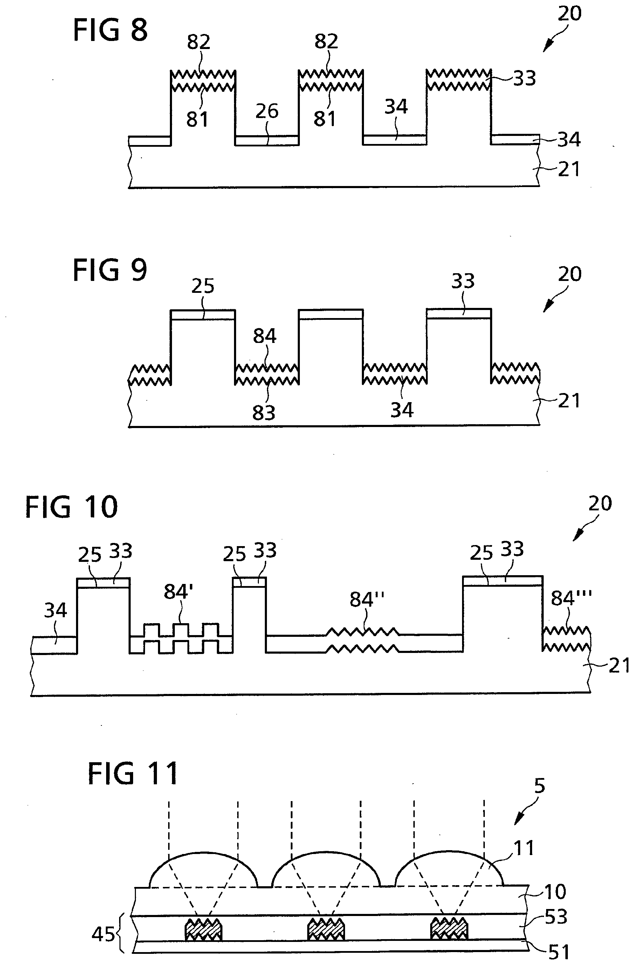

Eine andere Variante einer Tertiärstruktur stellt eine Nanostrukturierung durch eine geeignete Beschichtung dar. Auch bei dieser Form der Nanostrukturierung kann unter Ausnutzung von Plasmonen oder Resonanzerscheinungen zusätzliche Farbigkeit oder durch Einsatz von Mottenaugenstrukturen eine Schwärzung erzeugt werden. Diese Effekte erhält man hier beispielsweise mit Beschichtungen aus Farben auf der Basis eines Lackträgers mit metallischen Nanopartikeln. Der Effekt der Farbgebung beruht wahrscheinlich darauf, dass einfallende elektromagnetische Strahlung Volumen- oder Oberflächenplasmonen in den Nanopartikeln anregt und/oder Resonanzerscheinungen hervorruft. Vorteilhaft weisen die metallischen Nanopartikel eine Abmessung zwischen 2 nm und 400 nm, bevorzugt zwischen 5 nm und 300 nm, auf. Die metallischen Nanopartikel können im Wesentlichen kugelförmig ausgebildet sein, können aber auch mit einer Vorzugsrichtung, insbesondere als Rotationsellipsoide oder in Stäbchen- oder Plättchenform, ausgebildet sein. Bezüglich geeigneter Materialien wird verwiesen auf den Offenbarungsgehalt der Anmeldung WO 2009/083151. Diese nanostrukturierenden Beschichtungen können selbst die Transferbeschichtung bilden oder zusätzlich zu einer Transferbeschichtung vorgesehen werden. Sie werden ebenfalls vollflächig aufgetragen (jedenfalls in den Motivbereichen der Donorfolie, in denen eine Übertragung stattfinden soll), und von den Erhebungen der Prägestruktur der Donorfolie in die Klebstoffschicht der Akzeptorfolie übertragen. Alle übrigen nanostrukturierten Bereiche der Donorfolie, d.h. die Bereiche, die sich nicht auf Erhebungen befinden, bleiben auf der Donorfolie zurück. Die Ausstattung mit einer Tertiärstruktur wird nachfolgend anhand der Figuren 8, 9 und 10 noch näher beschrieben.

Die nach dem Transferprozess aus der Akzeptorfolie und aus der Donorfolie erhaltenen Mikrostrukturträger können als Sicherheitsmerkmale verwendet werden, und zwar jeweils für sich alleine oder in Kombination mit einer mikrooptischen Betrachtungseinrichtung. Wenn ein derartiger Mikrostrukturträger für sich alleine genommen ein Sicherheitsmerkmal eines Sicherheitselements bildet, wird er in bekannter Weise mit Schutzschichten, Klebstoffschichten und gegebenenfalls weiteren Funktionsschichten ausgestattet, um das Sicherheitselement, beispielsweise einen Sicherheitsfaden, herzustellen. Ein Mikrostrukturträger, der vorteilhaft ohne mikrooptische Betrachtungseinrichtung eingesetzt werden kann, ist nachfolgend im Zusammenhang mit Figur 10 erläutert.

Meist werden die nach dem Verfahren erhaltenen Mikrostrukturträger mit einer oder mit zwei Mikromotivbetrachtungseinrichtungen zu einer mikrooptischen Darstellungsanordnung kombiniert. Der Mikrostrukturträger bildet dann die Mikromotivschicht der mikrooptischen Darstellungsanordnung. Mikrooptische Darstellungsanordnungen sind insbesondere mikrooptische Vergrößerungsanordnungen wie Moire-Vergrö-ßerungsanordnungen, Vergrößerungsanordnungen vom Moire-Typ und Modulo-Vergrößerungsanordnungen, wie sie in den Druckschriften DE 10 2005 062 132, WO 2007/076952, DE 10 2007 029 203, WO 2009/000529, WO 2009/000527 und WO 2009/000528 beschrieben sind. Alle diese mikrooptischen Vergrößerungsanordnungen enthalten ein Motivbild mit Mikrostrukturen, das bei Betrachtung mit einem geeignet abgestimmten Betrachtungsraster ein vorgegebenes Sollbild rekonstruiert. Wie in den oben genannten Druckschriften genauer erläutert, lassen sich dabei eine Vielzahl visuell attraktiver Vergrößerungs- und Bewegungseffekte erzeugen, die zu einem hohen Wiedererkennungswert und einer hohen Fälschungssicherheit der damit ausgestatteten Sicherheitselemente führen. Als Betrachtungseinrichtungen dienen Mikrolinsenanordnungen, aber es können auch andere Mikrofokussierelement-Anordnungen verwendet werden. Die erfindungsgemäßen Mikrostrukturträger können allgemein die zu betrachtenden Mikromotive in beliebigen mikrooptischen Darstellungsanordnungen bereitstellen. Beispiele für mikrooptische Darstellungsanordnungen mit einem erfindungsgemäßen Mikrostrukturträger sind nachfolgend in den Figuren 11 bis 13, 15, 18, 21 bis 23 und 26 bis 29 gezeigt. Wie aus diesen Figuren ersichtlich ist, kann der erfindungsgemäße Mikrostrukturträger einseitig oder beidseitig mit Mikrofokussierelementen (Mikrolinsen in den Figuren) ausgestattet werden. Außerdem kann der Mikrostrukturträger entweder ein separater Bestandteil der Darstellungsanordnung sein, d.h. ein eigenes Trägermaterial besitzen, oder er kann in die Mikrofokussiereinrichtung integriert sein, d.h. das Trägermaterial der Mikrofokussiereinrichtung kann gleichzeitig das Trägermaterial der Mikrostruktur sein.

In einer vorteilhaften Weiterbildung der Erfindung bildet die Mikrostruktur ein Motivbild, das in eine Mehrzahl von Zellen eingeteilt ist, in denen jeweils abgebildete Bereiche eines vorgegebenen Sollbilds angeordnet sind. Die lateralen Abmessungen der abgebildeten Bereiche liegen vorzugsweise zwischen etwa 5 µm und etwa 50 µm, insbesondere zwischen etwa 10 µm und etwa 35 µm. Bei den oben zuerst genannten mikrooptischen Moire-Vergrößerungsanordnungen stellen die abgebildeten Bereiche der Zellen des Motivbilds jeweils verkleinerte Abbilder des vorgegebenen Sollbilds dar, die vollständig innerhalb einer Zelle Platz finden. Bei den mikrooptischen Vergrößerungsanordnungen vom Moiretyp stellen die abgebildeten Bereiche mehrerer beabstandeter Zellen des Motivbilds zusammengenommen jeweils ein verkleinertes und gegebenenfalls linear abgebildetes Abbild des Sollbilds dar, dessen Ausdehnung größer als eine Zelle des Motivbilds ist. Im allgemeinsten Fall stellt die Vergrößerungsanordnung eine Modulo-Vergrößerungsanordnung dar, bei der die abgebildeten Bereiche der Zellen des Motivbilds jeweils durch eine Modulo-Operation abgebildete, nicht vollständige Ausschnitte des vorgegebenen Sollbilds darstellen.

Gemäß einer anderen Variante der vorliegenden Erfindung können die Mikrostrukturträger auch so gestaltet werden, dass sie anstelle von Mikrofokussieranordnungen als alternative Betrachtungsanordnungen in mikrooptischen Darstellungsanordnungen eingesetzt werden können. Beispiele für alternative Betrachtungselemente sind Lochmasken und Schlitzmasken oder inverse Loch- und Schlitzmasken, die sehr einfach hergestellt werden können, indem ein Donor-Folienmaterial mit einer Prägung geeigneter Abmessungen ausgestattet und mit einer nicht transparenten Beschichtung beschichtet wird. Nach Übertragung der nicht transparenten Beschichtung von den Erhebungen der Donorfolie auf eine Akzeptorfolie weist die Akzeptorfolie in den Bereichen der Erhebungen nicht transparente Stellen und in den Bereichen der Vertiefungen transparente Stellen auf, wobei jede transparente Stelle (Lochmasken, Schlitzmasken) bzw. jeden nicht transparente Stelle (inverse Lochmasken, inverse Schlitzmasken) ein Mikromotivbetrachtungselement darstellen kann. Entsprechend weist die Donorfolie in den Bereichen der Erhebungen transparente Stellen und in den Bereichen der Vertiefungen nicht transparente, beschichtete Stellen auf, wobei auch hier jede transparente Stelle bzw. jede nicht transparente Stelle als Mikromotivbetrachtungselement dienen kann. Ein Vorteil derartiger Mikromotivbetrachtungselemente ist, dass kein definierter Fokus-Abstand zu dem zu betrachtenden Mikromotiv erforderlich ist, wie bei Linsenanordnungen.

Insbesondere zur Ausbildung von Lochmasken und Schlitzmasken zur Verwendung in mikrooptischen Darstellungsanordnungen sollten die Abmessungen der transparenten Stellen im Vergleich zu den Abmessungen der nicht transparenten Stellen eher gering sein. Mit Vorteil liegen die Abmessungen der transparenten Stellen zwischen 1 µm und 5 µm, besonders bevorzugt zwischen 1 µm und 3 µm. Um außerdem zu vermeiden, dass sich Akzeptorfolie und Donorfolie beim Kaschieren in den Bereichen der Vertiefungen berühren und zu einer nicht erwünschten zusätzlichen Übertragung der Beschichtung führen, ist die Prägestruktur hier bevorzugt derart ausgestaltet, dass die Erhebungs-Flächenelemente einen deutlich größeren Flächeninhalt aufweisen als die Vertiefungs-Flächenelemente. Entsprechend werden die Mikromotivbetrachtungselemente von Loch- bzw. Schlitzmasken bevorzugt durch die transparenten Stellen der Akzeptorfolie gebildet.

Da sowohl der Mikromotivbestandteil als auch der Mikromotivbetrachtungsbestandteil einer mikrooptischen Darstellungsanordnung nach dem Verfahren herstellbar ist, können mikrooptische Darstellungsanordnungen einen erfindungsgemäß hergestellten Mikromotivbestandteil oder einen erfindungsgemäß hergestellten Mikromotivbetrachtungsbestandteil oder beides aufweisen.

Es soll jedoch betont werden, dass die Offenbarung nicht auf diese Anwendungen beschränkt ist. Vielmehr kann das beschriebene Verfahren vorteilhaft auch bei der Herstellung anderer Sicherheitselemente genutzt werden, beispielsweise bei der Erzeugung von Mikrotextdrucken auf Papier oder Folie.

Sicherheitselemente mit einem erfindungsgemäßen Mikrostrukturträger können weitere Funktionsschichten aufweisen, also Schichten, die irgendwelche Eigenschaften aufweisen, die visuell oder maschinell nachgewiesen werden können. Funktionsschichten enthalten daher beispielsweise Farbstoffe, Lumineszenzstoffe, thermochrome Stoffe, Flüssigkristalle, Interferenzpigmente, elektrisch leitfähige Stoffe, magnetische Stoffe, lichtbeugende oder lichtbrechende Strukturen oder Kombinationen davon. Außerdem sind geeignete Schichten zur Anbringung an einem zu schützenden Gegenstand vorzusehen, wie eine Klebstoffschicht.

Die erfindungsgemäßen Sicherheitselemente können zur Echtheitssicherung von Waren beliebiger Art verwendet werden. Bevorzugt werden sie zur Echtheitssicherung von Wertdokumenten eingesetzt, beispielsweise bei Banknoten, Schecks oder Ausweiskarten. Dabei können sie auf einer Oberfläche des Wertdokuments angeordnet werden oder ganz oder teilweise in das Wertdokument eingebettet werden. Mit besonderem Vorteil werden sie bei Wertdokumenten mit Loch zur Lochabdeckung benutzt. In einem solchen Fall kann das Sicherheitselement von beiden Seiten betrachtet werden, wobei bei den erfindungsgemäßen Sicherheitselementen, je nach Ausgestaltung, gleiche oder verschiedene Motive erkennbar werden. Auch Negativschriften mit feinen Strukturen, die mittels der erfindungsgemäßen Mikrostrukturträger leicht herstellbar sind, können im Durchlicht deutlich erkannt werden. Derartige Sicherheitselemente sind von einem Fälscher praktisch nicht nachahmbar.

Die erfindungsgemäßen Mikrostrukturträger bzw. Sicherheitselemente können einzeln hergestellt werden, werden aber üblicherweise in Form von Bögen oder Bändern mit einer Vielzahl von Einzelnutzen hergestellt. Die Sicherheitselemente können auch in Form von Transfermaterialien, das heißt Bögen oder Bändern mit einer Vielzahl von fertigen und für den Transfer vorbereiteten Sicherheitselementen, bereitgestellt werden. Bei einem Transfermaterial wird der Schichtaufbau des späteren Sicherheitselements in der umgekehrten Reihenfolge, in der der Schichtaufbau später auf einem zu sichernden Wertgegenstand vorliegen soll, auf einem Trägermaterial vorbereitet, wie einem Fachmann bekannt ist.

Die Erfindung wird nachfolgend anhand von Figuren noch weiter veranschaulicht. Es wird darauf hingewiesen, dass die Figuren nicht maßstabs- und nicht proportionsgetreu sind. Ferner sind die in einer Figur dargestellten Merkmale nicht nur in Kombination mit den übrigen in der entsprechenden Figur dargestellten Merkmalen anwendbar. Vielmehr können im Zusammenhang mit einer speziellen Ausführungsform beschriebene Merkmale ganz allgemein bei dem erfindungsgemäßen Verfahren bzw. Mikrostrukturträger bzw. Sicherheitselement zur Anwendung kommen. Außerdem sind jeweils nur die zum Verständnis des geschilderten Verfahrens oder der geschilderten Effekte wesentlichen Merkmale bzw. Schichten dargestellt. Es versteht sich, dass zusätzliche Merkmale bzw. Schichten vorhanden sein können. Gleiche Bezugsziffern bezeichnen gleiche oder entsprechende Elemente. Es zeigen:
- Fig. 1: eine schematische Darstellung einer Banknote mit Sicherheitselementen in Form eines eingebetteten Sicherheitsfadens und aufgeklebter Transferelemente,
- Fig. 2: eine schematische Darstellung des Schichtaufbaus einer Ausführungsform eines Sicherheitselements,
- Fig. 3: einen Verfahrensablauf des Verfahrens zur Erzeugung eines Mikrostrukturträgers, dargestellt an Schnitten durch Donorfolie und Akzeptorfolie in verschiedenen Verfahrensstadien,
- Fig. 4: einen alternativen Verfahrensablauf des Verfahrens zur Erzeugung eines Mikrostrukturträgers, ebenfalls dargestellt an Schnitten durch Donorfolie und Akzeptorfolie in verschiedenen Verfahrensstadien,
- Fig. 5: einen Verfahrensablauf des Verfahrens, bei dem ein Mikrostrukturträger mit mehrfarbigem Motiv und Negativschrift hergestellt wird,
- Fig. 6: einen alternativen Verfahrensablauf des Verfahrens, bei dem ein Mikrostrukturträger mit mehrfarbigem Motiv und Negativschrift hergestellt wird,
- Fig. 7: Verfahrensschritte des Verfahrens, jeweils dargestellt an Aufsichten auf und Schnitten durch Donorfolie und Akzeptorfolie,
- Fig. 8 bis Fig. 10: Schnitte durch verschiedene Ausführungsformen Mikrostrukturträger mit Tertiärstrukturen,
- Fig. 11 bis 13: Schnitte durch Ausführungsformen mikrooptischer Darstellungsanordnungen Sicherheitselemente,
- Fig. 14: einen Schnitt durch eine Donorfolie bei der Herstellung eines Mikrostrukturträgers zur Verwendung als Mikromotivbetrachtungseinrichtung,
- Fig. 15: einen Schnitt durch eine weitere Ausführungsform einer mikrooptischen Darstellungsanordnung eines Sicherheitselements,
- Fig. 16: einen Verfahrensablauf des Verfahrens zur Erzeugung eines erfindungsgemäßen Mikrostrukturträgers, dargestellt an Schnitten durch Donorfolie und Akzeptorfolie in verschiedenen Verfahrensstadien, wobei mehrere deckungsgleiche oder komplementäre Mikrostrukturen erzeugt werden,
- Fig. 17a: eine vergrößerte Aufsicht auf ein Sicherheitselement von Fig. 1,
- Fig. 17b: eine Aufsicht auf ein alternatives Sicherheitselement,
- Fig. 18: eine Schnittansicht des Sicherheitselements von Fig. 17a,
- Fig. 19 und 20: schematische Ansichten zur Erläuterung der Funktionsweise der mikrooptischen Darstellungsanordnungen des Sicherheitselements von Fig. 17a,
- Fig. 21 bis 23: Schnittansichten weiterer Ausführungsformen von Sicherheitselementen,
- Fig. 24: eine Aufsicht auf eine in Sicherheitselementen verwendbare mikrooptische Darstellungsanordnung,
- Fig. 25: einen Schnitt entlang der Linie 39 von Fig. 25,
- Fig. 26 und 27: Verfahrensvarianten zur Herstellung mikrooptischer Kombinations-Darstellungsanordnungen mit einer ersten und einer zweiten mikrooptischen Darstellungsanordnung, und
- Fig. 28 und 29: Schnitte durch alternative Ausführungsformen optischer Darstellungsanordnungen.

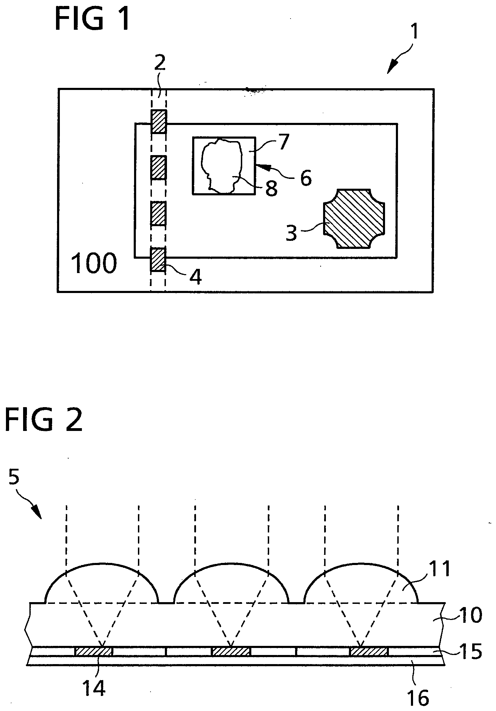

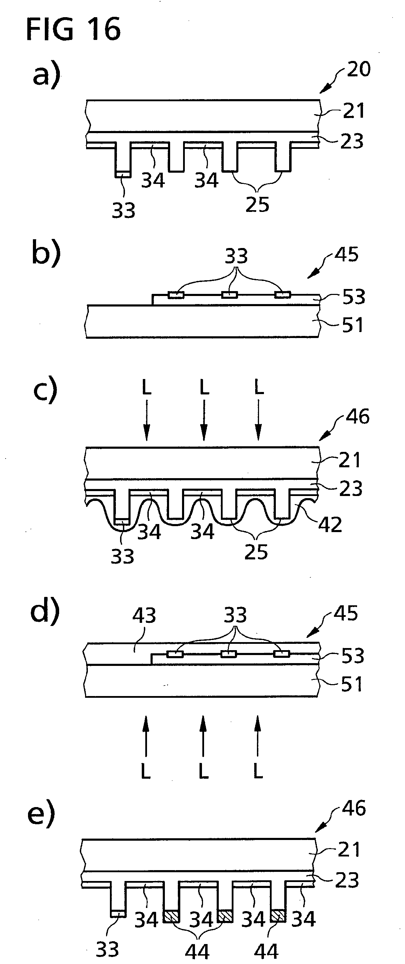

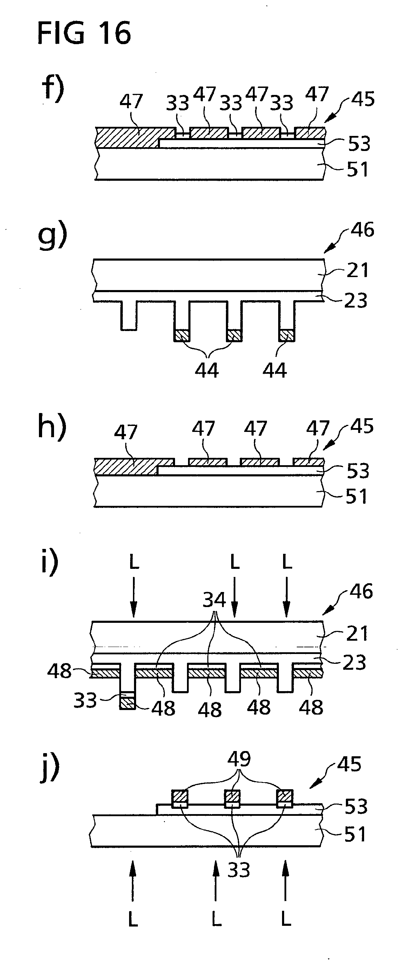

Die Ausführungsformen der Figuren 1 bis 15 und 17 bis 29 sind nicht beansprucht. Ebenso ist das Verfahren des in Figur 16 gezeigten Verfahrensablaufs nicht beansprucht. Jedoch zeigt Figur 16f die Alternative der komplementären Mikrostruktur des Anspruchs 1, und Figur 16j zeigt die Alternative der deckungsgleichen Mikrostruktur des Anspruchs 1.

Die Erfindung wird nun anhand nicht beschränkender Beispiele erläutert.

Fig. 1 zeigt eine schematische Darstellung einer Banknote 1, die mit drei Sicherheitselementen 2, 3 und 6 versehen ist. Das Sicherheitselement 2 ist ein Sicherheitsfaden, der in bestimmten Fensterbereichen 4 an der Oberfläche der Banknote 1 hervortritt, während er in den dazwischen liegenden Bereichen im Inneren der Banknote eingebettet ist. Die Sicherheitselemente 3 und 6 sind aufgeklebte Transferelemente beliebiger Form. Es kann sich alternativ auch um Sicherheitselemente in Form von Abdeckfolien handeln, die in oder über einem Fensterbereich oder einer durchgehenden Öffnung der Banknote angeordnet sind.

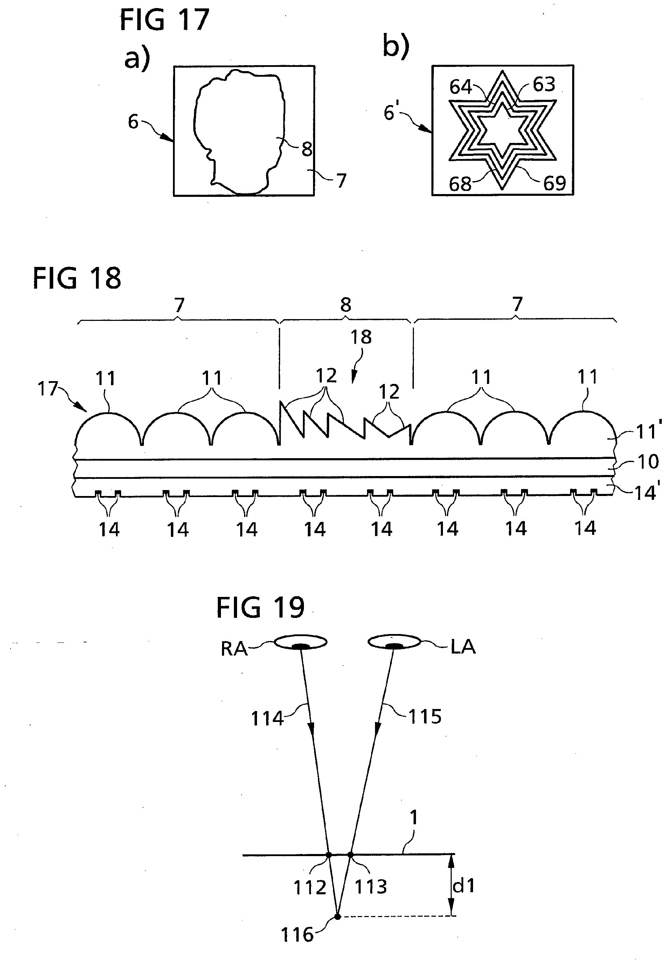

Sowohl der Sicherheitsfaden 2 als auch die Transferelemente 3 und 6 können eine mikrooptische Darstellungsanordnung nach einem Ausführungsbeispiel enthalten. Wie oben näher erläutert, kann eine derartige mikrooptische Darstellungsanordnung insbesondere als Moire-Vergrößerungsanordnung, als mikrooptische Vergrößerungsanordnung vom Moiretyp oder als Modulo-Vergrößerungsanordnung ausgebildet sein. Die Funktionsweise und das Herstellungsverfahren für derartige Anordnungen werden im Folgenden anhand des Sicherheitselements 5 mit einer Moiré-Vergrößerungsanordnung näher beschrieben. Das Sicherheitselement 6 ist ein Kombinations-Sicherheitselement. KombinationsSicherheitselemente werden in Zusammenhang mit Figuren 17 bis 27 beschrieben.

Fig. 2 zeigt schematisch den Schichtaufbau einer Ausführungsform des Sicherheitselements 5, beispielsweise des Sicherheitsfadens 2 oder des Transferelements 3 von Fig. 1. Dargestellt sind hier wie auch in allen übrigen Figuren nur die für die Erläuterung des Funktionsprinzips erforderlichen Teile der Schichtaufbaus. Das Sicherheitselement 5 besitzt ein Trägermaterial 10 in Form einer transparenten Kunststofffolie, beispielsweise einer etwa 20 µm dicken Polyethylenterephthalat (PET)-Folie. Die Oberseite des Trägers 10 ist mit einer rasterförmigen Anordnung von Mikrolinsen 11 versehen, die auf der Oberfläche des Trägers ein zweidimensionales Bravais-Gitter mit einer vorgewählten Symmetrie bilden. Das Bravais-Gitter kann beispielsweise eine hexagonale Gittersymmetrie aufweisen, bevorzugt ist wegen der höheren Fälschungssicherheit jedoch eine niedrigere Symmetrie und damit eine allgemeinere Form, insbesondere die Symmetrie eines Parallelogramm-Gitters.

Der Abstand benachbarter Mikrolinsen 11 ist vorzugsweise so gering wie möglich, um eine möglichst hohe Flächendeckung und damit eine kontrastreiche Darstellung zu gewährleisten. Die sphärisch oder asphärisch ausgestalteten Mikrolinsen 11 weisen vorzugsweise einen Durchmesser zwischen 5 µm und 50 µm, und insbesondere einen Durchmesser zwischen nur 10 µm und 35 µm, auf und sind daher mit bloßem Auge nicht zu erkennen.

Auf der Unterseite des transparenten Trägers 10 befindet sich eine Motivschicht 15, die eine ebenfalls rasterförmige Anordnung von identischen Mikromotivelementen 14 enthält. Auch die Anordnung der Mikromotivelemente 14 bildet ein zweidimensionales Bravais-Gitter mit einer vorgewählten Symmetrie, beispielsweise mit hexagonaler Gittersymmetrie oder der Symmetrie eines Parallelogramm-Gitters. Die Mikromotivschicht 15 wird von einem Mikrostrukturträger gebildet, wobei die Mikromotivelemente 14 entweder aus Vertiefungen der Prägestruktur der Donorfolie hervorgegangen sind oder auf die Akzeptorfolie übertragenen ErhebungsFlächenelementen der Beschichtung der Donorfolie entsprechen. Zur Befestigung des Sicherheitselements an einem Wertdokument ist eine Klebstoffschicht 16 vorgesehen.

Wie in Fig. 2 durch den Versatz der Mikromotivelemente 14 gegenüber den Mikrolinsen 11 angedeutet, unterscheidet sich das Bravais-Gitter der Mikromotivelemente 14 in seiner Ausrichtung und/oder in der Größe seiner Gitterparameter geringfügig von dem Bravais-Gitter der Mikrolinsen 11, um den gewünschten Moiré-Vergrößerungseffekt zu erzeugen. Die Gitterperiode und der Durchmesser der Mikromotivelemente 14 liegen dabei in derselben Größenordnung wie die der Mikrolinsen 11, also im Bereich von 1 µm bis 50 µm, insbesondere im Bereich von 10 µm bis 35 µm, so dass auch die Mikromotivelemente 14 mit bloßem Auge nicht zu erkennen sind.

Die optische Dicke des Trägers 10 und die Brennweite der Mikrolinsen 11 sind so aufeinander abgestimmt, dass sich die Motivschicht 15 und damit die Mikromotivelemente 14 etwa im Abstand der Linsenbrennweite befinden (angedeutet durch die gestrichelten Linien). Der Träger 10 bildet somit eine optische Abstandsschicht, die einen gewünschten konstanten Abstand der Mikrolinsen 11 und der Mikromotivelemente 14 gewährleistet. Aufgrund der sich geringfügig unterscheidenden Gitterparameter sieht der Betrachter bei Betrachtung von oben durch die Mikrolinsen 11 hindurch jeweils einen etwas anderen Teilbereich der Mikromotivelemente 14, so dass die Vielzahl der Mikrolinsen 11 insgesamt ein vergrößertes Bild der Mikromotivelemente 14 erzeugt. Die sich ergebende Moiré-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so ergibt sich eine 100-fache Moire-Vergrößerung. Für eine ausführlichere Darstellung der Funktionsweise und für vorteilhafte Anordnungen der Motivraster und der Mikrolinsenraster wird nochmals auf die Druckschriften DE 10 2005 062 132 und WO 2007/076952 verwiesen, deren Offenbarungsgehalt insoweit in die vorliegende Anmeldung aufgenommen wird.

Die vorstehenden Ausführungen sollen jedoch nicht so verstanden werden, dass die vorliegende Erfindung in irgendeiner Weise auf Moire-Vergrößerungsanordnungen beschränkt ist. Die Erfindung ist vielmehr generell auf mikrooptische Darstellungsanordnungen anwendbar, und mit besonderem Vorteil insbesondere auch auf Modulo-Mapping-Vergrößerungsanordnungen, wie sie in den Anmeldungen WO 2009/00528 und WO 2009/00527 beschrieben sind.

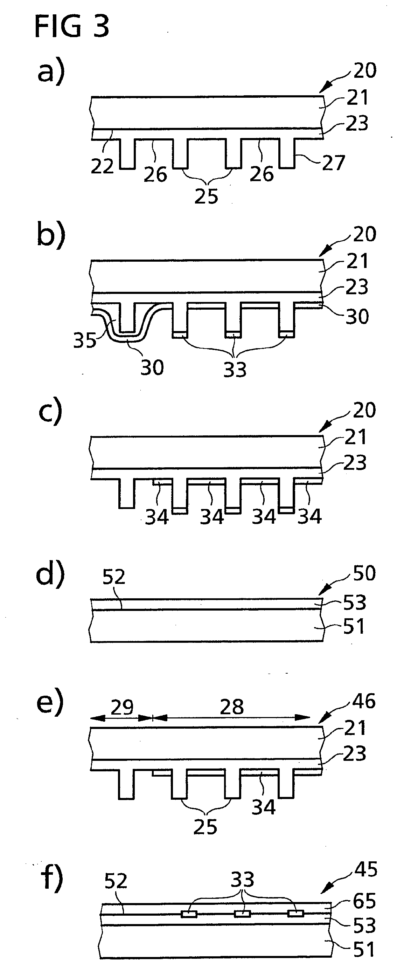

Fig. 3 veranschaulicht den Verfahrensablauf eines Verfahrens zur Erzeugung eines Mikrostrukturträgers. Man geht aus von einer transparenten Donorfolie 20 (Fig. 3a), die an einer ihrer Hauptflächen 22 mit einer transparenten prägbaren Schicht 23 beschichtet wird. In die prägbare Schicht 23 wird eine Prägestruktur eingeprägt, die Erhebungen und Vertiefungen aufweist, wobei die Strukturtiefe vorzugsweise im Bereich zwischen etwa 0,5 µm und etwa 10 µm liegt, und die Strichstärke bevorzugt im Bereich zwischen etwa 1µm und etwa 10 µm liegt. Die Oberfläche der Prägestruktur setzt sich also aus Erhebungsoberflächen 25, Vertiefungsoberflächen 26 und Oberflächen an den Flanken 27 der Erhebungen zusammen.

Es soll darauf hingewiesen werden, dass in dieser sowie allen nachfolgenden Figuren die Prägestruktur wegen der einfacheren Darstellung stets als Rechteckstruktur dargestellt wird. Tatsächlich sind Prägestrukturen mit scharfen Kanten bevorzugt, da hier die Trennung der Erhebungs- und Vertiefungs-Flächenelemente definierter erfolgen kann. Je nach eingesetztem Beschichtungsmaterial kann es in der Praxis zur Erzielung des gewünschten kantenscharfen Brechens der Beschichtung auch ausreichen, gerundete Prägestrukturen mit kontinuierlichen Übergängen zwischen Erhebungen und Vertiefungen zu verwenden.

Es soll ein Mikrostrukturträger mit einem Mikromotiv aus metallischen Mikromotivelementen hergestellt werden, wobei es das Motiv erfordert, dass bestimmte Bereiche des Mikromotivträgers frei von einer Metallisierung bleiben. Bei Beschichtungen, die in Form eines bestimmten Motivs aufgedruckt werden können, stellt eine derartige Anforderung kein Problem dar, aber Metallisierungen können in den meisten Fällen nur vollflächig erzeugt werden, da sie üblicherweise aufgedampft werden, und ein Aufdampfen in Motivform bisher nicht möglich ist. Die metallisierungsfreien Flächenbereiche müssen daher in anderer Weise erzeugt werden. Bei der in Fig. 3 dargestellten Verfahrensvariante wird ein sogenanntes "Waschverfahren" eingesetzt, wie es zur Erzeugung sogenannter "Negativschriften" bekannt ist. Eine Negativschrift ist eine Aussparung beliebiger Form, also jede Nicht-Vollflächigkeit, in einer nicht transparenten Beschichtung. Im Falle der vorliegenden Erfindung, bei der die Mikromotivelemente zwangsläufig keine vollflächige Beschichtung darstellen, wird unter einer Negativschrift das Fehlen von Mikromotivelementen in einer ansonsten regelmäßigen Anordnung von Mikromotivelementen verstanden. Bei einem solchen Waschverfahren wird vorzugsweise vor der Metallisierung eine lösliche Waschfarbe in Form des gewünschten Demetallisierungsbereichs auf die Prägestruktur aufgedruckt, und die Waschfarbe nach der Metallisierung zusammen mit dieser durch ein Lösungsmittel abgewaschen. Weitere Einzelheiten zu einem derartigen Waschverfahren können der Druckschrift WO 99/13157 entnommen werden.

Vor der Auftragung der Transferbeschichtung ist es bevorzugt, eine haftungsverringernde Behandlung der zu beschichtenden Oberfläche vorzunehmen. Dazu wird beispielsweise die Prägestruktur vollflächig mit Waschfarbe beschichtet und die Waschfarbe wieder abgewaschen. Das Auftragen und wieder Abwaschen von Waschfarbe hat sich generell als haftungsverringernde Behandlung bewährt.

Wie in Fig. 3b dargestellt, wird die Oberfläche der Prägestruktur dann in jenen Bereichen, die von Mikromotivelementen frei bleiben sollen, mit einer Waschfarbe 35 beschichtet. Danach wird auf die Prägestruktur vollflächig ein Metall aufgedampft, wobei die Beschichtung 30 entsteht, die sowohl die Waschfarbe 35 als auch die Erhebungsoberflächen 25 und die Vertiefungsoberflächen 26 der Prägestruktur bedeckt. In Fig. 3b nicht dargestellt ist, dass die metallische Beschichtung auch die Flanken 27 der Erhebungen der Prägestruktur in mehr oder weniger starkem Ausmaß bedeckt. Wie dick die Beschichtung an den Flanken tatsächlich ist, hängt von mehreren Faktoren ab, unter anderem davon, wie stark die Prägestruktur gerundet ist und davon, in welchem Winkel das Metall aufgedampft wird. Jedenfalls liegt die Beschichtung stets als eine im Wesentlichen kontinuierliche Schicht vor, die aus Erhebungsflächenelementen 33 auf den Erhebungsoberflächen 25, Vertiefungsflächenelementen 34 auf den Vertiefungsoberflächen 26 und Flächenelementen an den Flanken 27 sowie im Ausführungsbeispiel Flächenelementen über der Waschfarbe 35 zusammengesetzt ist. Die Dicke der Beschichtung 30 liegt bevorzugt in der Größenordnung von etwa 50 nm. "Flächenelemente" haben im Gegensatz zu Oberflächen eine bestimmte Dicke.

Fig. 3c zeigt den Zustand nach dem Abwaschen der Waschfarbe 35 und der darüber liegenden Metallisierung 30. Der vorher mit Waschfarbe beschichtete Bereich ist nun frei von einer Metallisierung, während die Metallisierung in den übrigen Bereichen unverändert vorhanden ist. Diese Donorfolie 20 wird nun mit einer Akzeptorfolie 50 in Kontakt gebracht. Die Akzeptorfolie 50 ist in Fig. 3d dargestellt. Sie besteht aus einem transparenten Folienmaterial 51, das an einer seiner Hauptflächen 52 mit einer transparenten Klebstoffschicht 53 vollflächig beschichtet ist. Die Akzeptorfolie 50 (Fig. 3d) und die Donorfolie 20 (Fig. 3c) werden zusammengepresst, bevorzugt unter erhöhtem Druck und erhöhter Temperatur. Bei dem Kaschierprozess kann die Prägestruktur der Donorfolie 20 optional in die Klebstoffschicht 53 der Akzeptorfolie 50 übertragen werden. Die genauen Kaschierungsbedingungen hängen ab von der Art des verwendeten Klebstoffs. Gegebenenfalls kann eine Bestrahlung des Verbunds aus Donorfolie 20 und Akzeptorfolie 50 erforderlich sein, oder zumindest eine gewisse Liegezeit, um eine Vernetzung und Aushärtung des Klebstoffs zu erreichen. Wenn der Klebstoff abgekühlt und/oder ausreichend ausgehärtet ist, werden die beiden Folien wieder voneinander getrennt, bevorzugt durch Trennwicklung. Dabei entsteht aus der Donorfolie 20 der Mikrostrukturträger 46 (Fig. 3e), und aus der Akzeptorfolie 50 entsteht der Mikrostrukturträger 45 (Fig. 3f). Wie aus Fig. 3f ersichtlich ist, weist der Mikrostrukturträger 45 nur in einem Teilbereich seiner Oberfläche Transferschicht-Erhebungsflächenelemente 33 auf. Der Bereich, der Transferschicht-Erhebungsflächenelemente 33 aufweist, entspricht dem Bereich 28 der Donorfolie, der vollflächig metallisiert war. Aus dem Bereich 29 der Donorfolie, von dem die Transferschicht vorher mittels Waschfarbe entfernt worden war, konnten natürlich keine Transferschicht-Erhebungs-flächenelemente in die vollflächige Klebstoffschicht 53 der Akzeptorfolie übertragen werden. Die Transferschicht-Erhebungsflächenelemente 33 bilden das Mikromotiv des Mikrostrukturträgers 45. Die Primärstruktur des Mikromotivs wird durch die Anordnung der Flächenelemente 33 bestimmt, während die Feinstruktur (Sekundärstruktur) durch das Prägemotiv bestimmt wird. Bei der in Fig. 3f gezeigten Ausführungsform wird das Motiv abschließend mit einer Schutzschicht 65 beschichtet. Es ist grundsätzlich sinnvoll, das Motiv in irgendeiner Weise zu schützen, aber diese Funktion kann auch durch irgendwelche anderen Schichten, mit denen der Mikrostrukturträger aus anderen Gründen kombiniert werden soll, übernommen werden.

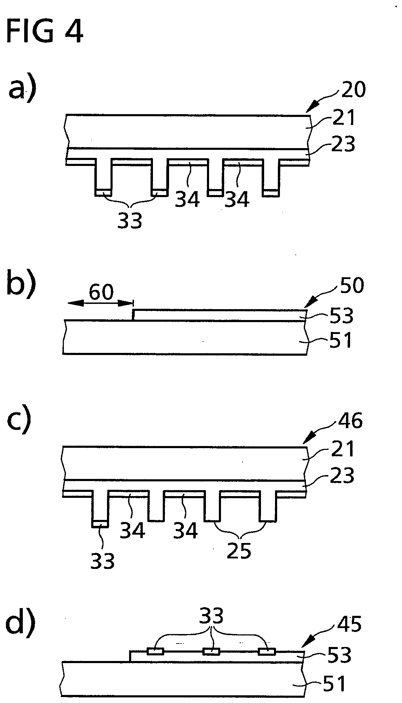

Fig. 4 zeigt einen alternativen Verfahrensablauf des Verfahrens zur Erzeugung eines Mikrostrukturträgers. Diese Verfahrensvariante wird insbesondere dann angewendet, wenn das herzustellende Mikromotiv Bereiche aufweist, die frei von Mikromotivelementen sind (beispielsweise eine Negativschrift), aber kein praktikables Verfahren existiert, um diese Grobstruktur (Primärstruktur) in der Donorfolie vorzubilden. Dies trifft insbesondere für diverse metallische Transferschichten zu. In einem solchen Fall wird eine Donorfolie 20, die beispielsweise aus einem ersten Folienmaterial 21 und einer vollflächigen Prägeschicht 23 besteht, wie in Fig. 4a dargestellt, vollflächig mit einer Transferschicht beschichtet. Die Transferschicht besteht wiederum aus Vertiefungsflächenelementen 34, Erhebungsflächenelementen 33 und, in Fig. 4a nicht dargestellten, Flächenelementen an den Flankenbereichen der Erhebungen der Prägeschicht. Diese Donorfolie 20 wird auf eine Akzeptorfolie 50 aufkaschiert, die nur in Teilbereichen mit einer Klebstoffschicht 53 ausgestattet ist. Eine derartige Akzeptorfolie 50 ist in Fig. 4b dargestellt. Hier ist das Trägerfolienmaterial 51 in dem Bereich 60 frei von einer Klebstoffschicht 53. Der Bereich 60 ist der Bereich, in dem der aus der Akzeptorfolie 50 herzustellende Mikrostrukturträger 45 keine Mikromotivelemente aufweisen soll. Die Donorfolie 20 und die Akzeptorfolie 50 werden, wie oben beschrieben, unter erhöhtem Druck und erhöhter Temperatur miteinander verbunden, und dann wieder voneinander getrennt.

Der Zustand nach der Trennung ist in Fig. 4c und Fig. 4d dargestellt. In dem Bereich, in dem die Akzeptorfolie 50 mit Klebstoff beschichtet war, wurde die Transferschicht von den Erhebungen der Prägestruktur der Donorfolie in die Klebstoffschicht der Akzeptorfolie eingeprägt und übertragen. Der Mikrostrukturträger 45 (Fig. 4d) weist dementsprechend ein Motiv auf, das von den übertragenen Transferschicht-Erhebungsflächenelementen 33 gebildet wird. Der aus der Donorfolie 20 gebildete Mikrostrukturträger 46 (Fig. 4c) weist dementsprechend die komplementäre Mikrostruktur auf, wobei die Mikrostruktur in diesem Fall eine vollflächige Metallisierung mit einer Anordnung von "Löchern" in der Metallisierung ist. Die Löcher befinden sich jeweils an den Stellen der Erhebungsoberflächen 25, von denen die Transferschicht-Erhebungsflächenelemente 33 auf die Akzeptorfolie 50 übertragen wurden.

In Fig. 5 ist ein Verfahrensablauf des Verfahrens dargestellt, der analog zu dem in Fig. 3 dargestellten Verfahrensablauf ist. Im Unterschied zu Fig. 3 soll nun jedoch ein dreifarbiges Motiv hergestellt werden.

Es wird wiederum ausgegangen von einer Donorfolie 20 mit einer Trägerfolie 21, die eine vollflächig geprägte Prägeschicht 23 aufweist. Die Prägestruktur weist Erhebungsoberflächen 25 und Vertiefungsoberflächen 26 auf (Fig. 5a). Die Oberfläche der Prägeschicht 23 wird, gegebenenfalls nach einer haftungsverringernden Vorbehandlung, in einem Teilbereich mit einer ersten Waschfarbe 35 beschichtet, wie in Fig. 5b dargestellt. Ein Bereich 30' bleibt frei von Waschfarbe. Anschließend wird eine erste Metallisierung 30 vollflächig aufgedampft. Die Metallisierung 30 befindet sich lediglich in dem Bereich 30' unmittelbar auf der Oberfläche der Prägeschicht 23, in allen anderen Bereichen aber auf der Waschfarbe 35. In diesen Bereichen kann die Metallisierung 30 nun in bekannter Weise weggewaschen werden, so dass der in Fig. 5c dargestellte Zustand erreicht wird. In Fig. 5b und den nachfolgenden Figuren ist die Beschichtung 30, im Gegensatz zu Fig. 3 und Fig. 4, auch an den Flanken 27 der Erhebungen der Prägestruktur dargestellt.

Die Schritte des teilflächigen Auftragens einer Waschfarbe, des nachfolgenden Metallisierens, sowie des Entfernens der Metallisierung in den Bereichen über der Waschfarbe werden nun so oft wiederholt, wie erforderlich ist, um die gewünschte Mehrfarbigkeit des herzustellenden Motivs zu erzeugen. Im vorliegenden Fall soll ein dreifarbiges Motiv hergestellt werden. Es muss also insgesamt dreimal teilflächig mit Waschfarbe beschichtet werden, vollflächig eine Metallisierung aufgetragen werden, und die Metallisierung in den über der Waschfarbe liegenden Bereichen wieder entfernt werden. Zunächst wird (Fig. 5d) eine Waschfarbe 36, die mit der vorherigen Waschfarbe 35 identisch sein kann oder nicht, teilflächig auf die Oberfläche der Prägeschicht 23 aufgetragen, wobei sie teilweise auch die Metallisierung 30 bedeckt. Ein Teilbereich 31' der Oberfläche bleibt frei. Anschließend wird eine zweite Metallisierung 31 aufgedampft, wobei sich der in Fig. 5d gezeigte Zustand ergibt. Nach dem Abwaschen der Waschfarbe 36 und der über der Waschfarbe liegenden Bereiche der Metallisierung 31 erhält man die in Fig. 5e gezeigte Folie, die in einem Teilbereich mit einer ersten Metallisierung 30 beschichtet ist, und in einem anderen Teilbereich mit einer zweiten Metallisierung 31 beschichtet ist.

Nun wird, wie in Fig. 5f gezeigt, eine dritte Waschfarbe 37 aufgetragen, die mit den Waschfarben 35, 36 identisch sein kann oder nicht. Ein Teilbereich 32' der Oberfläche der Prägeschicht 23 bleibt frei von der Waschfarbe 37. Anschließend wird eine dritte Metallisierung 32 aufgetragen, und dann in dem Bereich, der über der Waschfarbe 37 liegt, zusammen mit der Waschfarbe wieder entfernt. Dabei ergibt sich die in Fig. 5g dargestellte Donorfolie mit einer Transferschicht, die aus drei unterschiedlichen Metallen, typischerweise mit verschiedener Farbe, aufgebaut ist. In dem Bereich 38 weist die Transferschicht eine Lücke auf. In diesem Bereich war die Trägerfolie 21 bei den vorangegangenen Metallisierungen stets von einer Waschfarbe bedeckt, so dass die Metallisierung immer wieder zusammen mit der Waschfarbe abgewaschen wurde.

Mit Hilfe dieser Donorfolie soll nun in einer Akzeptorfolie eine mehrfarbige Mikromotivschicht erzeugt werden. Eine geeignete Akzeptorfolie 50 weist eine Trägerfolie 51 auf, die an einer Hauptfläche 52 vollflächig mit einer Klebstoffschicht 53 beschichtet ist (Fig. 5h). Zur besseren Erkennbarkeit des nun folgenden Übertragungsvorgangs ist die Donorfolie 20 unmittelbar unter der Akzeptorfolie 50 nochmals dargestellt. Wie aus Fig. 5i ersichtlich, besitzt die Donorfolie 20 Bereiche 28 mit Transferschicht und einen Bereich 29 ohne Transferschicht. Nach dem Kaschieren der Donorfolie 20 und der Akzeptorfolie 50 und der darauf folgenden Trennung der Folien zur Übertragung der Transferschicht erhält man aus der Akzeptorfolie 50 den in Fig. 5j gezeigten Mikromotivträger 45, und aus der Donorfolie 20 den in Fig. 5k gezeigten Mikromotivträger 46. Der Mikromotivträger 45 weist wiederum ein Motiv auf, das von den übertragenen Transferschicht-Erhebungsflächenelementen gebildet wird. Der hier dargestellte Mikromotivträger 45 weist die Besonderheit auf, dass er unterschiedliche Ansichten zeigt, je nach dem, von welcher Seite er betrachtet wird. Aus der in Fig. 5j mit dem Pfeil bezeichneten Betrachtungsrichtung sieht der Betrachter ein lediglich zweifarbiges Motiv (Mikromotivelemente 30, 32), aus der entgegengesetzten Betrachtungsrichtung aber ein dreifarbiges Motiv (Mikromotivelemente 30, 31, 32). Dies ist dadurch bedingt, dass ein Teil der Mikromotivelemente (die drei rechten Mikromotivelemente in Fig. 5j) "doppellagig" ist, da hier eine zweifache Metallisierung vorgenommen wurde.

Der aus der Donorfolie 20 gebildete Mikrostrukturträger 46 weist die zu dem Mikromotivträger 45 komplementäre Mikrostruktur auf, d.h. die Erhebungsoberflächen 25 sind nun alle transferschichtfrei, während die Transferschicht-Vertiefungsflächenelemente 34 sowie die Transferschichtflächenelemente an den Flanken der Erhebungen unverändert vorhanden sind. Die "Negativschrift" des nicht metallisierten Bereichs 29 ist natürlich in beiden Mikrostrukturträgern 45, 46 vorhanden. Es soll darauf hingewiesen werden, dass die auf dem Mikrostrukturträger 46 verbleibende Transferschicht an den Flanken der Erhebungen tatsächlich wesentlich dünner ist als in Fig. 5k dargestellt.

Fig. 6 veranschaulicht einen Verfahrensablauf wie bei Fig. 4, jedoch mit dem Unterschied, dass ein dreifarbiges Mikromotiv erzeugt werden soll, wie bei Fig. 5. Wie in Fig. 6a dargestellt, wird wiederum eine Trägerfolie 21 mit einer Prägeschicht 23 mit einer vollflächigen Prägung versehen, wobei die Prägung Erhebungsoberflächen 25, Vertiefungsoberflächen 26 und Flanken 27 der Erhebungen aufweist. Diese Prägestruktur wird vollflächig mit einer Transferschicht aus einem ersten Metall 30 beschichtet, wobei die Beschichtung aus Erhebungsflächenelementen 33, Vertiefungsflächenelementen 34 und Flächenelementen an den Flanken 27 der Erhebungen besteht. Ein weiteres Folienmaterial 51 wird an einer seiner Hauptflächen 52 mit einer Klebstoffschicht 53 beschichtet. Die Beschichtung erfolgt jedoch nur teilflächig, wie in Fig. 6b dargestellt, so dass es Bereiche 56 mit Klebstoff und Bereiche 60 ohne Klebstoff gibt. Die Donorfolie aus Fig. 6a und die Akzeptorfolie aus Fig. 6b werden dann zu einem Folienverbund verklebt, wobei die Verklebung lediglich in dem Bereich 56 der Akzeptorfolie 50 stattfinden kann. In diesem Bereich werden die Erhebungsflächenelemente 33 der Transferschicht 30 in den Klebstoff 53 eingeprägt und mit ihm verklebt. In Fig. 6 sind die übertragenen Flächenelemente der Transferschicht jeweils auf einer Oberfläche der Klebstoffschicht dargestellt. Tatsächlich können sie in mehr oder weniger starkem Umfang, abhängig vom Druck bei der Kaschierung, in die Klebstoffschicht eingeprägt sein. Fig. 6c zeigt den Zustand der Akzeptorfolie 50 nach der Trennwicklung.

In weiteren Beschichtungs- und Kaschierungsschritten werden nun Mikromotivelemente aus weiteren Metallen aufgebracht. Dabei ergibt sich das Problem, dass die Klebstoffschicht 53 nach der Trennwicklung in allen Bereichen, in denen sie nicht mit dem Metall 30 verklebt ist, nach wie vor potentiell klebrig ist, zumindest unter Kaschierungsbedingungen, d.h. unter erhöhtem Druck und gegebenenfalls erhöhter Temperatur. Daher könnte auf diese Klebstoffschicht bei einem weiteren Übertragungsschritt unkontrolliert Transferschichtmaterial übertragen werden. Bei allen Verfahrensvarianten, die eine mehrmalige Übertragung von Transferschicht-Flächenelementen auf eine Akzeptorfolie beinhalten, werden daher bevorzugt Maßnahmen getroffen, um die jeweils vorhergehende Klebstoffschicht zu deaktivieren. Dafür stehen im Wesentlichen zwei Maßnahmen zur Verfügung, nämlich eine Veränderung der Klebstoffschicht selbst einerseits und eine Abdeckung der Klebstoffschicht andererseits. Eine Veränderung der Klebstoffschicht selbst in der Weise, dass sie bei weiteren Übertragungsschritten völlig inaktiv bleibt, ist eine bevorzugte Vorgehensweise bei Klebstoffschichten, die durch Vernetzung hinreichend deaktiviert werden können. Die Deaktivierung durch Vernetzung erfolgt bevorzugt vor dem Aufbringen weiterer Klebstoffschichten. Alternativ kann die Klebstoffschicht durch eine nicht klebende Abdeckschicht daran gehindert werden, sich an weiteren Übertragungen zu beteiligen. Bei der Wahl derartiger Abdeckschichten muss darauf geachtet werden, dass sie die Schichten, auf denen sie aufgebracht werden, nicht zu stark anlösen.

In Fig. 6 ist die Verfahrensvariante mit Abdeckschichten dargestellt. Fig. 6d zeigt die Akzeptorfolie 50 nach dem ersten Übertragungsschritt (Fig. 6c), und bereits vorbereitet für den nächsten Übertragungsschritt. Die Akzeptorfolie ist mit einer Abdeckschicht 65 beschichtet, und darauf befindet sich ein weiterer Klebstoff 54, der nur teilflächig aufgetragen ist, beispielsweise in Form eines makroskopischen Motivs. Es ergeben sich somit wiederum Bereiche 57 mit Klebstoffschicht und Bereiche 61 ohne Klebstoffschicht 54. Eine weitere Donorfolie 20 wird, wie in Fig. 6e dargestellt, mit einer weiteren Transferschicht 31 vollflächig beschichtet. Bei der Transferschicht 31 kann es sich ebenfalls um ein Metall handeln oder um irgendeine andere Beschichtung. Die Beschichtung 31 wird nun auf die Akzeptorfolie von Fig. 6d übertragen, wie vorher im Zusammenhang mit Fig. 6a und Fig. 6b erläutert. Dabei erhält man die in Fig. 6f dargestellte Akzeptorfolie. Um die Klebstoffschicht 54 zu deaktivieren, wird nun erneut eine Abdeckschicht 66 aufgetragen (Fig. 6g). Auf die Abdeckschicht 66 wird dann eine dritte Klebstoffschicht 55 teilflächig aufgetragen (Fig. 6i), so dass sich klebende Bereiche 58 und nicht klebende Bereiche 62 ergeben. Auf diese Akzeptorfolie 50 wird erneut Transferschichtmaterial in Form von Mikromotivelementen übertragen. Dazu wird die in Fig. 6h dargestellte Donorfolie 20 verwendet, die sich von den in Fig. 6a und Fig. 6e dargestellten Donorfolien lediglich durch die Art der Transferbeschichtung unterscheidet.

In Fig. 6I ist der fertige Mikromotivträger 45, der nach dem Transfer der Transferschicht 32 und Abdeckung mit der Abdeckschicht 67 aus der Akzeptorfolie 50 erhalten wurde, dargestellt. Fig. 6k zeigt den Mikrostrukturträger 46, der aus der in Fig. 6h dargestellten Donorfolie 20 erhalten wurde. Im Unterschied zu der in Fig. 5 dargestellten Verfahrensvariante erhält man bei der Verfahrensvariante gemäß Fig. 6 keinen Mikrostrukturträger aus der Donorfolie 20, der dem Mikrostrukturträger 45 genau komplementär ist. Man erhält vielmehr mehrere Mikrostrukturträger 46, die zu dem Mikrostrukturträger 45 jeweils teilweise komplementär sind.

Anders als bei der Verfahrensvariante gemäß Fig. 5 wird hier auch ein Mikrostrukturträger 45 erhalten, der bei Betrachtung von oben und bei Betrachtung von unten jeweils gleiche Ansichten zeigt. Wenn ein Mikrostrukturträger 45 (Fig. 6I) hergestellt werden soll, der verschiedene Ansichten bietet, wie der in Fig. 5j dargestellte Mikrostrukturträger, dann muss die Donorfolie 20 in Fig. 6e mit einer doppellagigen Transferschicht ausgestattet werden, d.h. auf oder unter der Transferschicht 31 muss eine Transferschicht 32 vorgesehen werden. Überlappen sich die Mikromotivelemente 30, 31, 32 verschiedener Übertragungsebenen teilweise, so führt dies ebenfalls zu unterschiedlichen Ansichten bei Betrachtung von oben bzw. bei Betrachtung von unten.

Bei der in Fig. 6 dargestellten Verfahrensvariante kann keine so exakte Passerung der Motive erreicht werden, wie bei der in Fig. 5 dargestellten Verfahrensvariante. Es ist daher bevorzugt, die einzelnen Klebstoffschichten 53, 54, 55 nicht überlappen zu lassen, da im Überlappungsbereich insbesondere bei Einsatz des Mikrostrukturträgers als Motivschicht einer mikrooptischen Moire-Vergrößerungsanordnung Motivsprünge bzw. eine Überlagerung der Motive zu erwarten ist. Diesen Nachteil kann man allerdings auch zu einem Vorteil umgestalten, und durch die Schaffung unterschiedlicher Fokusebenen zusätzliche Effekte erzeugen. So ist insbesondere bei der Wahl unterschiedlicher Motivraster eine registergenaue Überlagerung in der Regel nicht erforderlich.

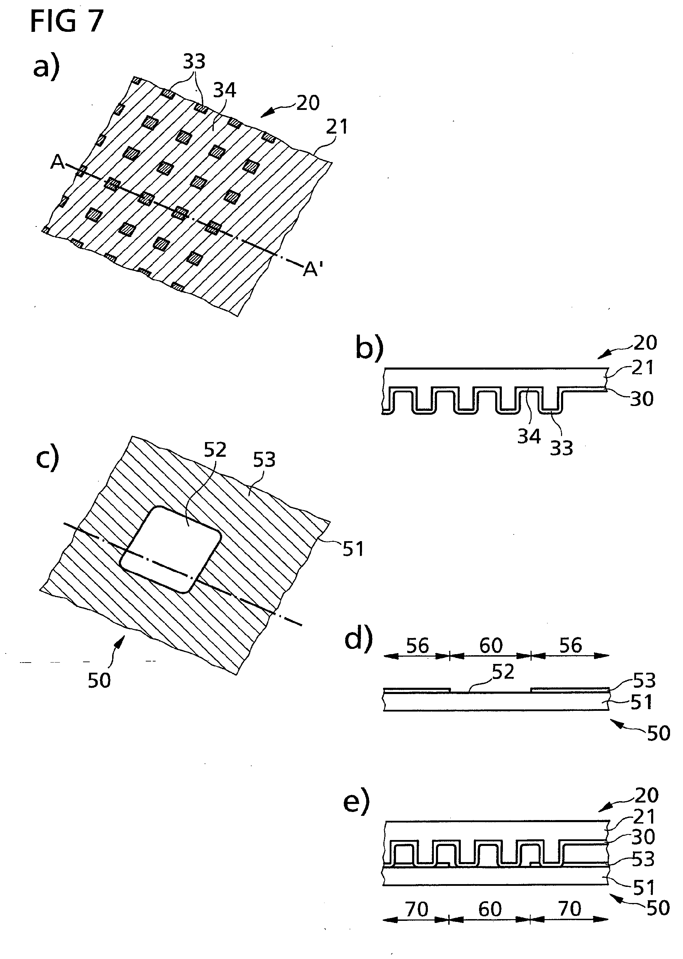

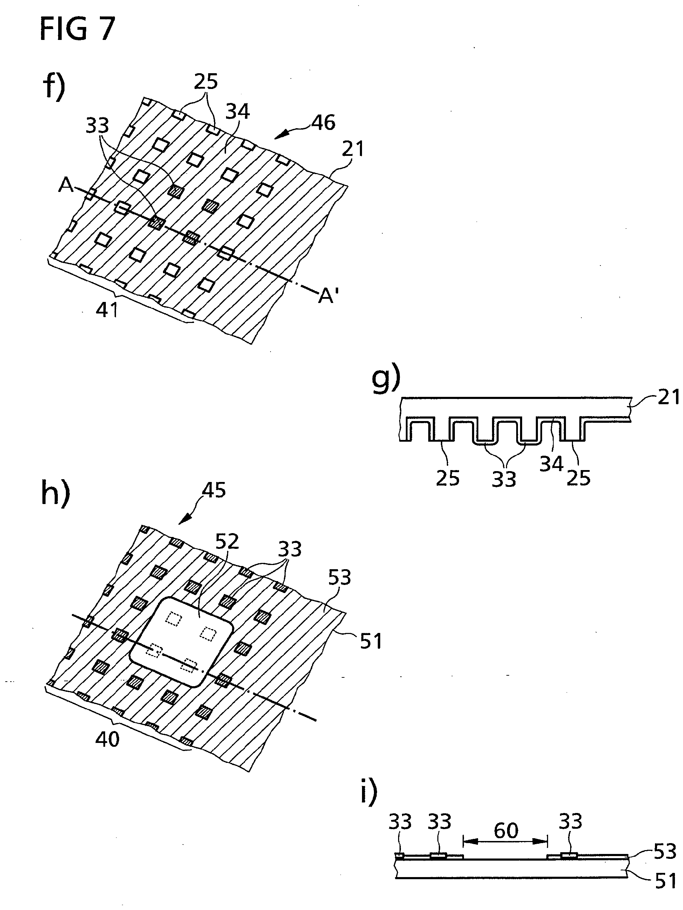

Zur besseren Veranschaulichung des Verfahrens werden in Fig. 7 jeweils Schnittansichten von Donorfolie 20 und Akzeptorfolie 50 den entsprechenden Ansichten in Aufsicht gegenübergestellt. Dargestellt wird im Prinzip eine Verfahrensvariante gemäß Fig. 4. Fig. 7a zeigt eine Aufsicht auf eine Donorfolie 20, quasi "von unten". Die Trägerfolie 21 ist hier direkt geprägt, d.h. es gibt keine separate Prägeschicht, und die Prägung besteht hier der einfacheren Darstellbarkeit halber in einer regelmäßigen Anordnung von Rechtecken, die Erhebungen bilden. Es versteht sich, dass die Prägung in Gestalt beliebiger Muster, Zeichen oder Codierungen ausgebildet sein kann. Die Donorfolie 20 ist mit einer Beschichtung 30 vollflächig beschichtet, wobei es sich um eine beliebige Beschichtung handeln kann, beispielsweise eine Metallisierung oder eine Druckschicht. In der Aufsicht von unten sieht man die Erhebungsflächenelemente 33 und die Vertiefungsflächenelemente 34 der Beschichtung, d.h. der Transferschicht. Fig. 7b zeigt die Donorfolie 20 der Fig. 7a im Schnitt entlang der Linie A-A'.

Fig. 7c zeigt die Akzeptorfolie 50 in einer Aufsicht von oben. Die Akzeptorfolie 50 ist teilflächig mit einer Klebstoffschicht 53 beschichtet, wobei ein mittiger Bereich 60 in Form eines Rechtecks frei bleibt. In diesem Bereich sieht man auf die Hauptfläche 52 der Trägerfolie 51. Fig. 7d zeigt wiederum einen Schnitt durch die Akzeptorfolie 50 der Fig. 7c.

In Fig. 7e ist der Moment der Kaschierung der beiden Folien 20 und 50 im Schnitt dargestellt. In den mit Klebstoff beschichteten Bereichen 56 der Akzeptorfolie 50 ergeben sich Kontaktbereiche 70 mit der Transferschicht 30 der Donorfolie 20, während sich in dem klebstofffreien Bereich 60 der Akzeptorfolie 50 kein Kontakt mit der Transferschicht 30 ergibt. Dementsprechend findet in dem Bereich 60 auch keine Übertragung statt.

In den Fig. 7f bis 7i ist das Ergebnis der Übertragung dargestellt, wobei Fig. 7f und Fig. 7g den aus der Donorfolie 20 gebildeten Mikrostrukturträger 46 zeigen, und Fig. 7h und Fig. 7i den aus der Akzeptorfolie 50 gebildeten Mikrostrukturträger 45 zeigen. In der Aufsicht auf den Mikrostrukturträger 46 (Fig. 7f) blickt man nun in den vorherigen Kontaktbereichen 70 auf die freien Erhebungsoberflächen 25 der Prägestruktur, während in allen anderen Bereichen nach wie vor die Beschichtung 30 vorhanden ist. Auch in dem Bereich 60 tragen die Erhebungsoberflächen noch die Transferschicht-Erhebungsflächenelemente 33.

Der aus der Akzeptorfolie 50 gebildete Mikrostrukturträger 45 (Fig. 7h) weist nun eine Mikrostruktur 40 auf, die aus den transferierten Transferschicht-Erhebungsflächenelementen 33 besteht. In dem Bereich 60 wurde keine Transferschicht transferiert. Abhängig vom Druck beim Kaschieren kann die Trägerfolie 51 eine leichte Prägung aufweisen, angedeutet durch die gepunkteten Rechtecke. Eine solche Prägung muss jedoch nicht dauerhaft bestehen bleiben und kann gegebenenfalls durch anschließendes Überlackieren ausgeglichen werden, so dass sie für einen Betrachter nicht mehr wahrnehmbar ist. Die auf die Akzeptorfolie 50 transferierten Transferschicht-Erhebungs-flächenelemente 33 stellen typischerweise leicht erhabene Bereiche dar. Dabei ist bemerkenswert, dass das Ausmaß der Erhabenheit meist größer ist als die Schichtdicke der Transferschicht-Erhebungsflächenelemente 33. Ohne an diese Erklärung gebunden zu sein, ist hierfür vermutlich eine leichte Quellung der Klebstoffschicht in diesen Bereichen im Zuge des Transferverfahrens verantwortlich. Die Mikrostruktur 40 und die Mikrostruktur 41 des Mikrostrukturträgers 46 sind zu einander komplementär.

Ein völlig identisches Ergebnis kann natürlich erhalten werden, wenn die Akzeptorfolie 50 vollflächig mit Klebstoff beschichtet wird und stattdessen die Transferschicht 30 der Donorfolie 20 nur in einem entsprechenden Teilbereich vorgesehen wird. Eine Aufbringung der Transferschicht in Motivform ist jedoch nicht bei allen Transferschichtmaterialien möglich.

Die Fig. 8 bis 10 zeigen beispielhafte Ausführungsformen, bei denen die Prägestruktur der Donorfolie 20 zusätzlich mit einer weiteren, feineren Strukturierung kombiniert ist. Eine derartige Tertiärstruktur wird am Beispiel von diffraktiven Mikroreliefstrukturen, die eine holographische Information tragen, dargestellt. Natürlich sind auch andere Tertiärstrukturen, beispielsweise Subwellenlängengitter oder Nanostrukturen, insbesondere Mottenaugenstrukturen, möglich.

Fig. 8 zeigt eine Donorfolie 20 mit geprägter Trägerfolie 21 und einer vollflächig aufgetragenen Transferschicht. Die Prägestruktur der Trägerfolie 21 weist Vertiefungsoberflächen 26 ohne zusätzliche Tertiärstruktur und Erhebungsoberflächen 81 mit einer Hologrammstruktur auf. Durch die Hologrammstruktur wird auch die Transferschicht entsprechend strukturiert, so dass sie Erhebungsflächenelemente 33 aufweist, die zumindest an der an die Erhebungsoberfläche 81 angrenzenden Oberfläche ebenfalls eine Hologrammstruktur aufweisen. An der entgegengesetzten Oberfläche kann eine Hologrammstruktur vorhanden sein oder nicht, je nach Transferschichtmaterial. Aufgedruckte Transferschichten haben typischerweise eine glatte Oberfläche, während aufgedampfte Metallisierungen die Hologrammstruktur des Untergrunds übernehmen. Die Transferschicht-Vertiefungsflächenelemente 34 weisen im Ausführungsbeispiel glatte Oberflächen auf.

Nach einer hier nicht dargestellten Variante können zusätzlich auch die Vertiefungsoberflächen mit der gleichen oder einer anderen Tertiärstruktur versehen sein.

Von der Donorfolie 20 werden die Transferschicht-Erhebungsflächenelemente 33 mit zusätzlicher Hologrammstruktur auf eine Akzeptorfolie 50 übertragen. Dadurch wird aus der Akzeptorfolie 50 ein Mikromotivträger 45 mit einem Mikromotiv 40. Das Mikromotiv 40 weist eine Primärstruktur auf, die entweder durch den Auftragungsbereich der Transferschicht oder durch den Auftragungsbereich der Klebstoffschicht der Akzeptorfolie bestimmt wird, außerdem eine Sekundärstruktur, die durch das Prägemotiv der Trägerfolie 21 bestimmt wird, und darüber hinaus eine Tertiärstruktur in Form eines Hologramms. Der Mikromotivträger 45 kann dann mit einer Mikromotiv-Betrachtungseinrichtung, beispielsweise mit Mikrolinsen, zu einer mikrooptischen Darstellungsanordnung kombiniert werden, beispielsweise wie in Fig. 11 gezeigt.

Gemäß einer alternativen Variante, die beispielhaft in Fig. 9 dargestellt ist, werden nicht die Erhebungsoberflächen 25, sondern die Vertiefungsoberflächen der Prägestruktur einer Trägerfolie 21 einer Donorfolie 20 mit einer Tertiärstruktur ausgestattet. Dementsprechend sind die Erhebungsflächenelemente 33 der Transferschicht im Ausführungsbeispiel glatt, während die Vertiefungsflächenelemente 34 der Transferschicht die Hologrammstruktur der Vertiefungsoberfläche 83 der Prägung in einer strukturierten Oberfläche 84 wiedergeben können. In diesem Fall werden die glatten Erhebungsflächenelemente 33 der Transferschicht auf eine Akzeptorfolie 50 übertragen, und der aus der Donorfolie 20 erzeugte Mikrostrukturträger 46 wird zur Bereitstellung einer Motivschicht mit Hologrammstruktur beispielsweise in einer mikrooptischen Darstellungsanordnung verwendet. Natürlich kann auch zusätzlich der Mikrostrukturträger 45 aus der Akzeptorfolie 50 als Mikromotivträger in einer mikrooptischen Darstellungsanordnung dienen.

Alternativ können sowohl die Vertiefungsoberflächen als auch die Erhebungsoberflächen der Prägestruktur mit einer Hologrammstruktur oder irgendeiner anderen Tertiärstruktur ausgestattet werden.

Fig. 10 zeigt eine weitere Variante, bei der die Erhebungen der Prägestruktur und die Vertiefungen der Prägestruktur einer Donorfolie 20 kein regelmäßiges Muster aufweisen. In diesem Ausführungsbeispiel weisen die Erhebungsoberflächen 25 der Prägestruktur keine Tertiärstruktur auf, während die Vertiefungsoberflächen mit unterschiedlichen Tertiärstrukturen ausgestattet sind. Die Transferschicht 30, bei Fig. 10 eine Metallisierung, besitzt demnach nicht tertiärstrukturierte Erhebungsflächenelemente 33, nicht tertiärstrukturierte Vertiefungsflächenelemente 34 sowie unterschiedlich tertiärstrukturierte Vertiefungsflächenelemente 84', 84", 84'''. Nach dem Transfer der Erhebungsflächenelemente 33 auf eine Akzeptorfolie 50 kann der aus der Donorfolie 20 entstehende Mikrostrukturträger 46 als Sicherheitselement verwendet werden.

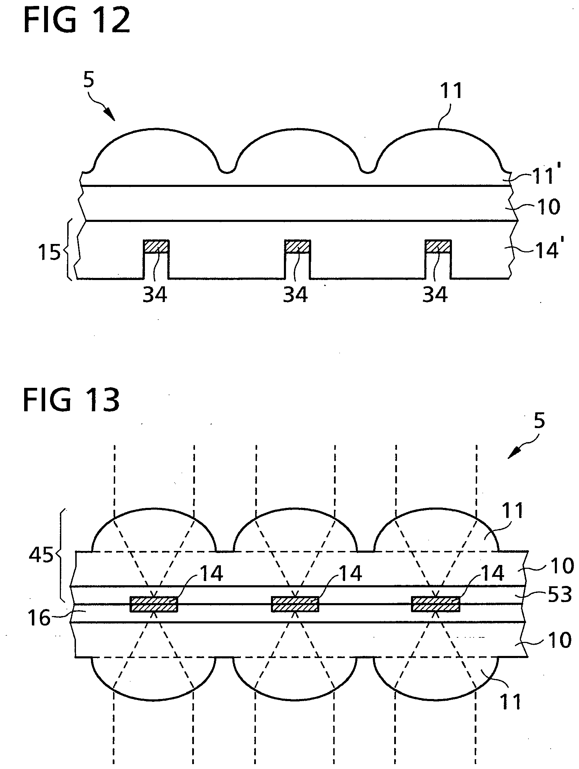

Die Fig. 11 und 13 zeigen Schnitte durch mikrooptische Darstellungsanordnungen für Sicherheitselemente. In Fig. 11 ist eine Moire-Vergrößerungsanordnung eines Sicherheitselements 5 dargestellt, bei der die Mikromotivelemente von einem Mikromotivträger 45 bereitgestellt werden, wie er beispielsweise durch den Transfer der tertiärstrukturierten Erhebungsflächenelemente 33 der in Fig. 8 dargestellten Donorfolie 20 auf eine Akzeptorfolie 50 erhalten wird. Der Mikrostrukturträger 45 weist eine Trägerfolie 51 und eine Klebstoffschicht 53 auf, auf die die Mikromotivelemente übertragen sind. Die Kaschierung mit dem mit Mikrolinsen 11 versehenen Trägermaterial 10 kann mithilfe einer zusätzlichen, hier nicht dargestellten Klebstoffschicht erfolgen. Das Mikromotiv wird betrachtet durch die Mikrolinsen 11, durch die ein Betrachter das Prägemotiv vergrößert wahrnimmt. Bei Betrachtung von der entgegengesetzten Seite her nimmt der Betrachter das holographische Bild wahr. Da die Abmessungen des Mikromotivs, d.h. der Mikromotivelemente und der Abstände dazwischen, unterhalb der Auflösungsgrenze des menschlichen Auges liegen, nimmt der Betrachter das holographische Bild als völlflächiges Bild wahr.

Fig. 13 zeigt eine Ausführungsform einer weiteren mikrooptischen Darstellungsanordnung, bei der an beiden Seiten der Mikromotivschicht Mikrolinsen 11 zur Betrachtung des Mikromotivs angebracht sind. Die Mikromotivelemente 14 bestehen bei dieser Ausführungsform aus Transferschicht-Erhebungsflächenelementen, wie sie beispielsweise in Fig. 5j dargestellt sind (die drei in der Zeichnung rechts dargestellten Mikromotivelemente aus den Metallisierungen 31 und 32). Diese Mikromotivelemente 14 können auf einer Donorfolie 20 vorbereitet werden, wie in Fig. 5 beschrieben, und dann auf eine Akzeptorfolie 50 übertragen werden. Bei der in Fig. 13 dargestellten Ausführungsform ist die Akzeptorfolie 50 gleichzeitig der Mikrolinsenträger. Die Akzeptorfolie 50 besteht daher aus dem Mikrolinsenträgermaterial 10, den Mikrolinsen 11, und einer Klebstoffschicht 53, auf die die Mikromotivelemente 14 aufgeklebt werden. Mittels der Klebstoffschicht 16 wird dann ein weiterer Mikrolinsenträger 10 mit Mikrolinsen 11 aufgeklebt. Ein Betrachter sieht dann aus den beiden möglichen Betrachtungsrichtungen jeweils Moire-vergrößerte Mikromotivelemente, wobei die Motive gleich oder verschieden sein können.

Erfindungsgemäß ist es bevorzugt, als Trägerfolien Folien zu verwenden, in die die mikrooptischen Betrachtungselemente wie Mikrolinsen bereits eingeprägt sind. Dabei kann die Trägerfolie sowohl als Donorfolie wie auch als Akzeptorfolie wirken. Eine besonders bevorzugte Ausführungsform einer erfindungsgemäßen mikrooptischen Darstellungsanordnung für ein Sicherheitselement 5 ist in Fig. 12 dargestellt. Bei dieser Ausführungsform wird die mikrooptische Darstellungsanordnung hergestellt aus einer Trägerfolie 10, die an ihren beiden entgegengesetzten Oberflächen (Hauptflächen) mit Schichten 11', 14' aus einem Prägelack beschichtet ist. In die Prägelackschicht 11' werden zunächst Mikrolinsen 11 eingeprägt, anschließend werden in die Prägelackschicht 14' Mikrostrukturen eingeprägt, wobei in den Vertiefungen der Mikrostrukturen die späteren Mikromotivelemente gebildet werden, d.h. die Prägelackschicht 14' bildet die spätere Mikromotivschicht 15. Nach der Prägung der Mikrolinsen und der Mikrostrukturen wird auf den Mikrostrukturen eine Transferschicht ausgebildet. Die Vorgehensweise ist beispielsweise in Zusammenhang mit den Figuren 3 und 4 beschrieben. Anschließend wird auf die Transferschicht eine mit einer Klebstoffschicht beschichtete Akzeptorfolie aufkaschiert, und die beiden Folien anschließend wieder voneinander getrennt, beispielsweise durch Trennwicklung. Dabei verbleiben die Transferschicht-Erhebungsflächenelemente auf der Akzeptorfolie, während die Transferschicht-Vertiefungsflächenelemente 34 in den Vertiefungen der Mikrostruktur zurückbleiben und die Mikromotivelemente bilden. Dieser Zustand ist in Fig. 12 dargestellt. Bei der in Fig. 12 dargestellten Ausführungsform wird die mit Mikrolinsen ausgestattete Folie also als Donorfolie verwendet.

Alternativ ist es auch möglich, zuerst in der Prägelackschicht 14' die Mikrostrukturen auszubilden und danach in der Prägelackschicht 11' die Mikrolinsen 11 auszubilden. Gemäß weiteren Alternativen können die Mikrolinsen und/oder die Mikrostrukturen auch unmittelbar in eine prägbare Trägerfolie eingeprägt werden. Gemäß weiteren Alternativen kann auch zuerst die Mikrostruktur geprägt werden, dann auf der Mikrostruktur die Transferbeschichtung ausgebildet und die Transferschicht-Erhebungsflächenelemente mittels einer Akzeptorfolie entfernt werden, und erst dann die Mikrolinsen an der entgegengesetzten Seite der Folie eingeprägt werden oder auf die entgegengesetzte Seite der Folie aufkaschiert werden. Gemäß weiteren möglichen Alternativen kann die mit Mikrolinsen ausgestattete Folie auch als Akzeptorfolie verwendet werden, d.h. die an einer Hauptfläche mit Mikrolinsen ausgestattete Folie wird an der entgegengesetzten Hauptfläche mit einer Klebstoffschicht beschichtet, und auf diese Klebstoffschicht werden von einer Donorfolie Transferschicht-Erhebungsflächenelemente dergestalt transferiert, dass sie die Mikromotivelemente der mikrooptischen Betrachtungseinrichtung bilden.

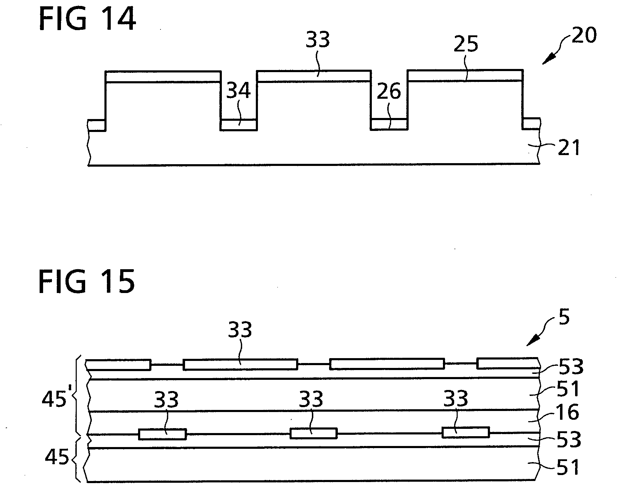

Die erfindungsgemäßen Mikrostrukturträger können nicht nur die Mikromotivschicht einer mikrooptischen Darstellungsanordnung bereitstellen, sondern auch die Mikromotivbetrachtungseinrichtung. Eine derartige Mikromotivbetrachtungseinrichtung, bzw. eine Vorstufe davon, ist in Fig. 14 dargestellt. Eine Donorfolie 20 besteht aus einer transparenten Trägerfolie 21 mit einer Prägestruktur, die Erhebungsoberflächen 25 und Vertiefungsoberflächen 26 aufweist. Darauf befindet sich eine opake Transferschicht, die Erhebungsflächenelemente 33 und Vertiefungsflächenelemente 34 aufweist. Werden die Erhebungsflächenelemente 33 auf eine Akzeptorfolie 50 übertragen, erhält man aus der Akzeptorfolie 50 einen Mikrostrukturträger 45', dessen Mikrostruktur eine Lochmaske bildet, die anstelle von Mikrofokussierelementen als ein alternatives Betrachtungselement eingesetzt werden kann. Ein Vorteil einer derartigen Lochmaske ist, dass kein definierter Fokus-Abstand erforderlich ist, was bei Mikrolinsen 11 oft ein gewisses Problem darstellt.

Fig. 15 zeigt, wie der aus dem Transfer der Erhebungsflächenelemente 33 der Donorfolie 20 von Fig. 14 auf die Akzeptorfolie 50 erhaltene Mikrostrukturträger 45' mit einem weiteren Mikrostrukturträger 45 zu einem Sicherheitselement 5 mit Moire-Vergrößerungsanordnung kombiniert werden kann. Der Mikrostrukturträger 45 ist beispielsweise ein Mikromotivträger, wie er in Fig. 3f und Fig. 4d dargestellt ist. Die beiden erfindungsgemäßen Mikrostrukturträger 45 und 45' sind mittels einer Klebstoffschicht 16 miteinander verklebt.

In Fig. 16 ist ein Verfahrensablauf des Verfahrens zur Erzeugung eines erfindungsgemäßen Mikrostrukturträgers (analog der Darstellung in Fig. 4) dargestellt, wobei die gebildeten Mikrostrukturen dazu verwendet werden, mit Hilfe von Photoresistmaterialien weitere Mikrostrukturen auszubilden. Fig. 16a entspricht der Darstellung in Fig. 4c, und Fig. 16b entspricht der Darstellung in Fig. 4d. Der aus einer Donorfolie gebildete Mikrostrukturträger 46 weist eine Mikrostruktur aus Erhebungsflächenelementen 33 und Vertiefungsflächenelementen 34 auf, und der aus einer Akzeptorfolie gebildete Mikrostrukturträger 45 weist eine Mikrostruktur aus transferierten Erhebungsflächenelementen 33 auf. Bevorzugt handelt es sich bei den Mikrostrukturen um metallische Mikrostrukturen.

Die Figuren 16c, e und g zeigen, wie der Mikrostrukturträger 46 mit Hilfe eines negativ arbeitenden Photoresists oder einer anderen durch Bestrahlung vernetzbaren Zusammensetzung, beispielsweise mit Hilfe eines UVvernetzbaren Lackes, mit einer zusätzlichen oder alternativen Mikrostruktur ausgestattet werden kann. Die Figuren 16d, f und h zeigen, wie der Mikrostrukturträger 45 mit Hilfe eines negativ arbeitenden Photoresists oder einer anderen strahlenvernetzbaren Zusammensetzung mit zusätzlichen oder alternativen Mikrostrukturen ausgestattet werden kann. Zu diesem Zweck wird der Mikrostrukturträger 46 mit einem Photoresist 42 (oder einer analog arbeitenden Zusammensetzung) beschichtet, und der Mikrostrukturträger 45 wird mit einem Photoresist 43 beschichtet, wie in den Figuren 16c und 16d dargestellt. Anschließend wird mit Licht einer geeigneten Wellenlänge bestrahlt, wobei die Bestrahlung jeweils durch die mit L bezeichneten Pfeile angedeutet ist. Es ist ersichtlich, dass die Mikrostrukturen als Bestrahlungsmaske für die Bestrahlung der Resistschicht wirken. Im Prinzip könnte auch die entgegengesetzte Oberfläche der Trägerfolie 21 bzw. 51 mit Photoresist 42 bzw. 43 beschichtet werden, wobei dann entsprechend von der entgegengesetzten Seite her bestrahlt werden müsste, damit die Mikrostrukturen als Bestrahlungsmaske wirken können. Wegen der größeren Entfernung zwischen Mikrostrukturen und Photoresist wird auf diese Weise jedoch ein weniger präzises Ergebnis erzielt als bei der Auftragung des Photoresists unmittelbar auf die Mikrostrukturen.

Durch die Bestrahlung vernetzt der Photoresist in den bestrahlten Bereichen und wird dadurch schwerlöslich, während er in den abgeschirmten Bereichen leicht löslich bleibt. Die nicht vernetzten, leicht löslichen Bereiche können daher mit einem geeigneten Lösungsmittel abgewaschen werden, wobei der in den Figuren 16e und 16f dargestellte Zustand erreicht wird. Fig. 16f zeigt einen erfindungsgemäßen Mikrostrukturträger mit einer komplementären Mikrostruktur gemäß Anspruch 1. Hier liegen Mikrostrukturen 44 bzw. 47 aus Resistmaterial neben den ursprünglichen Mikrostrukturen aus Metall vor. Die ursprünglichen metallischen Mikrostrukturen und die Mikrostrukturen aus Resistmaterial sind zueinander komplementär. Auf diese Weise lassen sich insbesondere durch Verwendung farbiger Resistmaterialien interessante Effekte erzielen.

Die Figuren 16g und 16h zeigen die Mikrostrukturträger 46 und 45 nach dem Wegätzen der ursprünglichen metallischen Mikrostrukturen. Die Mikrostrukturträger weisen nun Mikrostrukturen 44 bzw. 47 aus gegebenenfalls farbigem Photoresistmaterial auf, die jeweils zu den ursprünglichen metallischen Mikrostrukturen komplementär sind. Die Mikrostrukturen 44 können gegebenenfalls wie die ursprünglichen Mikrostrukturen auf die Klebstoffschicht einer Akzeptorfolie übertragen werden. Gleiches gilt für die "Kombinationsmikrostruktur" aus metallischen Flächenelementen 33 und Photoresist-Flächenelementen 44, die in Fig. 16e dargestellt ist.

Die Schritte des Waschens und Ätzens können, je nach verwendeten Materialien, ggf. auch gleichzeitig durchgeführt werden.

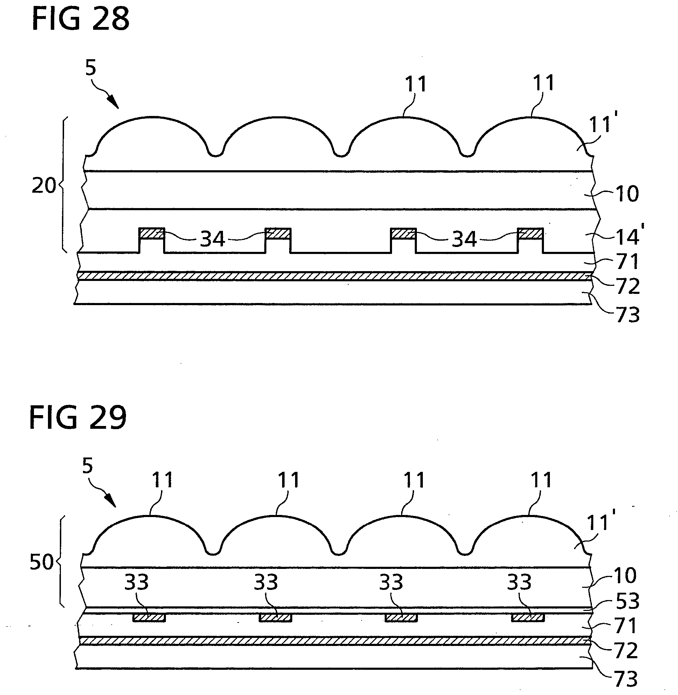

Alternativ zu negativ arbeitenden Photoresistmaterialien können auch positiv arbeitende Photoresistmaterialien verwendet werden. Positiv arbeitende Photoresistmaterialien werden durch Bestrahlung so verändert, dass sie in den bestrahlten Bereichen leichter löslich werden. Wird daher ein Mikrostrukturträger 46 mit einem positiv arbeitenden Photoresist beschichtet, wie es in Fig. 16c für einen negativen Photoresist gezeigt ist, entsteht nach Bestrahlung (wie in Fig. 16c) und Wegwaschen der leichter löslichen Bereiche des Photoresists der in Fig. 16i dargestellte Mikrostrukturträger 46 mit zueinander deckungsgleichen metallischen Mikrostrukturen 33, 34 und Photoresist-Mikrostrukturen 48. In analoger Weise entsteht aus einem Mikrostrukturträger 45 der in Fig. 16j dargestellte erfindungsgemäße Mikrostrukturträger 45 mit metallischen Mikrostrukturen 33 und damit deckungsgleichen Photoresist-Mikrostrukturen 49. Derartige Mikrostrukturen sind, wenn transparente Trägerfolien verwendet werden, von beiden Seiten der Trägerfolie her sichtbar, wobei ein Betrachter jedoch einmal die metallische Mikrostruktur und einmal eine identische, ggf. farbige, Mikrostruktur sieht. Die Mikrostrukturträger werden vorteilhaft an beiden Oberflächen mit Mikrolinsen oder anderen Mikromotiv-Betrachtungselementen ausgestattet, wobei die Hinterlegung mit einem farbigen Photoresist die metallischen Mikrostrukturen besonders brillant erscheinen lässt, wie im Zusammenhang mit den Figuren 28 und 29 noch näher erläutert werden wird.

Wenn das positiv arbeitende Photoresistmaterial nicht wie in den Figuren 16i und 16j gezeigt, an der Seite der metallischen Mikrostrukturen, sondern auf der entgegengesetzten Seite des Trägermaterials aufgetragen wird, und anschließend von der Seite der metallischen Mikrostrukturen bestrahlt wird, werden die mit den metallischen Mikrostrukturen deckungsgleichen Photoresist-Mikrostrukturen dementsprechend an der entgegengesetzten Seite der Trägerfolien ausgebildet. In diesem Fall ist es möglich, die metallischen Mikrostrukturen wegzuätzen, so dass nur noch Photoresist-Mikrostrukturen vorliegen.

Die Mikrostrukturierung von Photoresistmaterialien unter Verwendung metallisierter Bereiche als Belichtungsmaske ist umfassend beschrieben in DE 10 2008 036 481.9. Hinsichtlich geeigneter Materialien und Verfahrensbedingungen sowie der erzielbaren Effekte, wird auf diese Anmeldung Bezug genommen.

Die Figuren 17 bis 27 zeigen "Kombinationssicherheitselemente" bzw. mikrooptische "Kombinations-Darstellungsanordnungen" sowie ihre Herstellung und Wirkungsweise. Mikrooptische Kombinations-Darstellungsanordnungen weisen mindestens eine erste mikrooptische Darstellungsanordnung und eine zweite mikrooptische Darstellungsanordnung auf, die voneinander verschieden sind. Bevorzugt ergänzen sich die erste mikrooptische Darstellungsanordnung und die zweite mikrooptische Darstellungsanordnung zu einem Gesamtmotiv.

Besonders bevorzugt ist es, Darstellungen mit gerichteter Reflexion und stereographische Darstellungen mit Tiefeninformation miteinander zu kombinieren.

Unter "stereographischen Darstellungen mit Tiefeninformation" werden bei der vorliegenden Erfindung Darstellungen verstanden, bei denen ein 3D-Effekt dadurch erzeugt wird, dass dem linken und dem rechten Auge eines Betrachters unterschiedliche Ansichten eines Objekts präsentiert werden, die das Objekt jeweils aus der entsprechenden Richtung betrachtet zeigen. Aus diesen unterschiedlichen Ansichten ergibt sich für einen Betrachter ein dreidimensionaler Eindruck, wie im Zusammenhang mit Fig. 19 erläutert wird. Darstellungen dieser Art können auch mehr als nur zwei unterschiedliche Ansichten bieten, womit sich meist auch eine Parallaxe ergibt, d.h. beim Drehen bzw. Kippen bewegen sich die Bildbestandteile im Vordergrund relativ zu den Bildbestandteilen im Bildhintergrund. Unter Umständen kann man beispielsweise beim Drehen bzw. Kippen auch hinter ein im Vordergrund stehendes Objekt schauen.

Die bekanntesten stereographischen Darstellungen mit absoluter Tiefeninformation sind dreidimensionale Hologramme, beispielsweise die klassischen direktbelichteten Hologramme oder computergenerierte Stereogramme. Weitere Beispiele sind Mikrolinsen-Kippbilder sowie Modulo- und Moiré-Vergrößerungsanordnungen mit "deep"- oder "float"-Effekt, wie sie aus WO 2009/000528 und WO 2005/052650 bekannt sind.

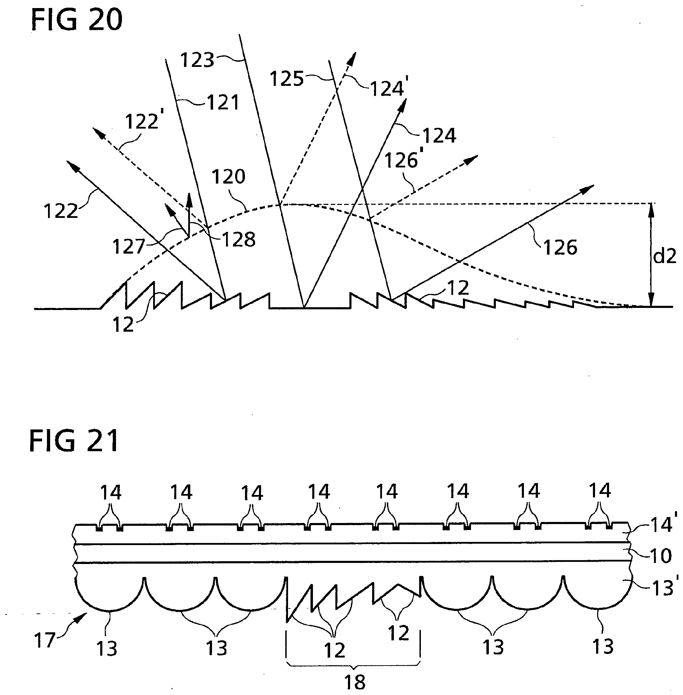

Unter "gerichtet reflektierenden Darstellungen" werden bei der vorliegenden Erfindung insbesondere Darstellungen verstanden, die einem Betrachter durch gerichtete Reflexion eine Wölbung vorgaukeln, aus der sich erst indirekt ein Tiefen- bzw. ein 3D-Eindruck ergibt. Fig. 20 erläutert die Funktionsweise derartiger Darstellungen. Im Unterschied zu den oben genannten stereographischen Darstellungen zeigen die gerichtet reflektierenden Darstellungen keine Parallaxe, und die dargestellten Objekte können nicht ohne weiteres so dargestellt werden, dass sie scheinbar vor oder hinter einer bestimmten Bezugsebene, beispielsweise einer durch ein Sicherheitselement gebildeten Bezugsebene, liegen. Die Darstellungen erlauben insbesondere keine absolute Tiefeninformation, sondern lediglich eine relative "vorne/hinten"-Zuordnung, die im Wesentlichen auf der Erfahrung des Betrachters beruht, der implizit weitere Informationen voraussetzt: Erscheint einem Betrachter eine Fläche nach vorne gewölbt, schließt der Betrachter daraus, dass der mittlere Bereich der gewölbten Fläche aus seiner Perspektive weiter vorne liegen muss als der Randbereich. Überdeckt eine Darstellung A eine andere Darstellung B teilweise, so schließt ein Betrachter daraus, dass das zugehörige Objekt A vor dem Objekt B liegen muss.

Gerichtet reflektierende Darstellungen sind beispielsweise linsenartig gewölbt erscheinende reflektive Fresnelstrukturen (siehe EP 1 570 422 und EP 1 562 758), diffraktive achromatische Elemente mit Wölbeffekt (siehe EP 1 782 108), gewölbt erscheinende Mattstruktur-Gitterbilder und insbesondere Darstellungen auf der Basis von mikroskopischen Sägezahngittern. Mit Hilfe von mikroskopischen Sägezahngittern lassen sich gewölbt erscheinende Darstellungen (PCT/EP 2010/007368), "verrauschte" Darstellungen (PCT/EP 2010/007369) und Darstellungen mit kinematischen Effekten (EP 0 868 313) erzeugen.

Diesen gerichtet reflektierenden Darstellungen ist gemeinsam, dass eine zumindest teilweise verspiegelte und auf größerer Längenskala praktisch ebene Oberfläche das von einem Betrachter stillschweigend vorausgesetzte Gesetz "Einfallswinkel = Reflexionswinkel" auf größerer Längenskala verletzt, beispielsweise indem das einfallende Licht durch Beugungseffekte in vom Betrachter unerwartete Richtungen gebeugt wird oder durch mit bloßem Auge nicht erkennbare Mikrospiegel in vom Betrachter unerwartete Richtungen reflektiert wird.

Gerichtet reflektierende Darstellungen und stereographische Darstellungen haben jeweils ganz charakteristische Eigenschaften und ihr individuelles charakteristisches Erscheinungsbild. Besonders vorteilhaft an gerichtet reflektierenden Darstellungen ist, dass sie beispielsweise den typischen Glanz gewölbter metallischer Oberflächen mit hoher Brillianz nachstellen können, wobei ein Betrachter auf den vorgegaukelten gewölbten metallischen Oberflächen bei entsprechender Ausführung sogar sein eigenes Spiegelbild erkennen kann. Der Vorteil der stereographischen Darstellungen wiederum liegt in der "echten" Dreidimensionalität der Darstellung. Die erfindungsgemäßen Sicherheitselemente vereinigen bevorzugt beide Darstellungsarten, wodurch sich optisch äußerst attraktive Effekte erzielen lassen, die den Sicherheitselementen einen besonders hohen Wiedererkennungswert verleihen und sie schwer nachahmbar machen. Die Mikrostrukturen der stereographischen Darstellungen, und ggf. auch die gerichtet reflektierenden Oberflächen der gerichtet reflektierenden Darstellungen, lassen sich in einfacher Weise mittels des Verfahrens herstellen. Nachfolgend werden kurz einige Ausführungsvarianten mikrooptischer Kombinations-Darstellungsanordnungen für Sicherheitselemente erläutert.

Fig. 17a zeigt das Sicherheitselement 6 von Fig. 1 in Aufsicht. Das Sicherheitselement 6 weist einen ersten Motivteil 7 und einen zweiten Motivteil 8 auf, wobei der erste Motivteil 7 eine stereographische Darstellung ist und der zweite Motivteil 8 eine gerichtet reflektierende Darstellung ist. Ein Schnitt durch das Sicherheitselement 6 ist in Fig. 18 dargestellt.

Wie aus Fig. 18 ersichtlich ist, wird das Sicherheitselement 6 von einer Folie 10 gebildet, die beidseitig mit Prägelackschichten 11', 14' beschichtet ist. In die Prägelackschicht 14' wurde eine Prägestruktur eingeprägt, die Prägestruktur mit einer metallischen Transferschicht beschichtet, und die Transferschicht-Erhebungsflächenelemente dann auf eine Akzeptorfolie transferiert, wie beispielsweise in Zusammenhang mit Fig. 3 und Fig.4 beschrieben. Die Transferschicht-Vertiefungsflächenelemente blieben in den Vertiefungen der Prägestruktur zurück und bilden nun die Mikromotivelemente 14.

In die Prägelackschicht 11' sind zwei unterschiedliche Strukturen eingeprägt, nämlich Mikrolinsen 11 und Facetten 12, wobei die Facetten 12 verspiegelt sind und eine Sägezahnstruktur bilden. Die Mikrolinsen 11 bilden zusammen mit den Mikromotivelementen 14 eine erste mikrooptische Darstellungsanordnung 17, die eine stereographische Darstellung mit Tiefeninformation ist, beispielsweise eine Moire-Vergrößerungsanordnung.

Die Funktionsweise der ersten mikrooptischen Darstellungsanordnung 17 ist schematisch in Fig. 19 erläutert. Betrachtet ein Betrachter die Banknote 1 (Fig. 1), sieht er in Aufsicht auf das Sicherheitselement 6 im ersten Motivteil 7 ein in Fig. 19 punktförmig dargestelltes Objekt, wobei das rechte Auge (RA) das Objekt an einer anderen Stelle sieht als das linke Auge (LA). Mit dem linken Auge sieht der Betrachter die Ansicht des Objekts aus der Richtung 115, während er mit dem rechten Auge die Ansicht aus der Richtung 114 sieht. Folglich nimmt das rechte Auge das Objekt an der Stelle 112 wahr, während das linke Auge das Objekt an der Stelle 113 sieht. Der Betrachter verlängert die Geraden 114 und 115 bis zum Schnittpunkt 116 und schließt daraus, dass sich das dargestellte Objekt in der Tiefe d1 hinter der Ebene der Banknote 1 befindet. Im zweiten Motivteil 8 nimmt der Betrachter eine Darstellung mit gewölbten Oberflächen wahr, im Ausführungsbeispiel ein plastisch geformtes Portrait. Erreicht wird der Effekt durch die Sägezahnstruktur aus verspiegelten Facetten 12 mit unterschiedlicher Gestalt und Anordnung. Die Funktionsweise dieser zweiten mikrooptischen Darstellungsanordnung 18 ist in Fig. 20 erläutert.

Wie in Fig. 20 gezeigt ist, wird der einfallende Lichtstrahl 121 in die Richtung 122 reflektiert, die parallel zur Richtung 122' ist, die der Richtung bei Reflexion an der Oberfläche 120 entspräche. Gleiches gilt für die Lichtstrahlen 123 und 125, die in die Richtungen 124 und 126 reflektiert werden. Diese Richtungen 124 und 126 sind parallel zu den Richtungen 124' und 126', welches die Reflexionsrichtungen bei Reflexion an der Oberfläche 120 wären. Die Facetten 12 sind so bemessen, dass ein Betrachter sie ohne Hilfsmittel nicht auflösen kann. So können die Facetten 12 in Richtung senkrecht zur Zeichenebene Abmessungen von beispielsweise 15 µm und eine Höhe von beispielsweise 5 µm aufweisen.

Aus dem Reflexionsverhalten der zweiten mikrooptischen Darstellungsanordnung 18 schließt ein Betrachter, dass im zweiten Motivteil 8 die gewölbte Oberfläche 120 mit der Tiefe d2 vorliegt, wobei bei der Darstellung eines plastischen Portraits natürlich mehrere gewölbte Oberflächen nachgestellt werden müssen. Für den Lichtstrahl 121 spricht das Reflexionsverhalten dafür, dass die lokale Flächennormale in Richtung 127 verweist, was deutlich verschieden ist zu der tatsächlichen makroskopischen Flächennormalen.

Mittels gerichteter reflektierender Darstellungen können auch kinematische Effekte erzielt werden, beispielsweise indem Darstellungen aus mehreren Sägezahnstruktur-Darstellungen aufgebaut werden, wobei die einzelnen Sägezahnstruktur-Darstellungen jeweils unter verschiedenen Blickwinkeln sichtbar sind. Ein Beispiel hierfür ist in Fig. 17b gezeigt.

Fig. 17b zeigt ein Sicherheitselement 6' in Aufsicht, das einen aus vier Linien 63, 64, 68, 69 bestehenden Stern aufweist. Die Linien 63, 64, 68 und 69 bestehen jeweils aus Sägezahnstrukturen mit Facetten, wobei die Sägezahnstrukturen verschiedene Reliefstrukturen besitzen. Die Parameter der Reliefstrukturen sind so gewählt, dass die Linien 63, 64, 68 und 69 jeweils nur unter bestimmten Blickwinkeln sichtbar sind. Daher ist, wenn das Sicherheitselement 6' gekippt oder gedreht wird, für einen Betrachter jeweils eine andere der Linien 63, 64, 68, 69 sichtbar, was der Betrachter als Bewegungseffekt empfindet. Der Hintergrund des dargestellten Sterns kann beispielsweise durch eine zusätzliche stereographische Darstellung bereichert werden.

Fig. 21 zeigt eine Abwandlung der mikrooptischen Kombinations-Darstellungsanordnung für ein Sicherheitselement, bei der die erste mikrooptische Darstellungsanordnung 17 statt der Mikrolinsen 11 (Fig. 18) Mikrohohlspiegel 13 aufweist, die durch Prägen der Prägelackschicht 13' und Aufbringen einer spiegelnden Beschichtung gebildet sind. Auch die im Ausführungsbeispiel als Facetten 12 ausgebildete zweite mikrooptische Darstellungsanordnung 18 ist in der Prägelackschicht 13' ausgebildet. Die Facetten 12 können in gleicher Weise wie die Mikrohohlspiegel 13 durch Prägen und Verspiegeln hergestellt werden.

Die Mikrostrukturen bzw. Mikromotivelemente 14 können nicht nur im Bereich der ersten mikrooptischen Darstellungsanordnung 17, sondern auch im Bereich der zweiten mikrooptischen Darstellungsanordnung 18 vorgesehen sein. In diesem Fall, und wenn die Mikromotivelemente 14 farbig sind, erscheint die gewölbte spiegelnde Oberfläche, die durch die Facetten 12 nachgestellt wird, ebenfalls leicht farbig. Dies gilt natürlich nicht nur für die Ausführungsform gemäß Fig. 21, sondern generell.

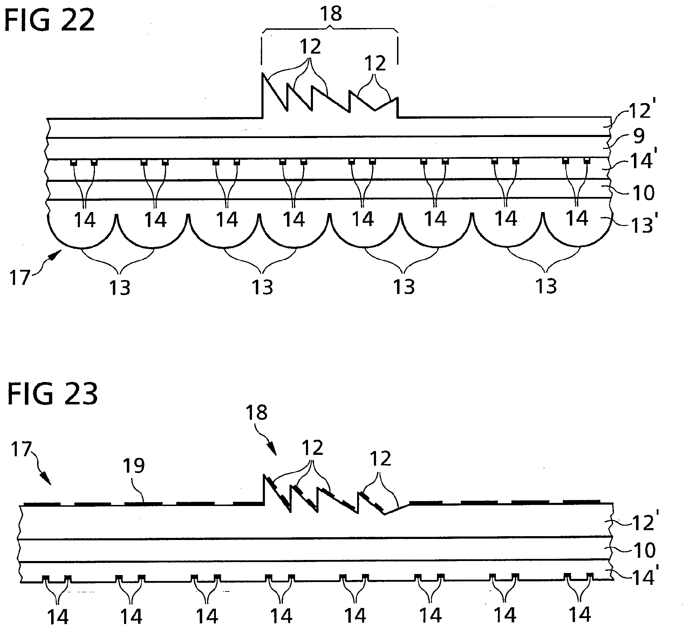

In Fig. 22 ist der Aufbau einer mikrooptischen Kombinations-Darstellungsanordnung gezeigt, bei der die Mikrohohlspiegel 13, die Mikrostrukturen 14 und die Facetten 12 jeweils für sich in eigene Prägelackschichten 13', 14' und 12' geprägt sind. Zwischen den Prägelackschichten 13' und 14' befindet sich eine erste Trägerfolie 10, und zwischen den Prägelackschichten 14' und 12' befindet sich eine zweite Trägerfolie 9. Bei dieser Ausführungsform werden die erste mikrooptische Darstellungsanordnung 17 und die zweite mikrooptische Darstellungsanordnung 18 getrennt hergestellt und dann kaschiert.

Insbesondere bei einer Betrachtung eines Sicherheitselements im Durchlicht vor einer hellen Lichtquelle kann die erste mikrooptische Darstellungsanordnung 17 statt eines Mikrofokussierelementrasters (Raster aus Mikrolinsen oder aus Mikrohohlspiegeln) auch lediglich ein Lochraster 19 aufweisen, wie in Fig. 23 gezeigt ist. Ein solches Lochraster 19 kann beispielsweise durch periodisch angeordnete Löcher oder Schlitze in einer opaken, beispielsweise spiegelnd metallisierten Schicht realisiert werden. Die Löcher können dabei kleine Aussparungen sein. Bei der dargestellten Ausführungsform erstreckt sich das Lochraster auch in den Bereich der zweiten mikrooptischen Darstellungsanordnung 18, so dass sich hier eine Überlagerung der Darstellungen ergibt. Natürlich kann im Bereich 18 das Lochraster auch fehlen.

Ferner kann bei den Sicherheitselementen die zweite mikrooptische Darstellungsanordnung 18 auch mittels diffraktiver Strukturen verwirklicht werden. So werden im zweiten Motivteil 8 bevorzugt asymmetrische Beugungsgitter so angeordnet, dass das Reflexionsverhalten einer gewölbten Oberfläche möglichst achromatisch nachgestellt ist, wie dies beispielsweise in der WO 2006/013215 beschrieben ist.

Bei den mikrooptischen Kombinations-Darstellungsanordnungen können sich die beiden Motivteile 7 und 8 zumindest teilweise überlappen. Alternativ oder zusätzlich können die beiden Motivteile 7 und 8 auch bereichsweise ineinander verschachtelt sein. Dabei können die Flächen der beiden Motivteile 7 und 8 beispielsweise in komplementäre Flächenelemente zerlegt und anschließend zu einem Gesamtmotiv vereint werden. Dabei verliert jeder Motivteil einen Teil seiner Bildinformation, der in den betroffenen Flächenelementen durch die Bildinformation des jeweils anderen Flächenelements ersetzt wird. Liegen die Abmessungen der Flächenelemente unterhalb des Auflösungsvermögens des Auges, nimmt der Betrachter die individuellen Eindrücke der beiden Motivteile gleichzeitig wahr und verarbeitet sie zu einem Gesamtmotiv.

Mit Hilfe gerichtet reflektierender Darstellungen lassen sich auch Glitzereffekte und Bewegungseffekte, beispielsweise Bewegungseffekte wie die in der US 7,517,578 genannten Effekte "Rolling Bar" oder "Double Rolling Bar", verwirklichen. Derartige Effekte werden in der Anmeldung PCT/EP 2010/007369 beschrieben. Diese Anmeldung offenbart Sicherheitselemente mit einem Träger, der einen reflektiven Flächenbereich aufweist, der in eine Vielzahl von reflektiven Pixeln aufgeteilt ist, wobei die Fläche jedes Pixels um zumindest eine Größenordnung kleiner ist als die Fläche des reflektiven Flächenbereichs, wobei jedes Pixel zumindest eine reflektive Facette aufweist, die in einer Oberfläche des Trägers ausgebildet ist, wobei die zumindest eine reflektive Facette auf den Flächenbereich entlang einer vorbestimmten Richtung einfallendes Licht gerichtet in eine durch ihre Orientierung vorgegebene Reflexionsrichtung reflektiert, wobei die Orientierungen der Facetten unterschiedlicher Pixel über den reflektiven Flächenbereich eine im Wesentlichen zufällige Variation aufweisen.

Unter "Pixeln" werden kleine Teilbereiche des reflektiven Flächenbereichs verstanden, die nicht nur eine beliebige Umrissform haben können, sondern insbesondere auch nicht auf einem regelmäßigen Raster angeordnet sein müssen. Die Facetten bilden eine periodische oder aperiodische Sägezahngitterstruktur.

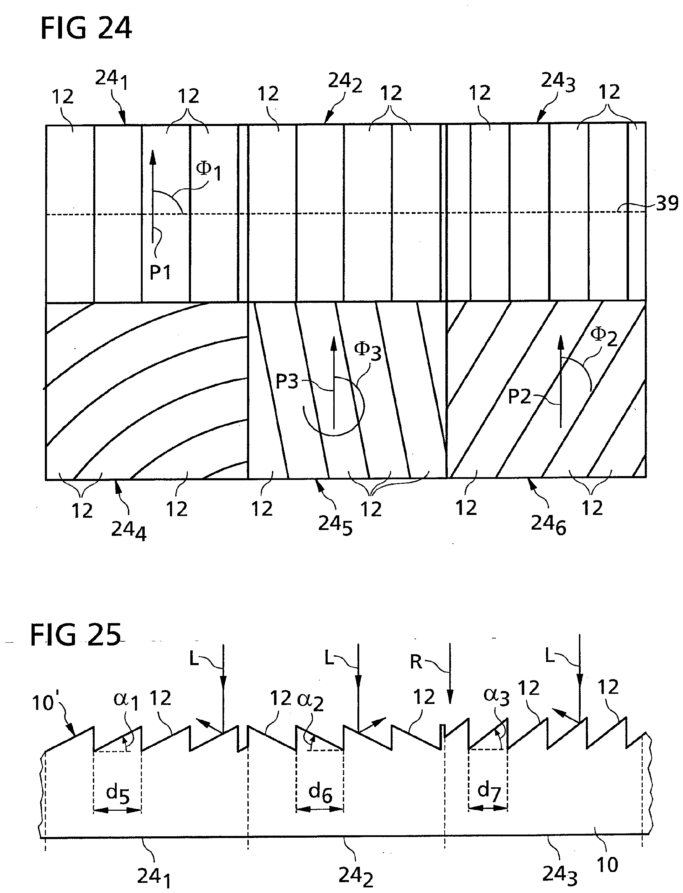

Fig. 24 stellt einen in Pixel aufgeteilten Flächenbereich eines derartigen Sicherheitselements in Aufsicht dar, und Fig. 25 ist eine Schnittansicht der mikrooptischen Darstellungsanordnung von Fig. 24 entlang der Linie 39.

Fig. 24 zeigt einen Ausschnitt aus einem reflektiven Flächenbereich, der in eine Vielzahl von reflektiven Pixeln 24 aufgeteilt ist, von denen ein geringer Teil vergrößert in Figur 24 als Draufsicht dargestellt ist. Die Pixel 24 sind hier quadratisch und weisen eine Kantenlänge im Bereich von 10 bis mehrere 100 µm auf. Bevorzugt ist die Kantenlänge nicht größer als 300 µm. Insbesondere kann sie im Bereich zwischen 20 bis 100 µm liegen.

Jedes Pixel 24 weist bei der hier beschriebenen Ausführungsform mehrere reflektive Facetten 12 mit gleicher Orientierung auf. Die Facetten 12 sind die geneigten Flächen eines reflektiven Sägezahngitters. In einer nicht dargestellten Abwandlung ist es jedoch auch möglich, dass mehrere oder alle Pixel 24 nur jeweils eine einzige Facette 12 aufweisen.

In Fig. 25 ist die Schnittansicht entlang der Linie 39 für drei benachbarte Pixel 24₁, 24₂, 24₃ dargestellt. Die reflektierende Beschichtung auf den Facetten 12 ist nicht eingezeichnet. Das Sägezahngitter der Pixel 24₁, 24₂ und 24₃ ist in einer Oberseite 10' eines Trägers 10 ausgebildet, wobei die so strukturierte Oberseite bevorzugt mit einer reflektierenden Beschichtung beschichtet ist.

Wie in Figur 25 ersichtlich ist, ist die Neigung α der Facetten 12 in jedem einzelnen Pixel 24₁, 24₂, 24₃ gleich. Jedoch ist die Neigung von Facetten 12 benachbarter Pixel 24₁, 24₂, 24₃ verschieden. Darüber hinaus ist auch noch die Gitterperiode d₇ der Sägezahnstruktur des Pixels 24₃ verschieden von den Gitterperioden d₅ und d₆ der Sägezahnstrukturen der Pixel 24₁ und 24₂. Aufgrund der unterschiedlichen Orientierung der Facetten 12 der einzelnen Pixel 24₁, 24₂ und 24₃ wird entlang einer vorbestimmten Richtung R einfallendes Licht L von jedem Pixel 24₁, 24₂, 24₃ gerichtet in unterschiedliche Reflexionsrichtungen reflektiert, wie schematisch in Figur 25 dargestellt ist. Da die Facetten 12 der Pixel 24 stets unterschiedlich orientiert sind, wird für den Betrachter ein glitzernder Effekt bzw. ein Effekt vergleichbar mit einer Metallic-Lackierung erreicht.

Die unterschiedliche Orientierung der Facetten 12 kann nicht nur durch die Wahl des Neigungswinkels α der Facetten 12 eingestellt werden, sondern auch durch unterschiedliche Azimut-Winkel Φ. Bezogen auf die Richtung gemäß dem Pfeil P1 in Figur 24 beträgt der Azimut Winkel Φ der Facetten 12 der Pixel 24₁, 24₂ und 24₃ jeweils 90°.

Der Azimut-Winkel der Facetten 12 des Pixels 246 beträgt hingegen ca. 120° (bezogen auf die Richtung des Pfeils P2) und der Azimut-Winkel φ₃ der Facetten des Pixels 24₅ beträgt 280° (bezogen auf die Richtung des Pfeils P3).

Die Azimut-Winkel können beispielsweise für die einzelnen Pixel 24 zufällig gewählt werden. Insbesondere können zufällige Werte zwischen 0 und 360° ausgewählt werden. Für die Steigung α der Facetten 12 können beispielsweise Werte aus dem Bereich von 10° bis 20° sowie aus dem Bereich von -20° bis -10° gewählt werden. Es ist auch möglich, die Steigung der Facetten aus einem Bereich von beispielsweise -20° bis 20° zu wählen. Auch hier können wiederum die Steigungen zufällig gewählt sein.

Es ist möglich, dass die zufällig gewählte Steigung α einer Normalverteilung entspricht. Die zufällig gewählten Azimut-Winkel Φ können insbesondere gleich verteilt sein. Die Gitterperiode bzw. Breite der Sägezähne d liegt bevorzugt oberhalb von 1 µm und insbesondere oberhalb von 3 µm. Ferner kann die Gitterperiode d auch oberhalb von 5 µm liegen. Sie ist jedoch bevorzugt stets so gewählt, dass pro Pixel 24 zumindest zwei Facetten 12 vorliegen. Insbesondere können pro Pixel 24 zumindest drei, vier oder mehr Facetten 12 enthalten sein.

Die Facetten 12 sind bevorzugt als ebene Flächenstücke ausgebildet. Es ist jedoch auch möglich, dass die Facetten 12 gekrümmt sind (z.B. konkav oder konvex). Die Facetten 12 können sich geradlinig erstrecken, wie bei den Facetten 12 der Pixel 24₁, 24₂, 24₃, 24₅ und 24₆. Es ist jedoch auch ein nicht geradliniger Verlauf (z.B. leicht gekrümmt) möglich, wie schematisch für das Pixel 24₄ in Figur 24 gezeigt ist.

Mit Hilfe der Einteilung der Pixel kann der Eindruck erzeugt werden, dass eine "verrauschte" Fläche (bevorzugt in einer reflektiven Fläche) vorliegt. Zusätzlich können die Facetten der Pixel so orientiert sein, dass unter bestimmten Betrachtungswinkeln ein gleichzeitiges helles Aufleuchten vieler Pixel auftritt. Dazu wird der reflektive Flächenbereich auf dem Träger in zumindest zwei Teilbereiche aufgeteilt, so dass die Pixel im ersten Teilbereich eine zufällige Orientierung haben, während die Pixel des zweiten oder der weiteren Teilbereiche jeweils pro Teilbereich alle die gleiche bzw. zumindest nahezu gleiche Orientierung aufweisen. Das Licht einer Lichtquelle wird dann im ersten Teilbereich unter vielen Winkeln in alle Richtungen gestreut, während das Licht in den weiteren Teilbereichen jeweils in einen engen Winkelbereich reflektiert wird. Ein Betrachter sieht dann unter den meisten Winkeln nur eine verrauschte Darstellung mit zufällig aufleuchtenden Pixeln (Glitzereffekt), während unter bestimmten Winkeln die weiteren Teilbereiche sehr hell aufleuchten.

Sollen optische Effekte wie die in der US 7,517,578 genannten Effekte "Rolling Bar" oder "Double Rolling Bar" nachgestellt werden, wird die Orientierung der Facetten derart gewählt, dass der reflektive Flächenbereich einen kontinuierlichen Verlauf der mittleren Reflexionsrichtung der Pixel aufweist. Dadurch leuchten beim Kippen eines Sicherheitselements mit der reflektiven Darstellung kontinuierlich nacheinander unterschiedliche Flächenbereiche hell auf, so dass der Effekt eines nach oben oder unten oder nach einer Seite rollenden Streifens erzielt wird.

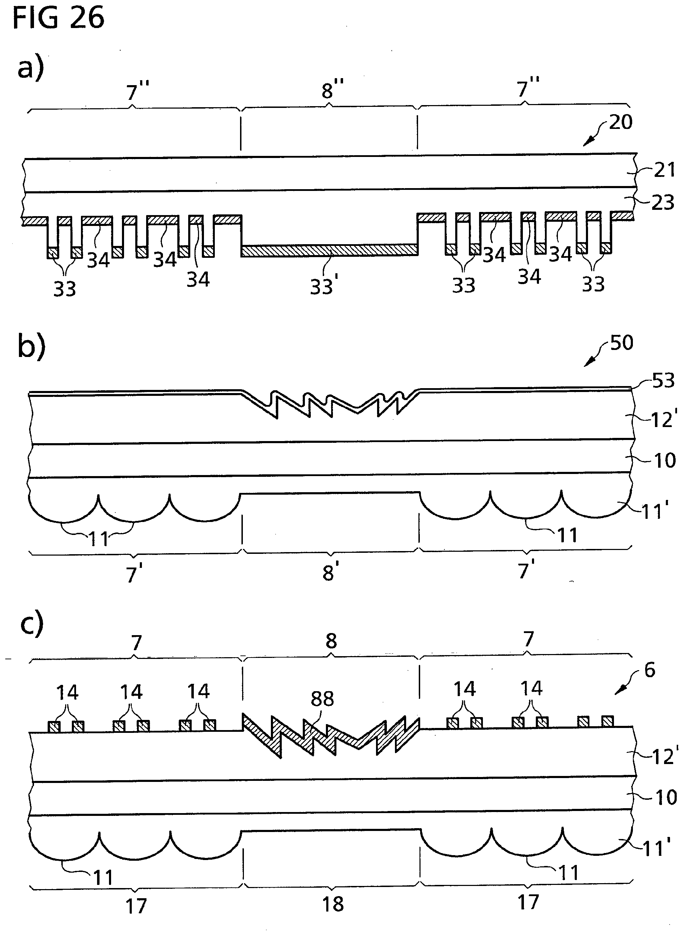

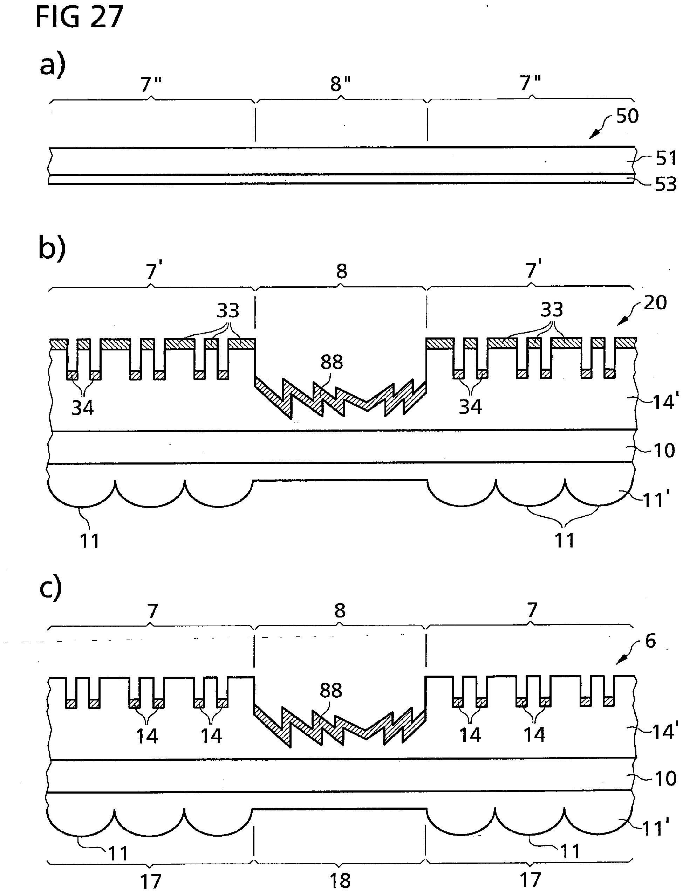

Die Figuren 26 und 27 zeigen Verfahrensvarianten zur Herstellung mikrooptischer Kombinations-Darstellungsanordnungen mit einer ersten und einer zweiten mikrooptischen Darstellungsanordnung. Gezeigt sind jeweils Folienmaterialien mit vorgeprägten Linsen und mit Sägezahnstrukturen als zweite Darstellungsanordnung, Metallisierungen als Transferschicht bzw. Mikromotivelemente bzw. als reflektive Schicht, sowie Prägungen in separate Prägelackschichten. Es versteht sich, dass auch andere mikrofokussierende Elemente als Linsen verwendet werden können, dass die mikrofokussierenden Elemente und Mikrostrukturen auch unmittelbar in prägbare Folien geprägt werden können, dass mikrofokussierende Elemente auch später aufkaschiert werden können, dass andere Strukturen als Sägezahnstrukturen als zweite Darstellungsanordnung verwendet werden können, und dass andere Transferschichten als Metallisierungen verwendet werden können. Die Figuren erläutern lediglich das Herstellungsprinzip an sich.

Fig. 26b zeigt, im Schnitt, eine Akzeptorfolie 50, die eine Trägerfolie 10, eine Prägelackschicht 11' und eine Prägelackschicht 12' aufweist. In die Prägelackschicht 11' sind in den Bereichen 7' Mikrolinsen 11 eingeprägt. Die Bereiche 7' sind die späteren Motivbereiche der ersten mikrooptischen Darstellungsanordnung. In die Prägelackschicht 12' sind im Bereich 8' Sägezahnstrukturen eingeprägt. Aus den Sägezahnstrukturen wird später die zweite mikrooptische Darstellungsanordnung gebildet. Die Prägelackschicht 12 ist mit einem Klebstoff 53 beschichtet. Die Klebstoffschicht ist sehr dünn, damit sie den Strukturen der Facetten bzw. Sägezähne gut folgt und die Strukturen nicht "zuschmiert".

Fig. 26a zeigt eine Donorfolie 20 im Prinzip im selben Zustand wie die Donorfolie in Fig. 4a. Die Donorfolie 20 weist eine Trägerfolie 21 und eine Prägelackschicht 23 auf. In die Prägelackschicht 23 sind Mikrostrukturen eingeprägt und bereits mit einer Transferschicht ausgestattet. Im Bereich 8" weist die Mikrostruktur eine großflächige Erhebung auf. Die Transferschicht bildet Erhebungsflächenelemente 33 und Vertiefungsflächenelemente 34 in den Bereichen 7" und ein ausgedehntes Erhebungsflächenelement 33' in dem Bereich 8". Die Bereiche 7" entsprechen den Bereichen 7' in der Akzeptorfolie von Fig. 26b, und die Bereiche 8" entsprechen dem Bereich 8' in der Akzeptorfolie von Fig. 26b.

Die Donorfolie 20 wird auf die Akzeptorfolie 50 aufkaschiert, d.h. die Bereiche 7" werden auf die Bereiche 7' aufkaschiert und der Bereich 8" wird auf den Bereich 8' aufkaschiert. Dabei werden die Transferschicht-Erhebungsflächenelemente 33 auf den Klebstoff 53 übertragen, wobei die Mikromotivelemente 14 gebildet werden, und das Erhebungsflächenelement 33' wird auf die Sägezahnstruktur übertragen, wobei die reflektive Beschichtung 88 gebildet wird. Dieser Zustand ist in Fig. 26c dargestellt. Typischerweise wird keine so perfekte Beschichtung 88 erhalten, wie sie in Fig. 26c dargestellt ist. Insbesondere die unteren Bereiche steiler Sägezähne werden in der Praxis oft nicht vollständig beschichtet. Dies stört jedoch nicht, denn kleinere Mängel der Beschichtung bleiben einem Betrachter verborgen.

Die mikrooptische Kombinations-Darstellungsanordnung für ein Sicherheitselement 6, wie in Fig. 26c dargestellt, weist nun eine stereographische Darstellung 17 mit Tiefeninformation und eine gerichtet reflektierende Darstellung 18 auf. Im Bereich der mikrooptischen Darstellungsanordnung 18 sind keine Linsen 11 eingeprägt. Das Fehlen von fokussierenden Elementen ist dann empfehlenswert, wenn eine Beschichtung 88 verwendet wird, deren Effekte auch von der Seite der fokussierenden Elemente her sichtbar sein sollen, beispielsweise bei Beschichtungen mit Farbkippeffekt. Anstatt die mikrofokussierenden Elemente in dem entsprechenden Bereich auszusparen, kann ihre Wirkung ggf. auch durch Überdrucken mit einem geeigneten farblosen Lack aufgehoben werden, wobei der zum Überdrucken verwendete Lack möglichst denselben Brechungsindex haben sollte wie das Material der mikrofokussierenden Elemente.

Alternativ sind auch Herstellungsvarianten denkbar, bei der die Sägezahnstruktur bereits eine Metallisierung oder andere Beschichtung aufweist, und nur die erste mikrooptische Darstellungsanordnung 17 durch Übertragung von Mikromotivelementen 14 in den ersten Motivbereich 7 hergestellt werden soll. In einem solchen Fall weist der Bereich 8" der Donorfolie 20 bevorzugt keine Prägestruktur mit einer Erhebungsfläche auf. Wenn dieser Bereich mikrostrukturiert ist, beispielsweise wie die Bereiche 7", werden Erhebungsflächenelemente auf die bereits beschichtete Sägezahnstruktur übertragen. Derartige Mikromotivelemente in dem Bereich 8 sind, falls es sich bei der Beschichtung 88 um eine Metallisierung handelt, kaum sichtbar und nicht störend. Im Falle anderer Beschichtungen können sie ggf. auch sichtbar sein.

Fig. 27 zeigt den Fall, in dem eine zu der Darstellungsanordnung von Fig. 26 analoge mikrooptische Darstellungsanordnung hergestellt wird, aber nicht auf einer Akzeptorfolie, sondern auf einer Donorfolie. Die Donorfolie 20 ist in Fig. 27b dargestellt. Sie weist eine Trägerfolie 10, eine Prägelackschicht 11 und eine Prägelackschicht 14' auf. In die Prägelackschicht 11' sind in den Bereichen 7' Mikrolinsen 11 eingeprägt. In die Prägelackschicht 14' ist in diesem Bereich eine Mikrostruktur eingeprägt und metallisiert. Im Bereich 8, also im zweiten Motivbereich, ist eine Sägezahnstruktur mit einer Metallisierung 88 ausgebildet. Die Sägezahnstruktur liegt in dem Ausführungsbeispiel tiefer als die Mikrostruktur in dem Bereich 7'.

Fig. 27a zeigt eine Akzeptorfolie 50 aus einer Trägerfolie 51, die mit einem Klebstoff 53 beschichtet ist. In dem Ausführungsbeispiel ist die Klebstoffbeschichtung vollflächig. Die Folie 50 wird mit der Klebstoffschicht auf die Mikrostrukturschicht der Donorfolie 20 aufkaschiert und anschließend durch Trennwicklung wieder entfernt. Der dadurch erreichte Zustand der Donorfolie 20 ist in Fig. 27c dargestellt.

Wie in Fig. 27c ersichtlich ist, wurden die Erhebungsflächenelemente 33 der Donorfolie 20 entfernt, während die Vertiefungsflächenelemente 34 zurückblieben, und nun in den ersten Motivbereichen 7 die Mikromotivelemente 14 bilden. Die mikrooptische Kombinations-Darstellungsanordnung für ein Sicherheitselement 6, wie sie in Fig. 27c dargestellt ist, entspricht ansonsten der Darstellungsanordnung von Fig. 26c.

Wenn der zweite Motivbereich 8 nicht, wie in Fig. 27b dargestellt, gegenüber dem ersten Motivbereich 7 abgesenkt ist, sondern mit dem Motivbereich 7 auf etwa gleicher Höhe liegt, sollte die Klebstoffschicht 53 nur in den Teilbereichen 7" der Akzeptorfolie 50 ausgebildet werden. Die Teilbereiche 7" entsprechen den Teilbereichen 7' der Donorfolie 20. Auf diese Weise wird verhindert, dass durch die Klebstoffschicht Teile der Beschichtung 88 abgezogen werden. Sollten beim Transfer dennoch gewisse Teile der Beschichtung 88 abgezogen werden, ist dies in der Regel unschädlich, da kleinere Mängel von einem Betrachter nicht bemerkt werden.

Es soll noch erwähnt werden, dass der zweite Motivteil 8 nicht notwendigerweise strukturiert sein muss. Wenn beispielsweise die in Fig. 26b dargestellte Akzeptorfolie 50 an der Oberfläche, an der die Klebstoffschicht 53 aufgetragen ist, völlig glatt ist, entsteht im zweiten Motivbereich 8 eine glatte metallisierte Fläche. Eine derartige größere Fläche bewegt sich beim Kippen des Sicherheitselementes nicht, während bei der ersten mikrooptischen Darstellungsanordnung 17 eine Bewegung stattzufinden scheint.

Besonders vorteilhafte Ausgestaltungen sind in den Figuren 28 und 29 dargestellt. Die dargestellten Sicherheitselemente weisen mikrooptische Darstellungsanordnungen (Moire-Vergrößerungsanordnungen) mit metallischen Mikromotivelementen, die farbig hinterlegt sind, auf. Zusätzlich ist die farbige Schicht mit einer reflektierenden Schicht hinterlegt.

Metallische Mikrostrukturen, insbesondere silbrig metallische Mikrostrukturen, wirken auf einem weißen Hintergrund in der Regel kontrastarm. Erfindungsgemäß werden sie daher bevorzugt mit einem farbigen Hintergrund hinterlegt. Beispielsweise können die bei dem Verfahren durch Abziehen überflüssiger metallisierter Bereiche von einer Donorfolie (unter Zurücklassung der Mikromotivelemente) bzw. durch Übertragen von Mikromotivelementen auf eine Akzeptorfolie erzeugten Mikrostrukturen mit einer Druckfarbe bedruckt werden.

Die Hinterlegung mit Buntfarben kann vollflächig oder bereichsweise sowie einfarbig oder mehrfarbig erfolgen. Ein einfarbiger Hintergrund wird zweckmäßigerweise so gewählt, dass er sich im Farbton stark vom Farbton des Mikromotivs unterscheidet. Je stärker der Unterschied im Farbton, desto besser die Kontraststeigerung der Moire-vergrößerten Mikromotive oder sonstigen Mikromotive.

Bei einer mehrfarbigen Gestaltung des Hintergrunds können zusätzliche Effekte erzielt werden. Ein mehrfarbiger Hintergrund bewegt sich beim Kippen eines Sicherheitselements, das eine mikrooptische Darstellungsanordnung mit stereographischer Darstellung aufweist, nicht, bildet jedoch durch seine Strukturierung einen Bezugspunkt, vor dem die Bewegung der stereographischen Darstellung besonders gut auffällt. Beispielsweise kann eine Moiré-Vergrößerungsanordnung metallische Symbole oder Zeichen gegen einen andersfarbigen Hintergrund darstellen. Gegen diesen statischen mehrfarbigen Hintergrund bewegen sich beim Kippen des Sicherheitselements die metallisierten Moire-vergrößerten Strukturen.

Bei einem Sicherheitselement wie einem Sicherheitsfaden können die Bereiche mit unterschiedlicher Farbgebung beispielsweise nebeneinander (parallel) in Fadenrichtung verlaufen, oder alternativ hintereinander in Fadenrichtung verlaufen, so dass sich in Richtung des Fadens unterschiedlich gefärbte Bereiche abwechseln. Der Wechsel kann periodisch oder aperiodisch erfolgen.

Die Farben sind nicht in irgendeiner speziellen Weise beschränkt. Es kommen sowohl deckende als auch lasierende Farben in Frage. Die Farben können auf wässriger Basis oder auf Lösungsmittelbasis sein, physikalisch trocknen (durch Verdunstung der flüssigen Bestandteile trocknen) oder UVhärtbar sein. Der Auftrag verschiedener Farben kann auch überlappend stattfinden. Durch Rasterung lassen sich kontinuierliche Farbübergänge zwischen übereinander gedruckten Farben erzeugen. Anstelle von Buntfarben können beispielsweise auch Fluoreszenzfarben, Systeme mit Farbkippeffekt wie beispielsweise Farben mit Dünnschichtpigmenten, oder Zusammensetzungen mit anderen Effektpigmenten aufgedruckt werden.

Farben, die nicht vollständig deckend sind, lassen sich in ihrer Leuchtkraft deutlich steigern, indem sie durch spezielle, im Allgemeinen reflektierende, Schichten hinterlegt werden. Als reflektierende Schichten kommen beispielsweise metallische Schichten, farbkippende Systeme, hochbrechende Beschichtungen und druckbare Schichten mit Metallpigmenten oder Effektpigmenten in Frage. Geeignete Metalle sind beispielsweise Aluminium, Kupfer, Chrom, Zinn, Zink, Silber und Gold sowie Metall-Legierungen. Hochbrechende Beschichtungen sind beispielsweise Beschichtungen aus ZnS oder TiO₂.

Die reflektierende Beschichtung kann, wie die Farbschicht, vollflächig oder bereichsweise aufgebracht werden. Wird die reflektierende Beschichtung nur bereichsweise aufgebracht, so entsteht ein in Aufsicht geringer und in Durchsicht stärkerer Kontrast zwischen Bereichen mit und Bereichen ohne reflektierende Beschichtung. In Durchsicht kann dadurch eine Wirkung erzeugt werden, die einer Negativschrift nahekommt (sofern das Trägermaterial transparent ist).

Fehlt in bestimmten Bereichen die Hintergrundfarbe, so ist dort die reflektierende Beschichtung direkt sichtbar. Bei einer derartigen Hintergrundgestaltung wechseln farbige Bereiche mit reflektierenden Bereichen.

Fig. 28 zeigt ein Sicherheitselement 5 mit einer Moire-Vergrößerungsanordnung, das ähnlich wie das in Fig. 27c dargestellte Sicherheitselement aufgebaut ist, jedoch ohne dessen mikrooptische Darstellungsanordnung 18. Die mikrooptische Darstellungsanordnung des Sicherheitselements 5 weist eine Trägerfolie 10 auf, die beidseitig mit Prägelackschichten 11', 14' beschichtet ist. In die Prägelackschicht 11' sind Mikrolinsen 11 eingeprägt, und in die Prägelackschicht 14' ist eine Mikrostruktur eingeprägt, deren metallisierte Vertiefungen (Vertiefungsflächenelemente 34) die Mikromotivelemente bilden. Die Mikrostruktur ist mit einer Buntfarbe 71 bedruckt, und die Buntfarbe ist wiederum mit einer Schicht 72 mit Metallpigmenten bedruckt. In der dargestellten Ausführungsform ist ferner eine Schicht 73 aus Heißsiegellack zum Verbinden des Sicherheitselements mit einem Wertgegenstand vorgesehen. Die Vertiefungen der Prägestruktur können wesentlich tiefer sein als die Schichtdicke der Buntfarbe.

Fig. 29 zeigt eine ähnliche Darstellung wie Fig. 28, wobei hier die Mikromotivelemente von Erhebungsflächenelementen 33 gebildet werden. Mit anderen Worten, während in Fig. 28 die Mikromotivelemente in einer Donorfolie 20 ausgebildet wurden, wurden sie bei der Ausführungsform gemäß Fig. 29 auf eine Akzeptorfolie 50 übertragen. Dies entspricht einer Ausführungsform gemäß Fig. 26c ohne die mikrooptische Darstellungsanordnung 18. Das in Fig. 29 dargestellte Sicherheitselement 5 weist eine Trägerfolie 10 mit einer Prägelackschicht 11' und darin eingeprägten Mikrolinsen 11 auf. An der den Mikrolinsen 11 entgegengesetzten Seite der Trägerfolie befinden sich die Mikromotivelemente aus den auf die Klebstoffschicht 53 übertragenen Erhebungsflächenelementen 33. Auch hier wird der Kontrast, und damit die Sichtbarkeit, der metallischen Mikrostrukturen 33 durch eine Bedruckung mit Buntfarbe 71 gesteigert. Zur Erhöhung der Leuchtkraft der Buntfarbe ist eine zusätzliche Metallisierung 72 vorgesehen. Mittels der Schicht 73 aus Heißsiegellack kann das Sicherheitselement 5 auf einen Wertgegenstand aufgeklebt werden.

Es versteht sich, dass auch hier andere mikrofokussierende Elemente als Linsen verwendet werden können, dass die mikrofokussierenden Elemente nicht bereits auf der Trägerfolie vorgeprägt sein müssen, sondern auch aufkaschiert werden können, dass ein Sicherheitselement noch weitere funktionelle Schichten aufweisen kann, etc. Anhand der Figuren 28 und 29 soll lediglich das Prinzip der Hinterlegung einer hergestellten Mikrostruktur mit einer Farbschicht und ggf. mit einer zusätzlichen reflektierenden Schicht veranschaulicht werden.

## Patentansprüche

1. Sicherheitselement (5), das einen aus einer Akzeptorfolie erhaltenen Mikrostrukturträger (45) mit einer Mikrostruktur (40) aufweist, die auf eine Klebstoffschicht (53,54,55) der Akzeptorfolie (50) transferierte Transferschicht-Erhebungsflächenelemente (33) aufweist, wobei der Mikrostrukturträger mit der Mikrostruktur und einer zu der Mikrostruktur komplementären Mikrostruktur (47) aus farbigen oder farblosen UV-vernetztem Lack oder farbigen oder farblosen negativ arbeitendem Photoresist gebildet ist, oder wobei der Mikrostrukturträger mit der Mikrostruktur und einer zu der Mikrostruktur deckungsgleichen Mikrostruktur (49) aus farbigen oder farblosen positiv arbeitendem Photoresist gebildet ist, wobei der Mikrostrukturträger durch ein Verfahren mit folgenden Schritten erhältlich ist:
(a) Herstellen einer Donorfolie (20) durch
(a1) Ausbilden einer Prägestruktur mit Erhebungsoberflächen (25) und Vertiefungsoberflächen (26) mindestens in einem Teilbereich einer Hauptfläche (22) eines ersten Folienmaterials (21) oder in einer prägbaren Schicht (23) auf mindestens einem Teilbereich einer Hauptfläche (22) eines ersten Folienmaterials (21), wobei die Erhebungsoberflächen (25) und/oder die Vertiefungsoberflächen (26) eine gewünschte Mikrostruktur bilden, wobei die Mikrostruktur Mikrostrukturelemente mit einer Strichstärke zwischen etwa 0,5 µm und etwa 10 µm aufweist,
(a2) Auftragen einer Beschichtung mindestens auf einen Teilbereich (28) der Prägestruktur zur Ausbildung einer Transferschicht (30, 31, 32), wobei die Transferschicht Transferschicht-Flächenelemente (33) auf Erhebungsoberflächen der Prägestruktur, Transferschicht-Flächenelemente (34) auf Vertiefungsoberflächen (26) der Prägestruktur und die Erhebungs-Flächenelemente (33) und die Vertiefungs-Flächenelemente (34) verbindende Transferschicht-Flächenelemente besitzt,
(b) Herstellen der Akzeptorfolie (50) durch Auftragen der Klebstoffschicht (53, 54, 55) mindestens auf einen Teilbereich (56, 57, 58) einer Hauptfläche (52) eines zweiten Folienmaterials (51),
(c) Kaschieren der Donorfolie (20) und der Akzeptorfolie (50) mittels der Klebstoffschicht (53, 54 ,55) dergestalt, dass mindestens ein Teilbereich der beschichteten Prägestruktur und ein Teilbereich der Klebstoffschicht (53, 54, 55) miteinander in Kontakt kommen, wobei in dem Kontaktbereich (70) die Transferschicht (30, 31, 32) auf Erhebungsoberflächen (25) mit der Klebstoffschicht (53, 54, 55) der Akzeptorfolie (50) verklebt,
(d) Transferieren der Flächenelemente (33) der Transferschicht (30, 31, 32) auf Erhebungsoberflächen (25) der Prägestruktur der Donorfolie (20) in dem Kontaktbereich auf die Klebstoffschicht (53, 54, 55) der Akzeptorfolie (50) durch voneinander Trennen der Donorfolie und der Akzeptorfolie, wodurch aus der Akzeptorfolie (50) der Mikrostrukturträger (45) mit der Mikrostruktur (40), die die transferierten Transferschicht-Erhebungsflächenelemente (33) aufweist, entsteht.

2. Sicherheitselement nach Anspruch1, **dadurch gekennzeichnet, dass** eine zusätzliche Strukturierung, bevorzugt eine Hologrammstruktur und/oder eine Nanostrukturierung, in die Klebstoffschicht der Akzeptorfolie übertragen ist.

3. Sicherheitselement nach Anspruch 1 oder 2, **dadurch gekennzeichnet, dass** die Mikrostruktur vollflächig oder teilflächig mit mindestens einer Druckfarbe und/oder mindestens einem reflektierendem Beschichtungsmaterial beschichtet ist, wobei das reflektierende Beschichtungsmaterial bevorzugt ausgewählt ist aus Metallen, farbkippenden Systemen, hochbrechenden Materialien, Metallpigmenten und Effektpigmenten.

4. Sicherheitselement nach einem der Ansprüche 1 bis 3, **dadurch gekennzeichnet, dass** der Mikrostrukturträger die Mikrostruktur in einem ersten Teilbereich und eine weitere Mikrostruktur in einem zweiten Teilbereich aufweist, wobei die Mikrostruktur in dem ersten Teilbereich einen ersten Motivbereich und die weitere Mikrostruktur in dem zweiten Teilbereich einen zweiten Motivbereich bilden, wobei sich der erste Motivbereich und der zweite Motivbereich bevorzugt zu einem Kombinationsmotiv ergänzen, wobei der Mikrostrukturträger dadurch erhältlich ist, dass in
- in Schritt (b) ein zweites Folienmaterial verwendet wird, das eine Hauptfläche mit einem ersten Teilbereich ohne Prägestruktur, und mit einem zweiten Teilbereich mit einer Prägestruktur, bevorzugt einer Sägezahnstruktur, aufweist,
- in Schritt (a1) eine Donorfolie mit Erhebungsoberflächen in einem ersten Teilbereich und optional einer Erhebungsoberfläche in einem zweiten Teilbereich ausgebildet wird, wobei der zweite Teilbereich oder ggf. die Erhebungsoberfläche in dem zweiten Teilbereich in Größe und Form der Fläche der Prägestruktur des zweiten Teilbereichs des zweiten Folienmaterials entspricht,
- in Schritt (c) die Donorfolie und das zweite Folienmaterial so miteinander kaschiert werden, dass die Prägestruktur des zweiten Teilbereichs des zweiten Folienmaterials mit dem zweiten Teilbereich der Donorfolie in Kontakt kommt, und der erste Teilbereich des zweiten Folienmaterials mit dem ersten Teilbereich der Donorfolie in Kontakt kommt, so dass
- in Schritt (d) der Mikrostrukturträger mit der Mikrostruktur in dem ersten Teilbereich und mit der weiteren Mikrostruktur in dem zweiten Teilbereich entsteht.

5. Sicherheitselement nach einem der Ansprüche 1 bis 4, **dadurch gekennzeichnet, dass** es eine mikrooptische Darstellungsanordnung mit mindestens einem Mikromotiv und einer Mikromotivbetrachtungseinrichtung aufweist, wobei das Mikromotiv von der Mikrostruktur gebildet wird.

6. Sicherheitselement nach einem der Ansprüche 1 bis 4, **dadurch gekennzeichnet, dass** es eine mikrooptische Darstellungsanordnung aufweist, wobei in die der Hauptfläche entgegengesetzte weitere Hauptfläche des zweiten Folienmaterials oder in eine prägbare Schicht auf der der Hauptfläche entgegengesetzten weiteren Hauptfläche des zweiten Folienmaterials mikrofokussierende Elemente dergestalt eingeprägt sind, dass die mikrofokussierenden Elemente eine mikrooptische Betrachtungseinrichtung für den Mikrostrukturträger bilden, wobei die mikrooptische Betrachtungseinrichtung und der Mikrostrukturträger die mikrooptische Darstellungsanordnung bilden.

7. Sicherheitselement nach einem der Ansprüche 1 bis 4, **dadurch gekennzeichnet, dass** es eine mikrooptische Darstellungsanordnung mit mindestens einem Mikromotiv und einer Mikromotivbetrachtungseinrichtung aufweist, wobei die Mikromotivbetrachtungseinrichtung von der Mikrostruktur gebildet wird.

8. Sicherheitselement nach einem der Ansprüche 5 bis 7, **dadurch gekennzeichnet, dass** die mikrooptische Darstellungsanordnung mindestens ein Mikromotiv und eine mikrooptische Betrachtungseinrichtung zu beiden Seiten des Mikromotivs aufweist.

9. Sicherheitselement nach einem der Ansprüche 5 bis 8, **dadurch gekennzeichnet, dass** die mikrooptische Darstellungsanordnung eine Moire-Vergrößerungsanordnung, eine Vergrößerungsanordnung vom Moiretyp oder eine Modulo-Vergrößerungsanordnung ist.

10. Produkt (1) beliebiger Art, insbesondere Markenartikel oder Wertgegenstand wie Banknote, **dadurch gekennzeichnet, dass** es mit einem Sicherheitselement (5) nach einem der Ansprüche 1 bis 9 ausgestattet ist.

## Claims

1. A security element (5) having a microstructure carrier (45) that is obtained from an acceptor foil and has a microstructure (40) which has transfer-layer elevation areal elements (33) transferred to an adhesive layer (53, 54, 55) of the acceptor foil (50), wherein the microstructure carrier is formed having the microstructure and a microstructure (47) of a colored or colorless UV-crosslinked lacquer or colored or colorless negatively working photoresist that is complementary to the microstructure, or wherein the microstructure carrier is formed having the microstructure and a microstructure (49) of a colored or colorless positively working photoresist that is congruent with the microstructure,
wherein the microstructure carrier is obtainable by a method having the following steps of:
(a) manufacturing a donor foil (20) by
(a1) forming an embossed structure having elevation surfaces (25) and depression surfaces (26) at least in a partial region of a principal area (22) of a first foil material (21) or in an embossable layer (23) on at least a partial region of a principal area (22) of a first foil material (21), wherein the elevation surfaces (25) and/or the depression surfaces (26) form a desired microstructure, wherein the microstructure has microstructure elements with a line width between approximately 0.5 µm and approximately 10 µm,
(a2) applying a coating at least to a partial region (28) of the embossed structure to form a transfer layer (30, 31, 32), wherein the transfer layer has transfer-layer areal elements (33) on elevation surfaces (25) of the embossed structure, transfer-layer areal elements (34) on depression surfaces (26) of the embossed structure, and transfer-layer areal elements connecting the elevation areal elements (33) and the depression areal elements (34),
(b) manufacturing the acceptor foil (50) by applying the adhesive layer (53, 54, 55) at least to a partial region (56, 57, 58) of a principal area (52) of a second foil material (51),
(c) laminating the donor foil (20) and the acceptor foil (50) by means of the adhesive layer (53, 54, 55) in such a fashion that at least a partial region of the coated embossed structure and a partial region of the adhesive layer (53, 54, 55) come into contact with each other, wherein the transfer layer (30, 31, 43) on elevation surfaces (25) bonds adhesively to the adhesive layer (53, 54, 55) of the acceptor foil (50) in the contact region (70),
(d) transferring the areal elements (33) of the transfer layer (30, 31, 32) on elevation surfaces (25) of the embossed structure of the donor foil (20) in the contact region to the adhesive layer (53, 54, 55) of the acceptor foil (50) by separating the donor foil and the acceptor foil from each other, thereby creating from the acceptor foil (50) the microstructure carrier (45) with the microstructure (40) having the transferred transfer-layer elevation areal elements (33).

2. The security element according to claim 1, **characterized in that** an additional structuring, preferably a hologram structure and/or a nanostructuring, is transferred into the adhesive layer of the acceptor foil.

3. The security element according to claim 1 or 2, **characterized in that** the microstructure is coated over the full area or over part of the area with at least one printing ink and/or at least one reflective coating material, wherein the reflective coating material is preferably selected from metals, color-shifting systems, high-refractive materials, metal pigments and effect pigments.

4. The security element according to any of claims 1 to 3, **characterized in that** the microstructure carrier has the microstructure in a first partial region and a further microstructure in a second partial region, wherein the microstructure in the first partial region forms a first motif region and the further microstructure in the second partial region forms a second motif region, wherein the first motif region and the second motif region preferably complement each other to from a combination motif, wherein the microstructure carrier is obtainable **in that**
in step (b) there is employed a second foil material having a principal area with a first partial region without an embossed structure, and with a second partial region with an embossed structure, preferably a sawtooth structure,
in step (a1) there is formed a donor foil with elevation surfaces in a first partial region and optionally an elevation surface in a second partial region, wherein the second partial region or, where applicable, the elevation surface in the second partial region correspond in size and form to the area of the embossed structure of the second partial region of the second foil material,
in step (c) the donor foil and the second foil material are so laminated to each other that the embossed structure of the second partial region of the second foil material comes in contact with the second partial region of the donor foil, and the first partial region of the second foil material comes in contact with the first partial region of the donor foil, so that
in step (d) there is created the microstructure carrier having the microstructure in the first partial region and having the further microstructure in the second partial region.

5. The security element according to any of claims 1 to 4, **characterized in that** it has a micro-optic representation arrangement with at least one micromotif and a micromotif viewing device, wherein the micromotif is formed by the microstructure.

6. The method according to any of claims 1 to 4, **characterized in that** it has a micro-optic representation arrangement, wherein microfocusing elements are embossed into the further principal area of the second foil material opposite the principal area, or into an embossable layer on the further principal area of the second foil material opposite the principal area, in such a fashion that the microfocusing elements form a micro-optic viewing device for the microstructure carrier, wherein the micro-optic viewing device and the microstructure carrier form a micro-optic representation arrangement.

7. The security element according to any of claims 1 to 4, **characterized in that** it has a micro-optic representation arrangement with at least one micromotif and a micromotif viewing device, wherein the micromotif viewing device is formed by the microstructure.

8. The security element according to any of claims 5 to 7, **characterized in that** the micro-optic representation arrangement has at least one micromotif and a micro-optic viewing device on both sides of the micromotif.

9. The security element according to any of claims 5 to 8, **characterized in that** the micro-optic representation arrangement is a moire magnification arrangement, a magnification arrangement of the moire type or a modulo magnification arrangement.

10. A product (1) of any kind, in particular a branded article or object of value such as a banknote, **characterized in that** it is equipped with a security element (5) according to any of claims 1 to 9.

## Revendications

1. Élément de sécurité (5) comportant un support de microstructure (45) qui est obtenu à partir d'une feuille acceptrice et a une microstructure (40) qui comporte des éléments plans de proéminence de couche de transfert (33) transférés sur une couche de colle (53, 54, 55) de la feuille acceptrice (50), cependant que le support de microstructure est constitué avec la microstructure et une microstructure (47), complémentaire à la microstructure, en vernis coloré ou incolore réticulé aux UV ou en résine photosensible à effet négatif colorée ou incolore, ou cependant que le support de microstructure est constitué avec la microstructure et une microstructure (49), congruente avec la microstructure, en résine photosensible à effet positif colorée ou incolore,
cependant que le support de microstructure peut être obtenu par un procédé comprenant les étapes suivantes :
(a) fabrication d'une feuille donneuse (20) par
(a1) génération d'une structure de gaufrage ayant des surfaces de proéminence (25) et des surfaces de renfoncement (26) au moins dans une zone partielle d'une face principale (22) dans un premier matériau en feuille (21) ou dans une couche gaufrable (23) sur au moins une zone partielle d'une face principale (22) dans un premier matériau en feuille (21), cependant que les surfaces de proéminence (25) et/ou les surfaces de renfoncement (26) constituent une microstructure souhaitée, cependant que la microstructure comporte des éléments de microstructure d'une épaisseur de trait comprise entre environ 0,5 µm et environ 10 µm,
(a2) application d'un revêtement au moins sur une zone partielle (28) de la structure de gaufrage pour la génération d'une couche de transfert (30, 31, 32), cependant que la couche de transfert possède des éléments plans de couche de transfert (33) sur des surfaces de proéminence de la structure de gaufrage, des éléments plans de couche de transfert (34) sur des surfaces de renfoncement (26) de la structure de gaufrage et des des éléments plans de couche de transfert qui relient les éléments plans de proéminence (33) et les éléments plans de renfoncement (34),
(b) fabrication de la feuille acceptrice (50) par application de la couche de colle (53, 54, 55) au moins sur une zone partielle (56, 57, 58) d'une face principale (52) d'un deuxième matériau en feuille (51),
c) contrecollage de la feuille donneuse (20) et de la feuille acceptrice (50) au moyen de la couche de colle (53, 54, 55) de telle façon qu'au moins une zone partielle de la structure de gaufrage revêtue et une zone partielle de la couche de colle (53, 54, 55) entrent en contact l'une avec l'autre, cependant que, dans la zone de contact (70), la couche de transfert (30, 31, 32) colle sur des surfaces de proéminence (25) avec la couche de colle (53, 54, 55) de la feuille acceptrice (50),
(d) transfert des éléments plans (33) de la couche de transfert (30, 31, 32) sur des surfaces de proéminence (25) de la structure de gaufrage de la feuille donneuse (20) dans la zone de contact sur la couche de colle (53, 54, 55) de la feuille acceptrice (50) par séparation de la feuille donneuse et de la feuille acceptrice, ce par quoi, à partir de la feuille acceptrice (50), le support de microstructure (45) ayant la microstructure (40) comportant les éléments plans de proéminence de couche de transfert (33) transférés est engendré.

2. Élément de sécurité selon la revendication 1, **caractérisé en ce qu'**une structuration supplémentaire, de préférence une structure d'hologramme et/ou une nanostructuration, est transposée dans la couche de colle de la feuille acceptrice.

3. Élément de sécurité selon la revendication 1 ou 2, **caractérisé en ce que** la microstructure est revêtue sur toute la surface ou sur une surface partielle avec au moins une encre d'impression et/ou au moins un matériau réfléchissant de revêtement, cependant que le matériau réfléchissant de revêtement est de préférence choisi parmi des métaux, des systèmes à changement des couleurs par basculement, des matériaux à indice de réfraction élevé, des pigments métalliques et des pigments à effets.

4. Élément de sécurité selon une des revendications de 1 à 3, **caractérisé en ce que** le support de microstructure comporte la microstructure dans une première zone partielle et une autre microstructure dans une deuxième zone partielle, cependant que la microstructure dans la deuxième zone partielle constitue une première zone de motif et l'autre microstructure dans la deuxième zone partielle constitue une deuxième zone de motif, cependant que la première zone de motif et la deuxième zone de motif se complètent, de préférence de façon à former un motif à combinaison, cependant que le support de microstructure peut être obtenu **en ce que**
- à l'étape (b), un deuxième matériau en feuille est utilisé, lequel comporte une face principale ayant une première zone partielle sans structure gaufrée et une deuxième zone partielle à structure gaufrée, de préférence une structure en dents de scie,
- à l'étape (al), une feuille donneuse ayant des surfaces de proéminence est réalisée dans une première zone partielle et, en option, ayant une surface de proéminence dans une deuxième zone partielle est réalisée, cependant que la deuxième zone partielle ou éventuellement la surface de proéminence dans la deuxième zone partielle correspond quant à sa taille et à sa forme à la superficie de la structure gaufrée de la deuxième zone partielle du deuxième matériau en feuille,
- à l'étape (c), la feuille donneuse et le deuxième matériau en feuille sont contrecollés de telle manière l'un avec l'autre que la structure gaufrée de la deuxième zone partielle du deuxième matériau en feuille entre en contact avec la deuxième zone partielle de la feuille donneuse, et la première zone partielle du deuxième matériau en feuille entre en contact avec la première zone partielle de la feuille donneuse, de telle sorte que
- à l'étape (d), le support de microstructure ayant la microstructure dans la première zone partielle et ayant l'autre microstructure dans la deuxième zone partielle est engendré.

5. Élément de sécurité selon une des revendications de 1 à 4, **caractérisé en ce qu'**il comporte un agencement micro-optique de représentation ayant au moins un micro-motif et un dispositif de représentation de micro-motif, cependant que le micro-motif est constitué par la microstructure.

6. Élément de sécurité selon une des revendications de 1 à 4, **caractérisé en ce qu'**il comporte un agencement micro-optique de représentation, cependant que, dans l'autre surface principale, du deuxième matériau en feuille, opposée à la surface principale, ou dans une couche gaufrable sur l'autre surface principale, du deuxième matériau en feuille, opposée à la surface principale, des éléments micro-focalisants sont gaufrés de telle manière que les éléments micro-focalisants constituent un dispositif micro-optique d'observation pour le support de microstructure, cependant que le dispositif micro-optique d'observation et le support de microstructure constituent l'agencement micro-optique de représentation.

7. Élément de sécurité selon une des revendications de 1 à 4, **caractérisé en ce qu'**il comporte un agencement micro-optique de représentation ayant au moins un micro-motif et un dispositif d'observation de micro-motif, cependant que le dispositif est constitué par la microstructure .

8. Élément de sécurité selon une des revendications de 5 à 7, **caractérisé en ce que** l'agencement micro-optique de représentation comporte au moins un micro-motif et un dispositif micro-optique d'observation de micro-motif des deux côtés du micro-motif.

9. Élément de sécurité selon une des revendications de 5 à 8, **caractérisé en ce que** l'agencement micro-optique de représentation est un agencement de grossissement par effet de Moiré, un agencement de grossissement de type Moiré ou un agencement de grossissement modulo.

10. Produit (1) de genre quelconque, en particulier article de marque ou objet de valeur tel que billet de banque, **caractérisé en ce qu'**il est équipé d'un élément de sécurité (5) selon une des revendications de 1 à 9.
